(19) Europäisches Patentamt
European Patent Office
Office européen des brevets

(11) Veröffentlichungsnummer: **0 212 264**
**B1**

(12) # EUROPÄISCHE PATENTSCHRIFT

(45) Veröffentlichungstag der Patentschrift: **31.05.89**

(51) Int. Cl.⁴: **C 09 B 62/04**, C 09 B 62/503, D 06 P 1/38

(21) Anmeldenummer: **86109805.1**

(22) Anmeldetag: **17.07.86**

(54) **Wasserlösliche farbige Verbindungen, Verfahren zu ihrer Herstellung und ihre Verwendung als Farbstoffe.**

(30) Priorität: **25.07.85 DE 3526551**

(43) Veröffentlichungstag der Anmeldung: **04.03.87 Patentblatt 87/10**

(45) Bekanntmachung des Hinweises auf die Patenterteilung: **31.05.89 Patentblatt 89/22**

(84) Benannte Vertragsstaaten: **CH DE FR GB IT LI**

(56) Entgegenhaltungen: **EP-A-0 014 432**
**EP-A-0 133 270**

(73) Patentinhaber: **HOECHST AKTIENGESELLSCHAFT, Postfach 80 03 20, D-6230 Frankfurt am Main 80 (DE)**

(72) Erfinder: **Springer, Hartmut, Dr., Am Erdbeerstein 27, D-6240 Königstein/Taunus (DE)**
Erfinder: **Segal, Marcos, Dr., Berliner Strasse 10, D-6238 Hofheim am Taunus (DE)**
Erfinder: **Kühn, Manfred, Dr., Inheidenerstrasse 7, D-6000 Frankfurt am Main 60 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 212 264 B1

LIBER, STOCKHOLM 1989

**Beschreibung**

Die Erfindung liegt auf dem technischen Gebiet der faserreaktiven Farbstoffe.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolgedessen besteht weiterhin ein Bedarf nach neuen Reaktivfarbstoffen, die verbesserte Eigenschaften, insbesondere in Bezug auf die Echtheiten, aufweisen. So wurden zwar kürzlich mit der deutschen Offenlegungsschrift Nr. 3 327 641 neue faserreaktive Farbstoffe beschrieben, gleichwohl lag der vorliegenden Erfindung die Aufgabe zugrunde, neue, verbesserte Reaktivfarbstoffe zu finden, die Baumwolle in allen Farbtönen färben. Die neuen Farbstoffe sollten sich vor allem durch eine hohe Faser-Farbstoff-Bindungsstabilität auszeichnen und sollten besonders für das Färben nach dem Ausziehverfahren und für den Druck geeignet sein; desweiteren sollten sich die nicht auf der Faser fixierten Anteile leicht auswaschen lassen. Desweiteren mußten die mit den neben Farbstoffen erhältlichen Färbungen und Drucke gute Allgemeinechtheiten, beispielsweise gute Licht- und Naßechtheiten, besitzen.

Diese Erfordernisse erfüllen auch nicht Disazofarbstoffe, die aus einer gegebenenfalls nitro-substituierten Bis-(aminophenoxy)-methan-Verbindung als Tetrazokomponente und einer üblichen Kupplungskomponente aufgebaut sind und eine aus der europäischen Patentanmeldungs-Veröffentlichung Nr. 0 014 432 A2 ersichtliche Reaktivgruppierung besitzen, die aus einem Chlortriazinyl-amino-Rest und, an diesen Triazinrest gebunden, einem p-(β-Sulfatoethylsulfonyl)-phenyl-ethylamino-Rest besteht.

Mit der vorliegenden Erfindung wurde diese Aufgabe durch Auffindung der nachstehend definierten Verbindungen der allgemeinen Formel (1) gelöst.

Die Erfindung betrifft somit neue Verbindungen der allgemeinen Formel (1)

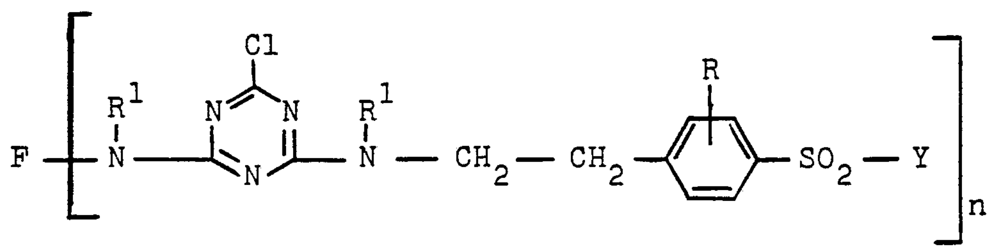
(1)

in welcher

F ein Rest eines Farbstoffes, bevorzugt eines wasserlöslichen sulfogruppenhaltigen Farbstoffes und bevorzugt aus der Azoreihe, hiervon insbesondere der Rest eines sulfogruppenhaltigen Monoazo- oder Disazofarbstoffes, ist,

n die Zahl 1 oder 2, bevorzugt 1, ist,

$R^1$ ein Wasserstoffatom oder eine Alkylgruppe von 1 bis 4 C-Atomen ist,

R ein Wasserstoffatom oder eine Sulfogruppe ist und

Y die Vinylgruppe oder eine Gruppe der allgemeinen Formel (2)

$$-CH_2-CH_2-X \quad (2)$$

ist, in welcher X für einen Substituenten steht, der als Anion, insbesondere mittels eines Alkalis, eliminierbar ist,

ausgenommen jedoch Verbindungen entsprechend einer allgemeinen Formel (A)

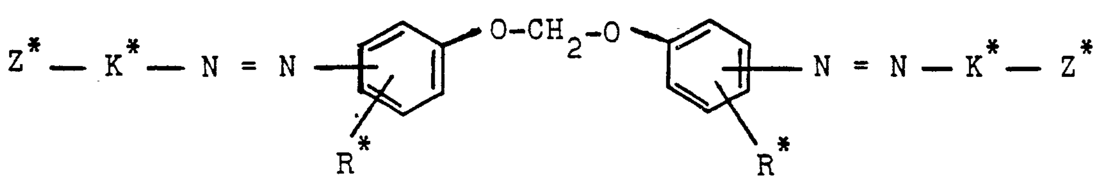
(A)

in welcher

R* ein Wasserstoffatom oder eine Nitrogruppe,

K* der Rest einer Kupplungskomponente und

Z* ein Rest der allgemeinen Formel (B)

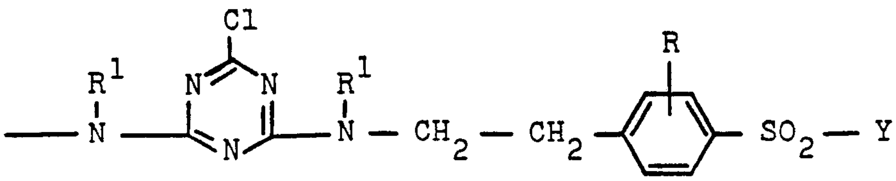

(B)

mit R¹, R und Y der obengenannten Bedeutung ist.

Bevorzugt sind Farbstoffe der allgemeinen Formel (1), die insgesamt 1 bis 6 Sulfogruppen besitzen. Die Farbstoffreste F können ferner weitere übliche faserreaktive Gruppen enthalten.

Farbstoffe mit dem Rest F bzw. die den Verbindungen der allgemeinen Formel (1) zugrunde liegenden Farbstoffe mit einer Aminogruppe $-NHR^1$ sind in der Literatur zahlreich beschrieben, so beispielsweise in den europäischen Patentanmeldungs-Veröffentlichungen Nrs. 0 070 806 A, 0 070 808 A und 0 076 782 A sowie in der deutschen Auslegeschrift Nr. 2 614 550, desweiteren in Venkataraman, The Chemistry of Synthetic Dyes, New York, London, 1972, Band VI, Seiten 213 - 297.

Besonders wertvolle Farbstoffe dieser Reihe sind wasserlösliche Azofarbstoffe, insbesondere solche, die Sulfo- und/oder Carboxygruppen aufweisen, insbesondere sulfogruppenhaltige Mono- und Disazofarbstoffe.

Alkylgruppen $R^1$ sind beispielsweise die n-Butyl-, n-Propyl- und die Ethylgruppe, vorzugsweise die Methylgruppe. Bevorzugt ist $R^1$ ein Wasserstoffatom.

Der Formelrest R ist bevorzugt ein Wasserstoffatom.

Als Anion eliminierbare Substituenten X sind beispielsweise die folgenden zu nennen: Chlor, Sulfato, Thiosulfato, Phosphato, Acetyloxy oder Sulfobenzoyloxy; hiervon sind bevorzugt Sulfato und Phosphato, insbesondere Sulfato.

Sulfo-, Carboxy-, Sulfato-, Thiosulfato- und Phosphatogruppen sind Gruppen der allgemeinen Formel $-SO_3M$, $-COOM$, $-OSO_3M$, $-S-SO_3M$ bzw. $-OPO_3M_2$, in welchen M für ein Wasserstoffatom oder ein Alkalimetall, wie Natrium, Kalium oder Lithium, steht.

Wichtige Azofarbstoffe entsprechend der allgemeinen Formel (1) sind solche, in denen F einen Rest eines Farbstoffes der Benzol-azo-naphthol-, der Benzol-azo-1-phenyl-5-pyrazolon-, der Benzol-azo-benzol-, der Naphthalin-azo-benzol-, der Benzol-azo-aminonaphthalin-, der Naphthalin-azo-naphthalin-, der Naphthalin-azo-1-phenyl-5-pyrazolon-, der Benzol-azo-pyridon- und der Naphthalin-azo-pyridon-Reihe bedeutet, wobei auch hier die sulfogruppenhaltigen Farbstoffe bevorzugt sind.

Die vorliegende Erfindung betrifft somit insbesondere wasserlösliche, sulfogruppenhaltige Azofarbstoffe, die die faserreaktive Gruppe Z der allgemeinen Formel (3)

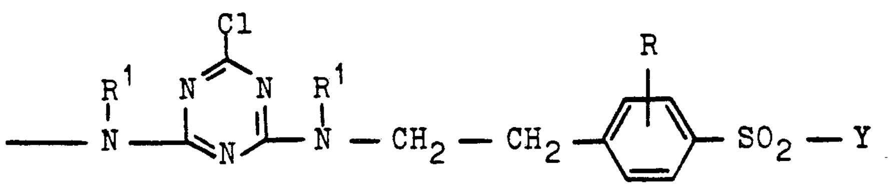

(3)

in welcher R¹, R und Y die obengenannten Bedeutungen haben, einmal oder zweimal enthalten.

Solche Azofarbstoffe der allgemeinen Formel (1) sind insbesondere Farbstoffe der allgemeinen Formel (4)

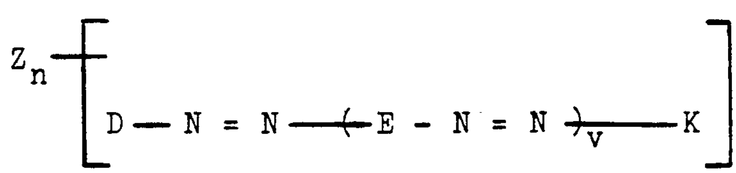

(4)

in welcher

D für den Rest einer Diazokomponente,

E den bivalenten Rest einer kupplungsfähigen und diazotierbaren Verbindung,

K den Rest einer Kupplungskomponente und

v für die Zahl Null oder 1 steht sowie Z einen Rest der allgemeinen Formel (3) bedeutet und

n die Zahl 1 oder 2, bevorzugt 1, ist und

der Rest Z an den Rest D oder den Rest K oder im Falle von n = 2 jeweils an D und K gebunden ist.

Aromatische Reste der Diazokomponenten $D-NH_2$ der Anilin- und Aminonaphthalinreihe, die keine faserreaktive Gruppe tragen, sind beispielsweise Amine der allgemeinen Formeln (5a) oder (5b)

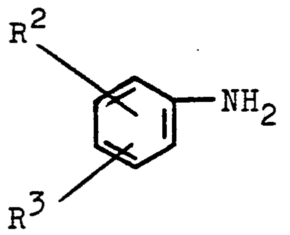

(5a)

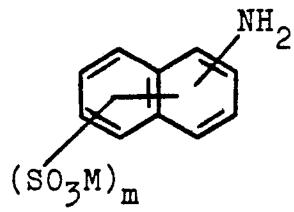

(5b)

in welchen

$R^2$ Wasserstoff, Methyl, Ethyl, Methoxy, Ethoxy, Alkanoyl von 2 bis 5 C-Atomen, wie Acetyl und Propionyl, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, hiervon insbesondere Acetylamino, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

m die Zahl Null, 1, 2 oder 3 bedeutet (wobei diese Gruppe im Falle von m gleich Null ein Wasserstoffatom bedeutet) und

M die obengenannte Bedeutung hat.

Bevorzugt ist hiervon $R^2$ gleich Wasserstoff, Methyl, Methoxy, Brom, Chlor, Carboxy und Sulfo sowie $R^3$ gleich Wasserstoff, Methyl, Methoxy, Chlor, Carboxy, Sulfo und Acetylamino.

Aromatische Amine der allgemeinen Formel D-$NH_2$, wie den Formeln (5a) und (5b), sind beispielsweise:

Anilin, 2-Methoxy-anilin, 2-Ethoxy-anilin, 2-Methyl-anilin, 4-Nitro-2-amino-anisol, 4-Chlor-2-amino-anisol, 4-Methyl-anilin, 4-Methoxy-anilin, 2-Nitro-4-amino-anisol, 2-Methoxy-5-methyl-anilin, 4-Nitro-anilin, 2-Nitro-4-methyl-anilin, 2,5-Dimethoxyanilin, 2,5-Dimethyl-anilin, 2,4-Dimethyl-anilin, 4-Butyl-anilin, 2,5-Diethoxy-anilin, 4-Cyano-anilin, 2-Chloranilin, 3-Chloranilin, 4-Chloranilin, 4-Chlor-2-methyl-anilin, 3-Chlor-2-methyl-anilin, 4-Chlor-2-aminotoluol, 4-(p-Tolyl-sulfonyl)-anilin, 1-Naphthylamin, 2-Naphthylamin, 4-Benzoylamino-2-ethoxy-anilin, 3-Amino-4-methyl-benzonitril, 4-Methylsulfonyl-anilin, 2-Trifluormethyl-anilin, 3-Trifluormethyl-4-chloranilin, 2-Amino- oder, 4-Amino-benzoesäure, 3-Amino-benzoesäure, 3-Chlor-anilin-6-carbonsäure, Anilin-2- oder -3- oder -4-sulfonsäure, 2,5-Disulfo-anilin, 2,4-Disulfo-anilin, 3,5-Disulfo-anilin, 2-Aminotoluol-4-sulfonsäure, 2-Amino-anisol-4-sulfonsäure, 2-Amino-anisol-5-sulfonsäure, 2-Ethoxy-anilin-5-sulfonsäure, 2-Ethoxy-anilin-4-sulfonsäure, 4-Sulfo-2-aminobenzoesäure, 2,5-Dimethoxy-anilin-4-sulfonsäure, 2,4-Dimethoxyanilin-5-sulfonsäure, 2-Methoxy-5-methyl-anilin-4-sulfonsäure, 4-Amino-anisol-3-sulfonsäure, 4-Amino-toluol-3-sulfonsäure, 2-Amino-toluol-5-sulfonsäure, 2-Chlor-anilin-4-sulfonsäure, 2-Chlor-anilin-5-sulfonsäure, 2-Bromanilin-4-sulfonsäure, 2,6-Dichlor-anilin-4-sulfonsäure, 2,6-Dimethyl-anilin-3-sulfonsäure oder -4-sulfonsäure, 3-Acetylamino-6-sulfo-anilin, 4-Acetylamino-2-sulfo-anilin, 1-Aminonaphthalin-4-sulfonsäure, 1-Aminonaphthalin-3-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Aminonaphthalin-3,6,8-trisulfonsäure, 1-Aminonaphthalin-4,6,8-trisulfonsäure, 2-Naphthylamin-5-sulfonsäure oder -6- oder -8-sulfonsäure, 2-Aminonaphthalin-3,6,8-trisulfonsäure, 2-Aminonaphthalin-6,8-disulfonsäure, 2-Aminonaphthalin-1,6-disulfonsäure, 2-Aminonaphthalin-1-sulfonsäure, 2-Aminonaphthalin-1,5-disulfonsäure, 2-Aminonaphthalin-3,6-disulfonsäure, 2-Aminonaphthalin-4,8-disulfonsäure.

Aromatische Amine der Diazokomponente Z-D-$NH_2$ der Anilinreihe mit dem faserreaktiven Rest Z gehen von aromatischen Aminen der allgemeinen Formel (6)

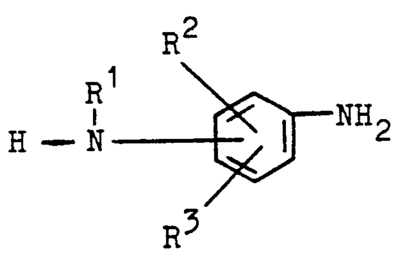

(6)

aus, in welcher $R^1$, $R^2$ und $R^3$ die oben angegebenen Bedeutungen haben, $R^2$ und $R^3$ jedoch die oben für $R^2$ bzw. $R^3$ bevorzugten Bedeutungen besitzen.

Amine der allgemeinen Formel (6) sind beispielsweise:

1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxy-benzol, 1,3-Diamino-4-methyl-benzol, 1,4-Diaminobenzol-2,6-disulfonsäure, 1,5-Diamino-4-methylbenzol-2-sulfonsäure, 1,5-Diamino-4-methoxybenzol-2-sulfonsäure, 1,3-Diaminobenzol-5-sulfonsäure, 1,3-Diamino-5-methylbenzol.

Aromatische Reste E einer kupplungsfähigen und diazotierbaren Verbindung der Anilin- und Aminonaphthalinreihe leiten sich beispielsweise von Aminen der allgemeinen Formeln (7a) und (7b)

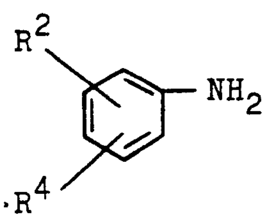
(7a)

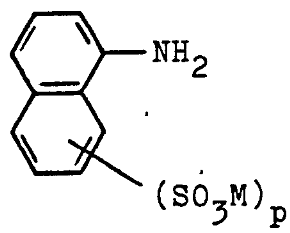
(7b)

ab, in welchen

$R^2$ und M die oben angegebenen Bedeutungen haben,

$R^4$ ein Wasserstoffatom, eine Alkylgruppe von 1 bis 4 C-Atomen, wie die Methyl- oder Ethylgruppe, eine Alkoxygruppe von 1 bis 4 C-Atomen, wie die Methoxy- und Ethoxygruppe, ein Chloratom, eine Alkanoylaminogruppe von 2 bis 5 C-Atomen, wie die Acetylamino- und Propionylaminogruppe, die Benzoylaminogruppe, die Ureidogruppe, eine Phenylureidogruppe, eine Alkylureidogruppe mit 1 bis 4 C-Atomen im Alkylrest, eine Phenylsulfonylgruppe oder eine Alkylsulfonylgruppe von 1 bis 4 C-Atomen ist und

p für die Zahl Null, 1 oder 2 steht (wobei diese Gruppe im Falle von p gleich Null ein Wasserstoffatom bedeutet).

Solche Verbindungen sind beispielsweise:

Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methylanilin, 2-Amino-4-acetyl-aminobenzol-1-sulfonsäure, 1-Aminonaphthalin, 1-Aminonaphthalin-6- oder -7- oder -8-sulfonsäure, 3-Acetylaminoanilin, 2-Methylanilin, 2-Methoxyanilin, 3-Benzoylamino-anilin, 2,3-Dimethylanilin, 3,5-Dimethylanilin, 1-Amino-2-methoxy-5-acetylaminobenzol.

Die Reste K der Kupplungskomponente entstammen vorzugsweise der Anilin-, Naphthalin-, Pyrazol- und Acylacetarylid-Reihe; sie können faserreaktive Gruppen besitzen.

Kupplungskomponenten der Formel H-K der Anilin- und Naphthalinreihe sind beispielsweise die Aniline, N-mono- und N,N-disubstituierte Aniline, m-Phenylendiamine und deren Derivate, Naphtholsulfonsäuren, Aminonaphthaline, Naphthole, Hydroxynaphtholsäurederivate, Aminonaphthalinsulfonsäuren oder Aminonaphtholsulfonsäuren.

Kupplungskomponenten der Formel H-K der Anilin- und Naphthalinreihe, die keine faserreaktive Gruppe tragen, sind beispielsweise Verbindungen der allgemeinen Formeln (8a), (8b) und (8c)

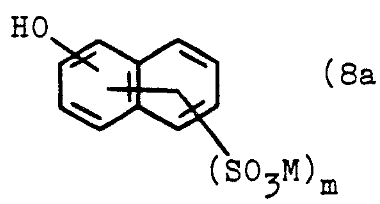
(8a)

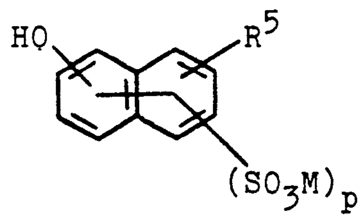
(8b)

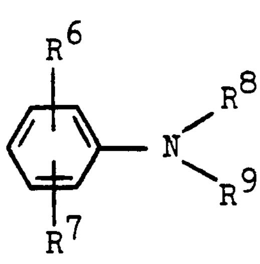
(8c)

in welchen

$R^5$ Alkylureido mit Alkylgruppen von 1 bis 6 C-Atomen, Phenylureido, im Phenylrest durch Chlor, Methyl, Methoxy, Nitro, Sulfo und/oder Carboxy substituiertes Phenylureido, Alkanoylamino von 2 bis 7 C-Atomen, wie beispielsweise Acetylamino und Propionylamino, Cyclohexanoylamino, Benzoylamino oder im Benzolrest durch Chlor, Methyl, Methoxy, Nitro, Sulfo und/oder Carboxy substituiertes Benzoylamino bedeutet,

$R^6$ Wasserstoff, Alkyl von 1 bis 4 C-Atomen, wie Methyl und Ethyl, Alkoxy von 1 bis 4 C-Atomen, wie Methoxy und Ethoxy, Brom, Chlor oder Alkanoylamino von 2 bis 7 C-Atomen, wie Acetylamino und Propionylamino, ist,

$R^7$ Wasserstoff, Alkyl von 1 bis 4 C-Atomen, wie Methyl und Ethyl, Alkoxy von 1 bis 4 C-Atomen, wie Methoxy und Ethoxy, Chlor oder Alkanoylamino von 2 bis 7 C-Atomen, wie Acetylamino und Propionylamino, eine Ureido- oder Phenylureidogruppe ist,

$R^8$ Wasserstoff oder Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, ist,

$R^9$ für Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, steht oder Benzyl oder Phenyl oder durch Alkyl von 1 bis 4 C-Atomen, Alkoxy von 1 bis 4 C-Atomen, Chlor und/oder Sulfo substituiertes Phenyl ist.

Verbindungen der allgemeinen Formeln (8) sind beispielsweise:

1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-trisulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure, 1-Benzoylamino-8-hydroxynaphthalin-4,6-disulfonsäure, 1-Acetylamino-5-hydroxynaphthalin-7-sulfonsäure, 2-Methylamino-8-hydroxynaphthalin-6-sulfonsäure oder 2-(3'- und 4'-Sulfophenyl)-amino-8-hydroxynaphthalin-6-sulfonsäure, N,N-Di-(sulfoethyl)-anilin und dessen im Benzolkern durch Methyl, Methoxy und/oder Ethoxy mono- oder disubstituierten Derivate, N-Ethyl-N-sulfoethyl-anilin, N-Sulfoethyl-anilin, N-(β-Carboxyethyl)-anilin und deren im Benzolkern durch Methyl, Methoxy und/oder Ethoxy mono- oder disubstituierten Derivate.

Von besonderer Bedeutung sind sulfogruppenhaltige, gegebenenfalls Azogruppen, wie 1 oder 2 Azogruppen, tragende Kupplungskomponenten, die in o- oder p-Stellung zu einer Hydroxy- und/oder Aminogruppe kuppeln, wie beispielsweise 2-Acetylamino-5-hydroxy-naphthalin-7-sulfonsäure, 2-Acetylamino-8-hydroxynaphthalin-6-sulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure oder 1-Benzoylamino-8-hydroxynaphthalin-4,6-disulfonsäure.

Als Kupplungskomponenten H-K sind weiterhin besonders zu nennen: 1-Amino-8-hydroxynaphthalin-3,6- und 4,6-disulfonsäure sowie deren durch saure Kupplung erhaltene Arylazokupplungsprodukte der Formel (9a)

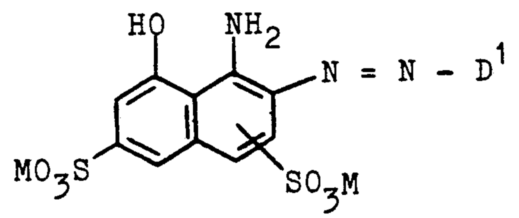

(9a)

in welcher

$D^1$ der Rest einer Diazokomponente, beispielsweise ein Rest der Formel (10a) oder (10b)

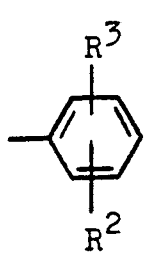

(10a)

oder

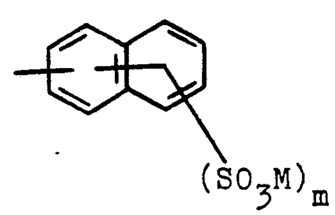

(10b)

sein kann, worin $R^2$, $R^3$, M und m die oben angegebene Bedeutungen haben.

Einzelne Reste $D^1$ leiten sich beispielsweise von folgenden Aminen ab:

Anilin, Anilin-2-, -3- und -4-sulfonsäure, Anilin-2,4-, -2,5- und -3,5-disulfonsäure, 2-Naphthylamin-1,5- und -4,8-disulfonsäure, 2-Naphthylamin-3,6,8- und -4,6,8-trisulfonsäure, 1-Naphthylamin-3,6,8- und -4,6,8-trisulfonsäure, 1-Naphthylamin-4-sulfonsäure, 2-Naphthylamin-1-sulfonsäure, 3- und 4-Aminoacetanilid, 4- und 5-Acetamido-2-sulfoanilin, 4-Nitroanilin, 4-Nitroanilin-2-sulfonsäure und 2-Amino-6-acetamino-naphthalin-4,8-disulfonsäure.

Weitere faserreaktivgruppenfreie Kupplungskomponenten H-K sind bspw. solche der allgemeinen Formeln (11a), (11b), (11c) und (11d)

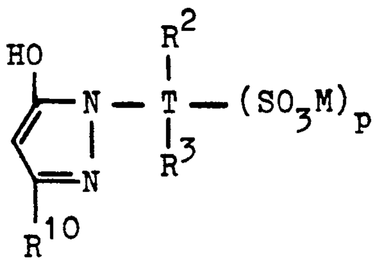

(11a)

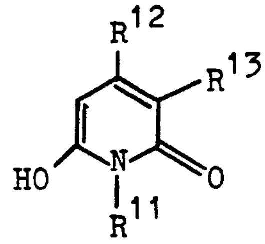

(11b)

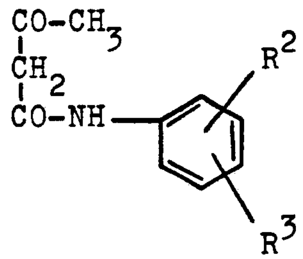

(11c)

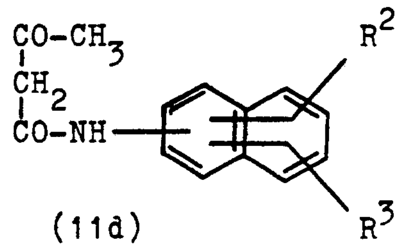

(11d)

in welchen

- T für einen Benzol- oder Naphthalinkern steht,
- $R^{10}$ Methyl, Carboxy, Methoxycarbonyl oder Ethoxycarbonyl oder ein Phenylrest ist,
- $R^{11}$ für ein Wasserstoffatom, eine $C_1$- bis $C_4$-Alkylgruppe, die durch Phenyl oder Sulfophenyl substituiert sein kann, eine durch Hydroxy, Amino, Methoxy, Ethoxy, Carboxy, Sulfo, Acetylamino, Benzoylamino oder Cyan substituierte $C_1$- bis $C_4$-Alkylgruppe, eine Cyclohexylgruppe, die Phenylgruppe oder eine durch Carboxy, Sulfo, Benzoylamino, Acetylamino, Methyl, Methoxy, Cyan oder Chlor substituierte Phenylgruppe ist,
- $R^{12}$ $C_1$- bis $C_4$-Alkyl oder Phenyl ist,
- $R^{13}$ Wasserstoff, Chlor oder Brom oder Sulfo, Carbamoyl, Methylsulfonyl, Phenylsulfonyl, Cyan oder Sulfomethylen bedeutet und $R^2$, $R^3$, M und m die oben angegebenen Bedeutungen haben.

Pyrazolon-Kupplungskomponenten sind beispielsweise 3-Methyl-, 3-Carboxy- und 3-Alkoxycarbonyl-5-pyrazolone, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Sulfo, Benzoyl, Acetyl, Acetylamino, Nitro, Hydroxy, Carboxy, Carbamoyl oder Sulfamoyl substituiertes Phenyl oder sulfosubstituiertes 1- oder 2-Naphthyl tragen, beispielsweise:

1-Phenyl-, 1-(2'-Chlorphenyl)-, 1-(2'-Methoxyphenyl)-, 1-(2'-Methylphenyl)-, 1-(2',5'-Dichlorphenyl)-, 1-(2',6'-Dichlorphenyl)-, 1-(2'-Methyl-6'-chlorphenyl)-, 1-(2'-Methoxy-5'-methylphenyl)-, 1-(2'-Chlor-5'-sulfophenyl)-, 1-(2'-Methoxy-5'-sulfophenyl)-, 1-(2'-Methyl-4'-sulfophenyl)-, 1-(2',5'-Dichlor-4'-sulfophenyl)-, 1-(2',5'-Disulfophenyl)-, 1-(2'-Carboxyphenyl)-, 1-(3'-Sulfophenyl)-, 1-(4'-Sulfophenyl)-, 1-(3'-Sulfamoylphenyl)-3-carboxy-5-pyrazolon, 1-(3'- oder 4'-Sulfophenyl)-, 1-(2'-Chlorphenyl)-, 1-(2'-Chlor-4'- oder -5'-sulfophenyl)-, 1-(2'-Methyl-4'-sulfophenyl)-, 1-(2',5'-Dichlorphenyl)-, 1-(4',8'-Disulfo-8-naphthyl)-, 1-(6'-Sulfo-1-naphthyl)-3-methyl-5-pyrazolon, 1-Phenyl-5-pyrazolon-3-carbonsäureethylester, 5-Pyrazolon-3-carbonsäureethylester oder 5-Pyrazolon-3-carbonsäure.

Andere aus der Pyrazolreihe stammende Kupplungskomponenten sind beispielsweise 1-Methyl-, 1-Ethyl-, 1-Propyl-, 1-Butyl-, 1-Cyclohexyl-, 1-Benzyl- oder 1-Phenyl-5-aminopyrazol, 1-(4'-Chlorphenyl)-, 1-(4'-Methylphenyl)-5-aminopyrazol oder 1-Phenyl-3-methyl-5-aminopyrazol.

Pyridonkupplungskomponenten sind beispielsweise:

1-Ethyl-2-hydroxy-4-methyl-5-carbonamido-pyridon-6, 1-(2'-Hydroxyethyl)-2-hydroxy-4-methyl-5-carbonamido-pyridon-6, 1-Phenyl-2-hydroxy-4-methyl-5-carbonamido-pyridon-6, 1-Ethyl-2-hydroxy-4-methyl-5-cyano-pyridon-6, 1-Ethyl-2-hydroxy-4-sulfomethyl-5-carbonamido-pyridon-6, 1-Ethyl-2-hydroxy-4-methyl-5-sulfomethyl-pyridon-6, 1-Methyl-2-hydroxy-4-methyl-5-cyano-pyridon-6, 1-Methyl-2-hydroxy-5-acetyl-pyridon-6, 1,4-Dimethyl-2-hydroxy-5-cyanpyridon-6, 1,4-Dimethyl-2-hydroxy-5-carbonamido-pyridon-6, 2,6-Dihydroxy-4-ethyl-5-cyano-pyridin, 2,6-Dihydroxy-4-ethyl-5-carbonamido-pyridin, 1-Ethyl-2-hydroxy-4-methyl-5-sulfomethyl-pyridon-6, 1-Methyl-2-hydroxy-4-methyl-5-methylsulfonyl-pyridon-6 oder 1-Carboxymethyl-2-hydroxy-4-ethyl-5-phenylsulfonyl-pyridon-6.

Faserreaktivgruppenhaltige Kupplungskomponenten der Anilin- und Naphthalinreihe leiten sich

beispielsweise von Verbindungen der allgemeinen Formeln (11e) bis (11g)

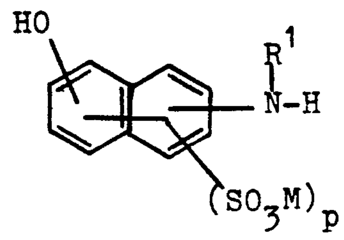
(11e)

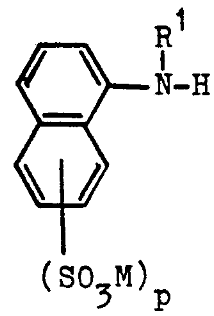
(11f)

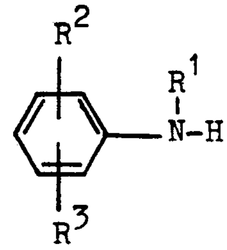
(11g)

in welchen $R^1$, $R^2$, $R^3$, M und p die obengenannten Bedeutungen haben.

Durch Umsetzung mit einem faserreaktiven Acylierungsmittel vor der Kupplung mit dem Diazoniumsalz, die Verbindungen der allgemeinen Formel (11e) betreffend, oder nach der Kupplung mit dem Diazoniumsalz, die Verbindungen der allgemeinen Formeln (11e) bis (11g) betreffend, kann ein faserreaktiver Rest eingeführt werden. Prinzipiell kommen hierfür alle bekannten faserreaktiven Acylierungsmittel in Betracht, wie insbesondere 2,4-Dichlor-6-(β-sulfatoethylsulfonyl-phenyl)-amino-s-triazin, 2,4-Dichlor-6-bis-[β-(β'-chlorethylsulfonyl)-ethyl]-amino-s-triazin und 3-(β-Chlorethylsulfonyl)-benzoylchlorid, insbesondere jedoch eine Dichlortriazinylamino-s-triazin-Verbindung der später genannten allgemeinen Formel (19).

Weitere Kupplungskomponenten H-K-Z sind die durch saure Kupplung erhältlichen Arylazo-Kupplungsprodukte der 1-Amino-8-hydroxy-naphthalin-3,6- und -4,6-disulfonsäure der allgemeinen Formel (9b)

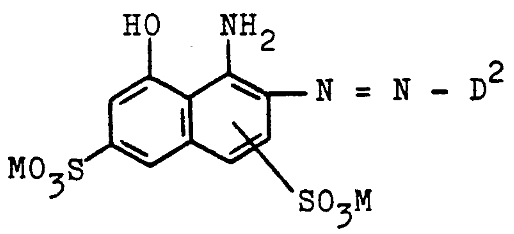
(9b)

in welcher $D^2$ der Rest einer Diazokomponente mit einer faserreaktiven Gruppe, insbesondere der Formel (3), ist. Der Formelrest $D^2$ ist beispielsweise ein Rest der Formel (12)

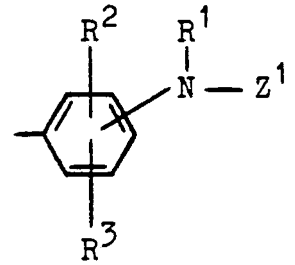
(12)

in welcher

$R^1$, $R^2$, $R^3$ und M die oben angegebenen Bedeutungen haben und

$Z^1$ ein Rest der allgemeinen Formel (3a)

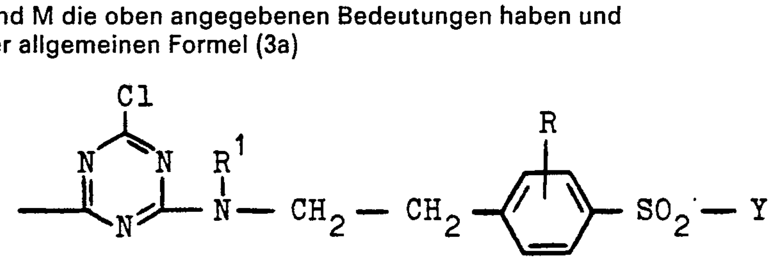
(3a)

mit $R^1$, R und Y der oben angegebenen Bedeutung ist.

Aromatische Diamine aus dem Rest der Formel (12) sind beispielsweise:

1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methyl-benzol, 1,4-Diamino-2-methoxy-benzol, 1,3-Diamino-4-methyl-benzol, 1,4-Diaminobenzol-2,6-disulfonsäure, 1,5-Diamino-4-methylbenzol-2-sulfonsäure, 1,5-Diamino-4-methoxybenzol-2-sulfonsäure, wobei in allen diesen Diaminoverbindungen die eine primäre oder sekundäre Aminogruppe durch den faserreaktiven Rest $Z^1$ substituiert ist.

Bevorzugte Reste $D^2$ der Formel (10) sind beispielsweise die Reste der Formeln (12a), (12b), (12c), (12d) und (12e) mit M der oben angegebenen Bedeutung:

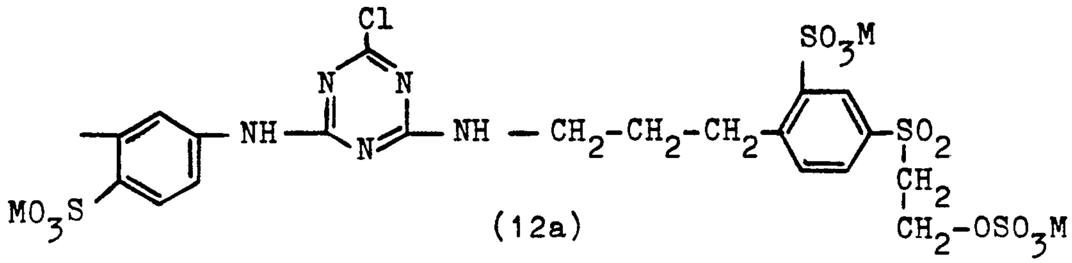

(12a)

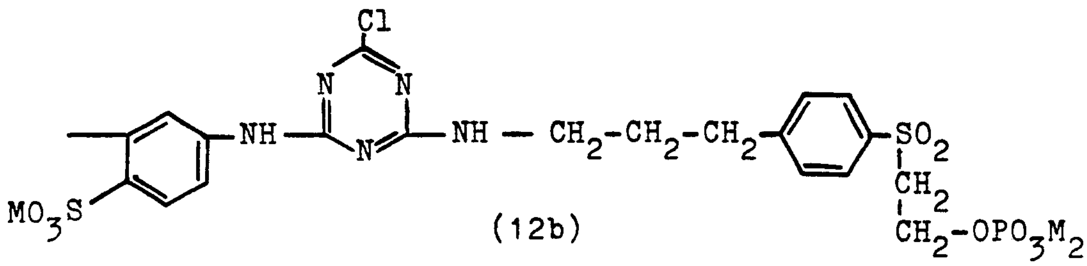

(12b)

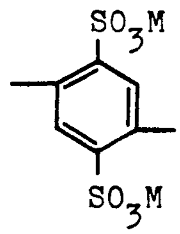

(12c)

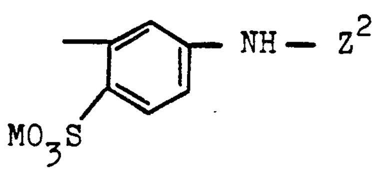

(12d)

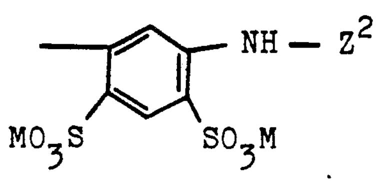

(12e)

in welchen $Z^2$ ein Rest der Formel (3b)

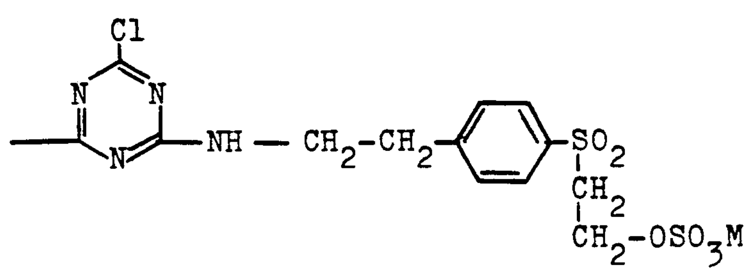

(3b)

mit M der obigen Bedeutung ist.

Faserreaktive Diazokomponentenreste $D^2$ sind auch solche, die eine andere faserreaktive Gruppe als die Gruppe Z enthalten. Solche Reste $D^2$ sind beispielsweise 3-(2,4-Dichlor-s-triazin-6-yl)-amino-4,6-disulfo-phenyl, 4-(2-m-Sulfophenylamino-4-chlor-s-triazin-6-yl)-amino-2-sulfo-phenyl, 4-β-Sulfatoethylsulfonyl-phenyl, 3-β-Sulfatoethylsulfonyl-phenyl und 4-Vinylsulfonyl-phenyl.

Kupplungskomponenten, die erfindungsgemäß die faserreaktive Gruppe der Formel (3a) enthalten, sind beispielsweise Verbindungen der allgemeinen Formel (13a), (13b) und (13c) bzw. deren $Z^1$-freien Vorprodukte:

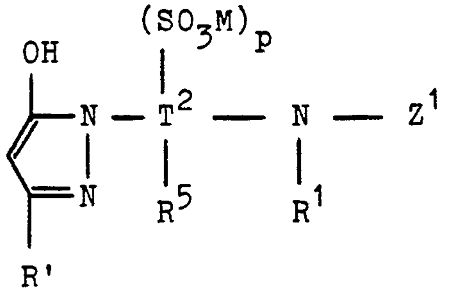

(13a)

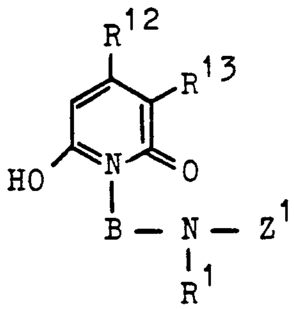

(13b)

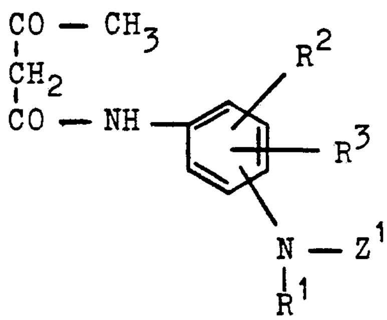

(13c)

in welchen

$R^1$, $R^2$, $R^3$ $R^{12}$, $R^{13}$, M, $Z^1$ und p die oben angegebenen Bedeutungen haben und
$T^2$ einen Benzol- oder Naphthalinring bedeutet,
R' eine Methyl- oder Carboxygruppe ist und
B Alkyl von 1 bis 4 C-Atomen, Benzyl oder Phenethyl oder Phenyl oder im Benzolrest durch Fluor, Chlor, Brom, Methyl, Methoxy, Cyano, Sulfo, Carboxy, Acetyl, Nitro, Carbamoyl und/oder Sulfamoyl substituiertes Benzyl, Phenethyl oder Phenyl ist.

Kupplungskomponenten, die den Verbindungen der allgemeinen Formeln (13a) bis (13c) entsprechen und die anstelle des Restes $Z^1$ ein Wasserstoffatom besitzen, in deren freie Aminogruppe jedoch nach beendeter Kupplung der Rest $Z^1$ eingeführt werden kann, sind beispielsweise:

1-(3'- oder 4'-Aminophenyl)-, 1-(2'-Sulfo-5'-aminophenyl)-und 1-(2'-Methoxy-5'-aminophenyl)-3-carboxy-5-pyrazolon, 1-(3'- oder 4'-Aminophenyl)- und 1-(3'- oder 4'-Nitrophenyl)-3-methyl-5-pyrazolon, 1-(3'- oder 4'-Nitrophenyl)-, 1-(6'-Nitro-4',8'-disulfonaphthyl-2')- und 1-(6'-Amino-4',8'-disulfonaphthyl-2')-3-carboxy-5-pyrazolon.

Bevorzugte faserreaktive Kupplungskomponenten entsprechend den Formeln (13a) und (13b) sind beispielsweise Verbindungen der Formeln (14a) bis (14h):

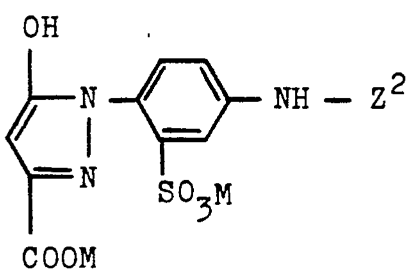

(14a)

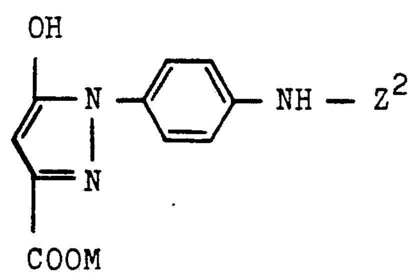

(14b)

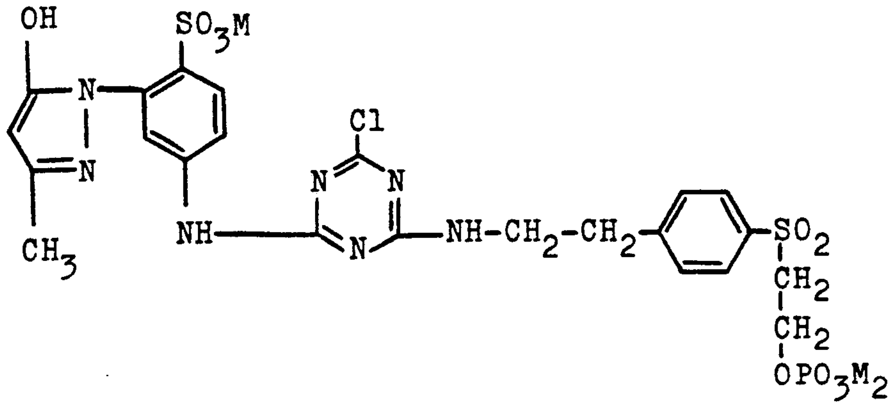

(14c)

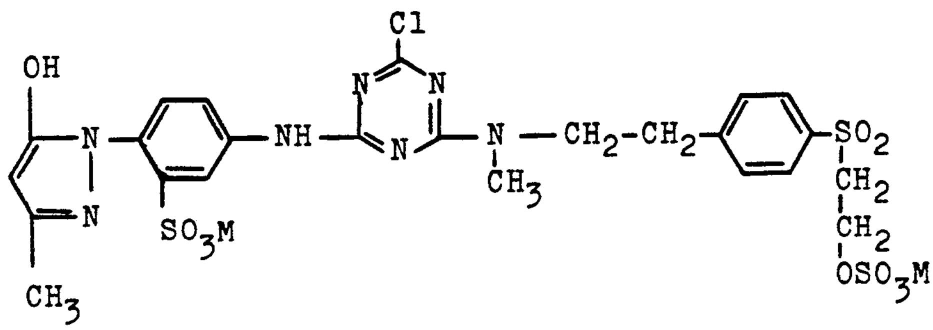

(14d)

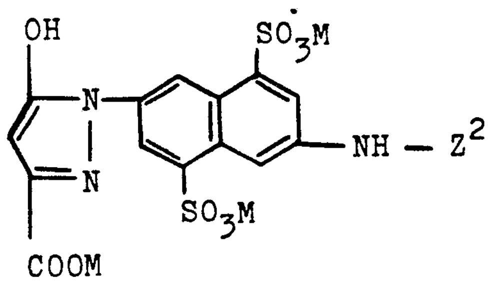

(14e)

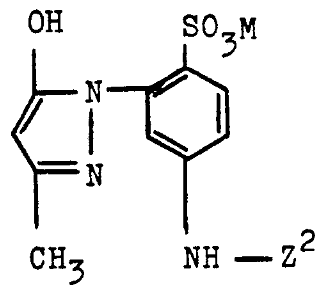

(14f)

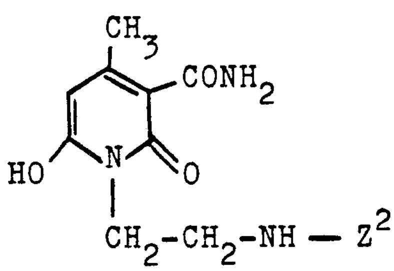

(14g)

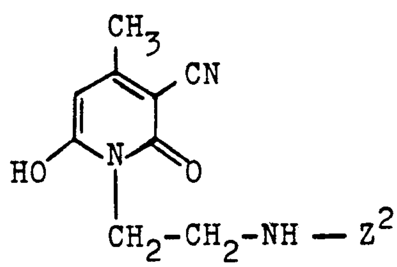

(14h)

in welchen M und $Z^2$ die obengenannten Bedeutungen haben.

Von den erfindungsgemäßen Verbindungen der allgemeinen Formel (1) sind von besonderer technischer Bedeutung die Mono- und Disazoverbindungen der allgemeinen Formel (15), (16a), (16b), (16c), (16d) und (16e):

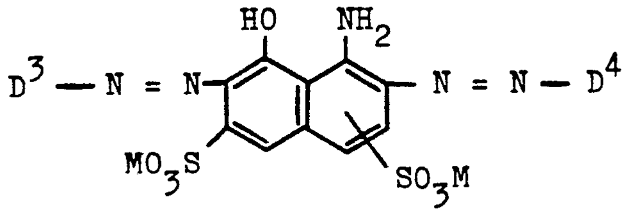

(15)

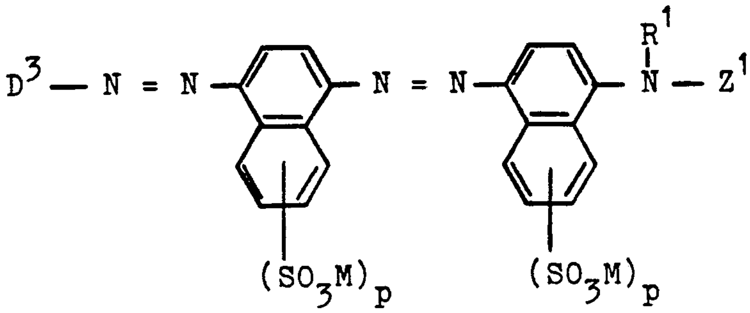

(16a)

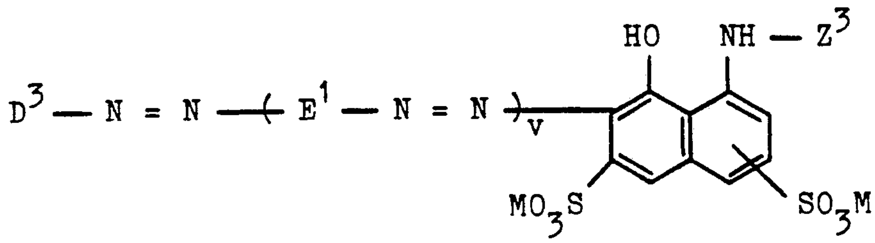

(16b)

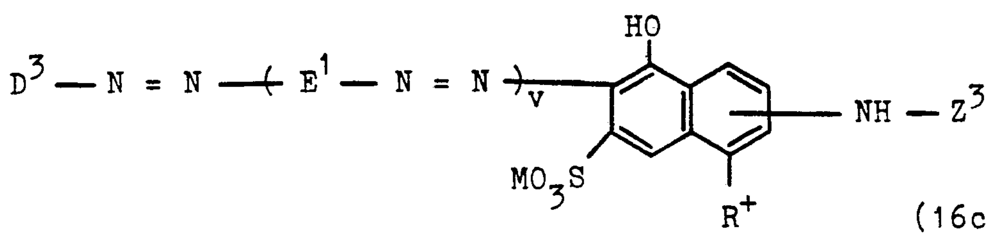

(16c)

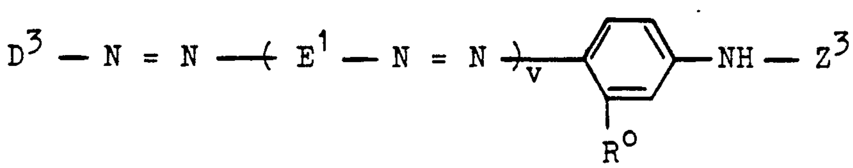

(16d)

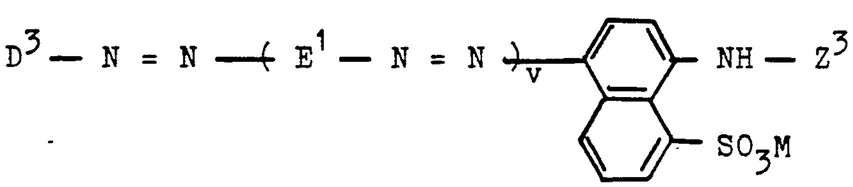

(16e)

In diesen Formeln bedeuten:

In Formel (15) haben $D^3$ und $D^4$ zueinander gleiche oder voneinander verschiedene Bedeutungen und jedes ist ein Rest einer Diazokomponente, von denen mindestens eine eine faserreaktive Gruppe der allgemeinen Formel (3), in welcher $R^1$ beide für ein Wasserstoffatom stehen und R ebenfalls ein Wasserstoffatom ist, bevorzugt eine faserreaktive Gruppe $Z^3$ der nachstehend definierten Formel (3c) gebunden enthält, $Z^1$ besitzt

die obengenannte Bedeutung oder ist bevorzugt eine Gruppe $Z^3$, und M hat die obengenannte Bedeutung; bevorzugt sind $D^3$ und $D^4$, zueinander gleich oder voneinander verschieden, jedes ein Rest $D^1$ oder $D^2$ entsprechend den obengenannten und definierten allgemeinen Formeln (10a) und (10b) bzw. (12), insbesondere bevorzugt ein Mono- oder Disulfophenyl- oder Mono-, Di- oder Trisulfonaphthyl-Rest bzw. ein Rest der Formel (12A)

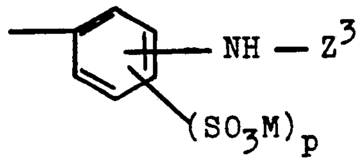

(12A)

mit p und M der obengenannten Bedeutung und $Z^3$ der nachstehend genannten Bedeutung;

in Formel (16a) haben $D^3$, p, $R^1$ und $Z^1$ die obengenannten Bedeutungen, wobei $R^1$ bevorzugt ein Wasserstoffatom ist und $D^3$ bevorzugt ein Rest $D^1$ der Formel (10a) oder (10b) ist, insbesondere bevorzugt ein Monosulfo- oder Disulfophenyl- oder ein Monosulfo-, Disulfo- oder Trisulfonaphthylrest ist;

in den Formeln (16b), (16c), (16d) und (16e) haben $D^3$, M und v die obengenannten Bedeutungen, wobei

$D^3$ bevorzugt ein Rest $D^1$ der Formel (10a) oder (10b) ist, insbesondere bevorzugt ein Monosulfo- oder Disulfophenyl- oder ein Monosulfo-, Disulfo- oder Trisulfonaphthylrest ist,

$E^1$ ist ein Rest der Formel (7A)

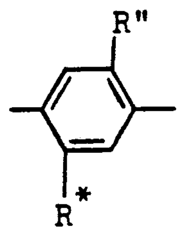

(7A)

in welcher R'' und R*, zueinander gleich oder voneinander verschieden, jedes ein Wasserstoffatom, die Methyl-, Methoxy- oder Ethoxygruppe bedeutet,

$Z^3$ ist ein Rest der allgemeinen Formel (3c)

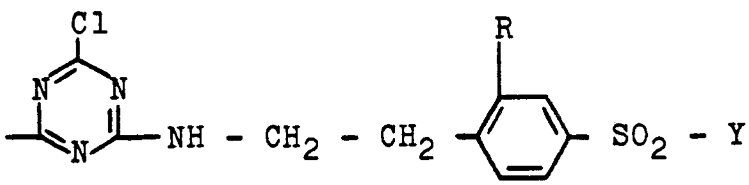

(3c)

mit Y der obengenannten Bedeutung und R gleich Sulfo oder bevorzugt Wasserstoff,

$R^o$ ist die Acetylamino- oder Ureidogruppe und

$R^+$ ist ein Wasserstoffatom oder eine Sulfogruppe.

Bevorzugt sind von den Verbindungen der allgemeinen Formeln (15) und (16) diejenigen, in welchen Y für den β-Phosphatoethyl-Rest und insbesondere für den β-Sulfatoethyl-Rest steht.

Von den Farbstoffen der allgemeinen Formel (16a) können diejenigen der Beispiele 67 und 73 hervorgehoben werden, von den Farbstoffen der allgemeinen Formel (16b) diejenigen der Beispiele 77, 90, 94, 126 und 127, von den Farbstoffen der allgemeinen Formel (16d) diejenigen der Beispiele 47, 48, 50 und 74 und von den Farbstoffen der allgemeinen Formel (16e) diejenigen der Beispiele 66, 70, 71 und 75. Ebenso sind die Farbstoffe der Beispiele 108 und 111 als von besonderem technischen Interesse erwähnenswert.

Die erfindungsgemäßen Farbstoffe lassen sich in üblicher Weise der Synthese von Farbstoffen herstellen, beispielsweise durch Umsetzung von für die entsprechende Farbstoffklasse dem Fachmann geläufigen Farbstoffvorprodukten mit den für diese Farbstoffklasse üblichen Synthesemethoden, wobei mindestens eine dieser Farbstoffvorprodukte eine faserreaktive Gruppe der allgemeinen Formel (3) enthält. So können beispielsweise Mono- und Disazofarbstoffe entsprechend der allgemeinen Formel (1) durch Umsetzung von deren Diazo- und Kupplungskomponenten in der hierfür üblichen Verfahrensweise der Diazotierung und Kupplung synthetisiert werden, wobei die Diazo- oder Kupplungskomponente oder beide (jeweils) eine faserreaktive Gruppe der allgemeinen Formel (3) enthalten. Im Falle der Synthese von Disazofarbstoffen kann bereits die Diazo- oder Kupplungskomponente die zweite Azogruppierung gebunden enthalten. Erfindungsgemäß einsetzbare Diazokomponenten sind die für faserreaktive Azofarbstoffe üblichen aromatischen carbocyclischen und heterocyclischen Aminoverbindungen, die gegebenenfalls die faserreaktive

Gruppe der allgemeinen Formel (3) enthalten, und die zur Synthese von faserreaktiven Azofarbstoffen üblichen Kupplungskomponenten, beispielsweise der Naphthol-, Anilin-, Naphthylamin-, Aminonaphthol-, Pyrazolon- und Pyridonreihe, wobei gegebenenfalls die Kupplungskomponente die faserreaktive Gruppe der allgemeinen Formel (3) enthält. Solche Diazo- und Kupplungskomponenten sind beispielsweise die anfangs beschriebenen Verbindungen entsprechend den allgemeinen Formeln (5), (6), (7), (8), (9), (10), (11) und (13) sowie (14).

Die Diazotierungs- und Kupplungsreaktionen erfolgen in üblicher Weise, so die Diazotierung in der Regel bei einer Temperatur zwischen -5°C und +15°C und einem pH-Wert unterhalb von 2 mittels einer starken Säure und Alkalinitrit in bevorzugt wäßrigem Medium und die Kupplungsreaktion in der Regel bei einem pH-Wert zwischen 1,5 und 4,5 im Falle der aminogruppenhaltigen Kupplungskomponente und bei einem pH-Wert zwischen 3 und 7,5 im Falle der hydroxygruppenhaltigen Kupplungskomponente und bei einer Temperatur zwischen 0 und 25°C, ebenso bevorzugt in wäßrigem Medium.

Die neuen Farbstoffe der allgemeinen Formel (1) können ebenfalls erfindungsgemäß in der Weise hergestellt werden, daß man Cyanurchlorid mit einer Aminoverbindung der allgemeinen Formel (17)

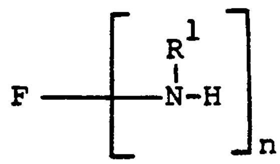

(17)

in welcher F, $R^1$ und n die obengenannten Bedeutungen haben, und einer Aminoverbindung der allgemeinen Formel (18)

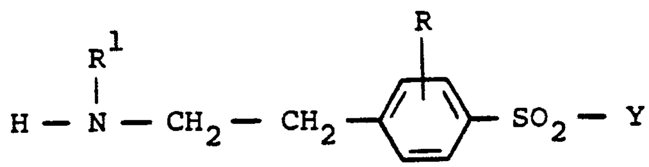

(18)

in welcher $R^1$, R und Y die obengenannten Bedeutungen haben, in beliebiger Folge umsetzt. So kann man zunächst eine Aminoverbindung der allgemeinen Formel (17) mit Cyanurchlorid zur Dichlortriazinylaminoverbindung der allgemeinen Formel (17a)

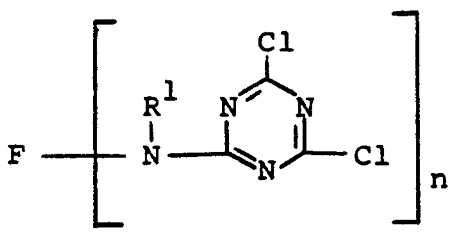

(17a)

mit F, $R^1$ und n der obengenannten Bedeutung umsetzen, und diese wird durch Reaktion mit einer Aminoverbindung der allgemeinen Formel (18) in äquivalenter Menge in den Endfarbstoff (1) übergeführt, oder man reagiert zunächst eine Aminoverbindung der allgemeinen Formel (18) mit Cyanurchlorid zur Dichlortriazinylaminoverbindung der allgemeinen Formel (19)

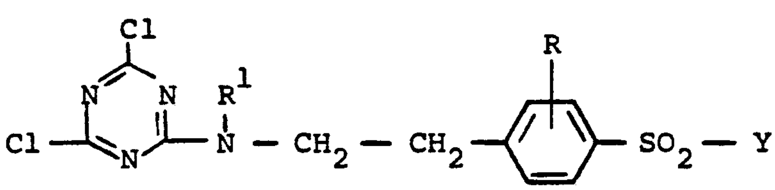

(19)

mit $R^1$, R und Y der obengenannten Bedeutung und setzt diese in äquivalenter Menge mit der Verbindung der allgemeinen Formel (17) zum Endfarbstoff (1) um. Die Kondensationsreaktionen zwischen Cyanurchlorid bzw. den Dichlortriazinylaminoverbindungen (17a) und (19) mit den Aminoverbindungen (17) und/oder (18) können in der üblichen Weise der Umsetzung von Cyanurchlorid bzw. Dichlortriazinylaminoverbindungen mit Aminoverbindungen erfolgen, so in organischem oder bevorzugt wäßrig-organischem Medium, insbesondere bevorzugt in wäßrigem Medium unter Zusatz säurebindender Mittel, wie Alkali- oder Erdalkalicarbonaten, Alkali- oder Erdalkalihydrogencarbonaten oder -hydroxiden oder Alkaliacetaten, wobei die Alkali- und Erdalkalimetalle vorzugsweise Natrium, Kalium oder Calcium sind. Säurebindende Mittel sind ebenso tertiäre Amine, wie beispielsweise Pyridin, Triethylamin oder Chinolin. Sofern diese Kondensationsreaktionen in

organischem oder wäßrig-organischem Medium erfolgen, ist das (anteilige) organische Lösemittel Aceton, Dioxan und Dimethylformamid.

Die Kondensationsreaktionen zwischen Cyanurchlorid und den Aminoverbindungen erfolgen in der Regel bei einer Temperatur zwischen -10°C und +40°C, vorzugsweise zwischen -10°C und +30°C, sowie bei einem pH-Wert zwischen 1,0 und 7,0, bevorzugt zwischen 3,5 und 5. Die Umsetzung der Dichlortriazinylaminoverbindungen der allgemeinen Formel (17a) oder (19) mit einer Aminoverbindung der allgemeinen Formel (17) bzw. (18) erfolgt beispielsweise bei einer Temperatur zwischen 10 und 60°C, bevorzugt zwischen 20 und 50°C, und bei einem pH-Wert zwischen 2 und 8, bevorzugt zwischen 3 und 7, wobei darauf zu achten ist, daß die faserreaktive Gruppierung im schwach alkalischen Bereich nicht geschädigt wird.

Die Ausgangsverbindung der allgemeinen Formel (18) kann beispielsweise durch Sulfochlorierung von N-Acetyl-β-phenylethylamin erhalten werden. Zur Überführung de Sulfochloridgruppe in die faserreaktive Gruppe der Vinylsulfonreihe wird in üblicher Weise sodann diese zur Sulfinsäure reduziert, welche wiederum beispielsweise mit Ethylenoxid oder einem β-Halogeno-ethanol zur β-Hydroxyethylsulfonyl-Verbindung umgesetzt wird, die sodann entacetyliert und gegebenenfalls verestert wird, so in die entsprechende β-Sulfatoethylsulfonyl- oder β-Phosphatoethylsulfonyl-Gruppe mittels den üblichen Sulfatierungs- und Phosphatierungsmitteln übergeführt wird. Solche Methoden sind an sich bekannt und können analog angewendet werden.

Die erfindungsgemäßen Verbindungen der allgemeinen Formel (1) eignen sich als faserreaktive Farbstoffe zum Färben und Bedrucken von hydroxygruppenhaltigen Fasern, insbesondere von Baumwolle, ebenso auch für synthetische oder natürliche Polyamidfasern wie Wolle. Als Färbeverfahren eignen sich die bekannten Färbe- und Druckverfahren für faserreaktive Farbstoffe, insbesondere solche für faserreaktive Farbstoffe, die eine Kombination aus den faserreaktiven Gruppen der Chlortriazin- und Vinylsulfonreihe besitzen. Insbesondere sind die erfindungsgemäßen Farbstoffe im Ausziehverfahren bei 40 bis 80°C und im Kaltverweilverfahren mit Vorteil anwendbar. Die Applikation ist in einem weiten Temperaturbereich möglich, und die Farbstoffe zeichnen sich durch eine hohe Farbtiefe und einen hohen Fixiergrad aus.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalisalze, in die Synthese eingesetzt werden.

Die für die erfindungsgemäßen Verbindungen angegebenen Absorptionsmaxima ($\lambda_{max}$) und Extinktionswerte E im sichtbaren Bereich wurden anhand derer Alkalimetallsalze in wäßriger Lösung ermittelt.

**Beispiel 1**

Zu 17,3 Teilen einer salzsauer diazotierten Anilin-4-sulfonsäure gibt man bei 5°C 31,6 Teile einer Suspension von 1-Amino-8-naphthol-3,6-disulfonsäure in 300 Teilen Wasser. Man kuppelt während 8 Stunden bei einem pH-Wert zwischen 1 und 2 und fügt anschließend 38,6 Teile einer Suspension eines salzsauer diazotierten primären Kondensationsproduktes aus Cyanurchlorid und 1,3-Phenylendiamin-4-sulfonsäure hinzu. Mit 17,8 Teilen Natriumcarbonat wird sodann schwach sauer ausgekuppelt, danach eine Lösung von 31 Teilen 4-(β-Sulfatoethylsulfonyl)-1-(β-aminoethyl)-benzol zugefügt, und die Kondensationsreaktion wird sodann bei 30 bis 40°C und einem pH-Wert von 7 bis 7,5 zu Ende geführt. Der Farbstoff wird aus neutraler Lösung durch Zugabe von Kaliumchlorid ausgefällt und anschließend getrocknet. Es wird ein schwarzes, elektrolythaltiges Pulver des Alkalimetallsalzes der Verbindung der Formel

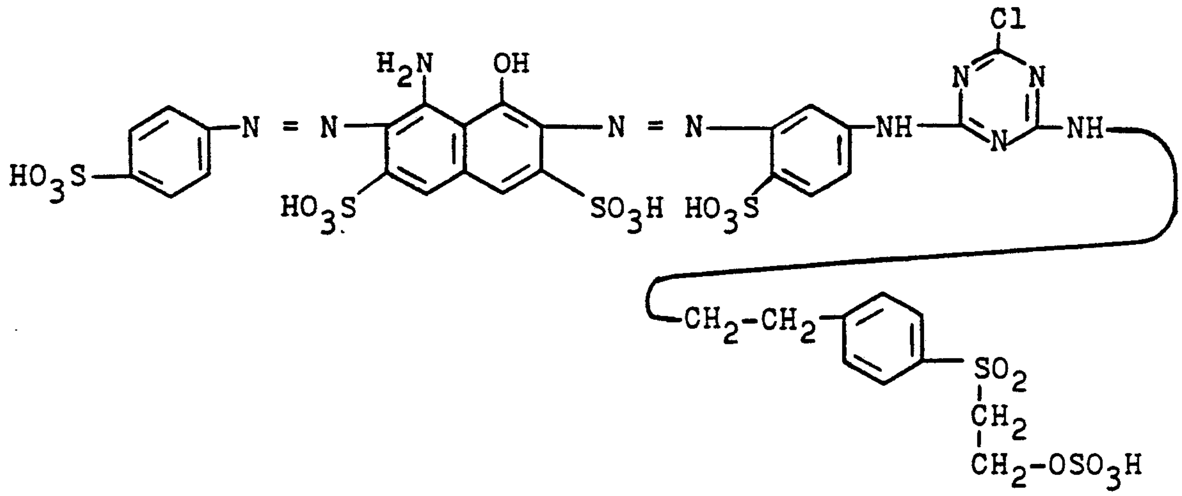

erhalten, das nach den üblichen Färbeverfahren für faserreaktive Farbstoffe Baumwolle in echten marineblauen Tönen färbt.

**Beispiele 2 bis 13**

Weitere erfindungsgemäße Farbstoffe entsprechend einer allgemeinen Formel (20)

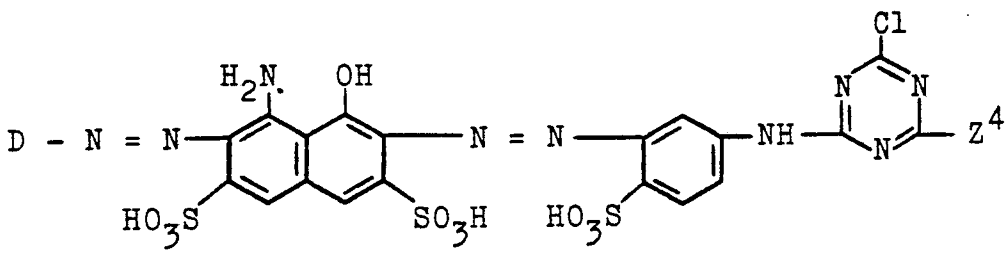

(20)

worin $Z^4$ den Rest der Aminoverbindung der Formel (18) bedeutet, sind in den nachfolgenden Tabellenbeispielen 2 bis 13 mit Hilfe der dort angegebenen Komponenten beschrieben. Sie lassen sich in erfindungsgemäßer Weise, beispielsweise analog dem Ausführungsbeispiel 1 unter Anwendung der sauer angekuppelten Diazokomponente $D\text{-}NH_2$, 1-Amino-8-naphthol-3,6-disulfonsäure als bivalenter Kupplungskomponente, der 1,3-Phenylendiamin-4-sulfonsäure, Cyanurchlorid und dem Amin der allgemeinen Formel (18) herstellen. Diese neuen Verbindungen entsprechend der allgemeinen Formel (1) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Diazokomponente $D\text{-}NH_2$ | $H\text{-}Z^4$ entspr. Amin (18) | Farbton |
|---|---|---|---|
| 2 | 2-Chlor-4-sulfo-anilin | 4-(β-Sulfatoethylsulfonyl)-1-(β-aminoethyl)-benzol | marineblau |
| 3 | 2-Chlor-4,6-disulfo-anilin | 4-(β-Methosulfatoethylsulfonyl)-2-sulfo-1-(β-aminoethyl)-benzol | rotstichig marineblau |
| 4 | 4-Chlor-2-sulfo-anilin | 4-(β-Phosphatoethylsulfonyl)-1-(β-aminoethyl)-benzol | rotstichig marineblau |
| 5 | 1,5-Disulfo-2-naphtylamin | 4-(β-Sulfatoethylsulfonyl)-2-sulfo-1-(β-aminoethyl)-benzol | grünstichig marineblau |
| 6 | 4-Ethylsulfonyl-anilin | 4-(β-Sulfatoethylsulfonyl)-1-(β-ethylamino)-benzol | rotstichig marineblau |
| 7 | 2-Methyl-4,6-disulfo-anilin | 4-(β-Methosulfatoethylsulfonyl)-2- | rotstichig |

| | | | |
|---|---|---|---|
| | | sulfo-1-(β-aminoethyl)-benzol | marineblau |
| 8 | 3,6,8-Trisulfo-2-naphtylamin | 4-(β-Sulfatoethylsulfonyl)-1-(β-aminoethyl)-benzol | grünstichig marineblau |
| 9 | 4-(β-Sulfatoethylsulfonyl)-anilin | dito | rotstichig marineblau ($\lambda_{max}$ = 605 nm; E = 45270) |
| 10 | 2-Sulfo-anilin | dito | rotstichig marineblau |
| 11 | 3-[2'-Chlor-4'-(3''-sulfophenylamino)-s-triazin-6'-yl]-amino-6-sulfo-anilin | 4-(β-Sulfatoethylsulfonyl)-2-sulfo-1-(β-aminoethyl)-benzol | rotstichig marineblau |
| 12 | 3-[2'-Chlor-4'-(4''-β-sulfato-ethylsulfonyl-phenylamino)-s-triazin-6'-yl]-amino-6-sulfo-anilin | 4-(β-Sulfatoethylsulfonyl)-1-(β-aminoethyl)-benzol | rotstichig marineblau |
| 13 | Anilin | dito | rotstichig marineblau |

**Beispiel 14**

60,9 Teile des sekundären Kondensationsproduktes aus 1,3-Phenylendiamin-4-sulfonsäure, Cyanurchlorid und 4-(β-Sulfatoethylsulfonyl)-1-(β-aminoethyl)-benzol werden in üblicher Weise in salzsaurer Lösung diazotiert, sodann zu einer Suspension von 30,8 Teilen 1-Amino-8-naphthol-3,6-disulfonsäure in 300 Teilen Wasser sauer gekuppelt. Die so hergestellte rote Monoazoverbindung wird anschließend mit 17,3 Teilen salzsauer diazotierter Anilin-4-sulfonsäure versetzt, der Ansatz neutral gestellt und die Kupplungsreaktion zum Disazofarbstoff im neutralen Bereich zu Ende geführt. Die erfindungsgemäße Verbindung wird durch Kaliumchlorid ausgefällt. Nach Trocknen erhält man ein schwarzes elektrolythaltiges Pulver mit dem Alkalimetallsalz der Verbindung der Formel

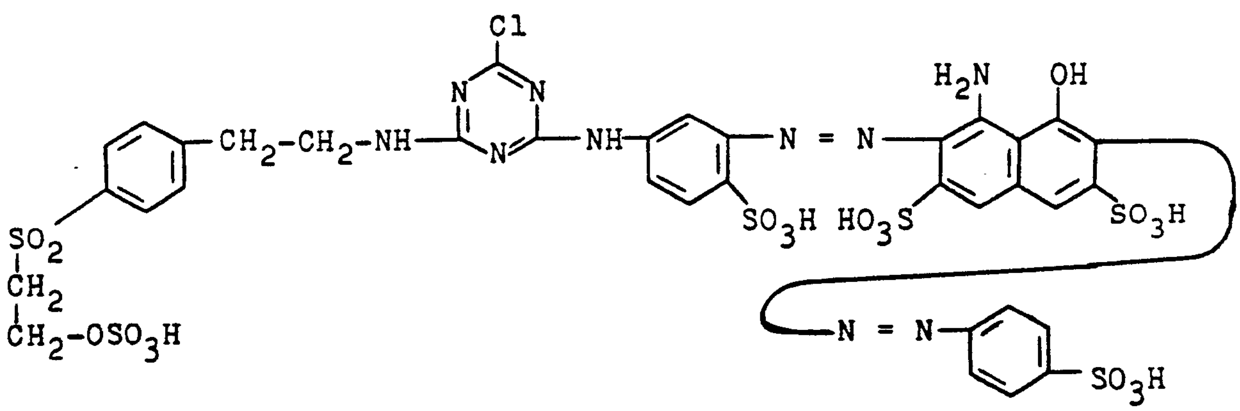

die nach den in der Anwendungstechnik für faserreaktive Farbstoffe üblichen Färbe- und Druckverfahren auf Baumwolle rotstichig marineblaue Färbungen mit guter Echtheit liefert.

**Beispiele 15 bis 23**

Weitere erfindungsgemäße Farbstoffe entsprechend einer allgemeinen Formel (21)

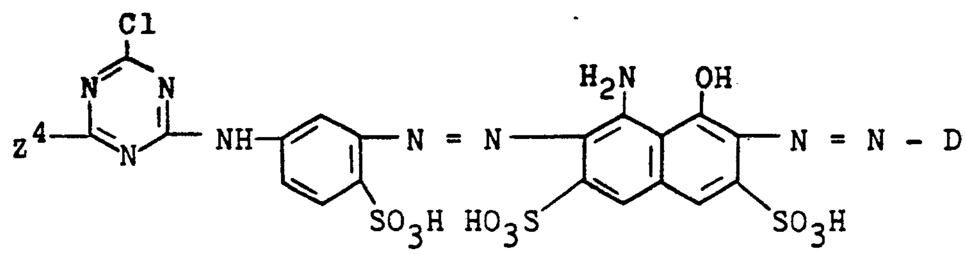

sind in den nachfolgenden Tabellenbeispielen 15 bis 23 mit Hilfe der dort angegebenen Komponenten beschrieben. Sie lassen sich in erfindungsgemäßer Weise, beispielsweise analog dem Ausführungsbeispiel 14 unter Anwendung der neutral angekuppelten Diazokomponente D-$NH_2$, 1-Amino-8-naphthol-3,6-disulfonsäure als bivalenter Kupplungskomponente und dem Kondensationsprodukt aus 1,3-Phenylendiamin-4-sulfonsäure, Cyanurchlorid und dem Amin der allgemeinen Formel (18) als sauer angekuppelter Diazokomponente, herstellen. Diese neuen Verbindungen entsprechend der allgemeinen Formel (1) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Diazokomponente D-$NH_2$ | H-$Z^4$ entspr. Amin (18) | Farbton |
|---|---|---|---|
| 15 | 1,5-Disulfo-2-naphthylamin | 4-(β-Phosphatoethylsulfonyl)-1-(β-aminoethyl)-benzol | rotstichig marineblau |
| 16 | 2-Chlor-4,6-disulfo-anilin | 4-(β-Sulfatoethylsulfonyl)-1-(β-aminoethyl)-benzol | rotstichig marineblau |
| 17 | 2-Chlor-4-sulfo-anilin | 4-(β-Methosulfatoethylsulfonyl)-2-sulfo-1-(β-aminoethyl)-benzol | rotstichig marineblau |
| 18 | 2-Methyl-4,6-disulfo-anilin | 4-(β-Sulfatoethylsulfonyl)-1-(β-aminoethyl)-benzol | rotstichig marineblau |
| 19 | 4-(β-Sulfatoethylsulfonyl)-anilin | dito | rotstichig marineblau |
| 20 | 2-Sulfo-anilin | dito | rotstichig marineblau |
| 21 | 3,6,8-Trisulfo-2-naphthylamin | 4-(β-Sulfatoethylsulfonyl)-2-sulfo-1-(β-aminoethyl)-benzol | rotstichig marineblau |
| 22 | Anilin | 4-(β-Sulfatoethylsulfonyl)-1-(β-aminoethyl)-benzol | rotstichig marineblau |
| 23 | 4-Sulfamoyl-anilin | dito | rotstichig marineblau |

**Beispiel 24**

Das Kondensationsprodukt aus 18,8 Teilen 1,3-Phenylendiamin-4-sulfonsäure und 19 Teilen Cyanurchlorid wird salzsauer diazotiert, mit 28,5 Teilen 1-(4'-Sulfophenyl)-3-carboxypyrazolon(5) versetzt und bei einem pH-Wert zwischen 5 und 7 gekuppelt. Danach wird eine wäßrige, neutrale Lösung von 36,7 Teilen 4-(β-Sulfatoethylsulfonyl)-1-(β-aminoethyl)-benzol zugegeben, die Reaktionstemperatur auf 40°C erhöht und ein pH-Wert von 7 eingestellt. Nach beendeter Kondensationsreaktion wird die erfindungsgemäße Verbindung mit Kaliumchlorid aus neutraler Lösung ausgefällt und getrocknet. Das erhaltene Alkalisalz der Verbindung der Formel

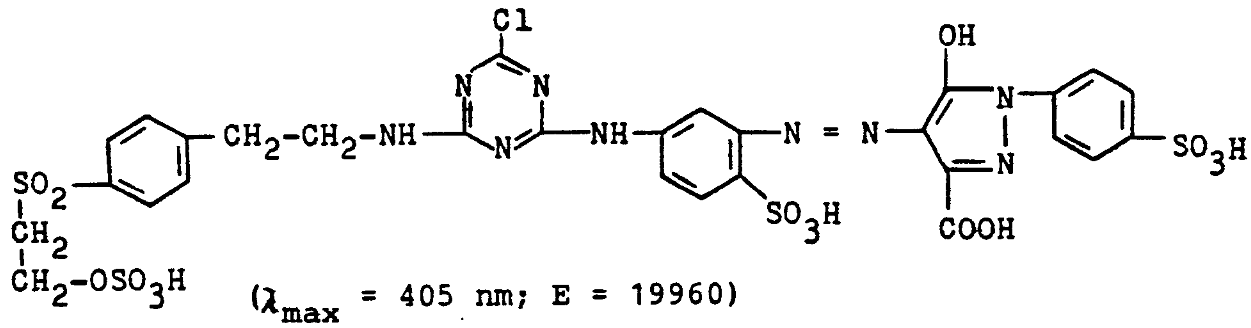

($\lambda_{max}$ = 405 nm; E = 19960)

färbt nach den für faserreaktive Farbstoffe üblichen Färbeverfahren Baumwolle in echten gelben Tönen.

**Beispiele 25 bis 36**

Weitere erfindungsgemäße Farbstoffe entsprechend einer allgemeinen Formel (22)

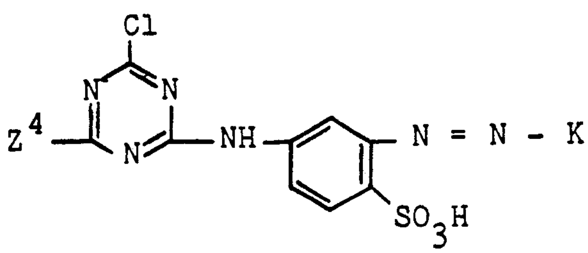

(22)

sind in den nachfolgenden Tabellenbeispielen 25 bis 36 mit Hilfe der dort angegebenen Komponenten beschrieben. Sie lassen sich in erfindungsgemäßer Weise, beispielsweise analog dem Ausführungsbeispiel 24 unter Anwendung des Kondensationsproduktes aus 1,3-Phenylendiamin-4-sulfonsäure, Cyanurchlorid und dem Amin der allgemeinen Formel (18) als Diazokomponente Z-D-$NH_2$ und der Kupplungskomponente H-K herstellen. Diese neuen Verbindungen entsprechend der allgemeinen Formel (1) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Kupplungskomponente H-K | H-$Z^4$ entspr. Amin (18) | Farbton |
|---|---|---|---|
| 25 | 1-(2'-Methyl-4'-sulfophenyl)-3-carboxy-5-pyrazolon | 4-(β-Sulfatoethylsulfonyl)-1-(β-aminoethyl)-benzol | gelb |
| 26 | 3,6-Disulfo-1-naphthol | dito | orange |
| 27 | 3,8-Disulfo-1-naphthol | dito | scharlach |
| 28 | 4,8-Disulfo-1-naphthol | dito | gelbstichig rot |
| 29 | 1-Naphthol-7-(3'-sulfophenyl)-amino-3-sulfonsäure | dito | braun |
| 30 | dito | 4-(β-Methosulfatoethylsulfonyl)-2-sulfo-1-(β-aminoethyl)-benzol | braun |
| 31 | 1-Ethyl-2-hydroxy-4-methyl-5-carbamoyl-6-pyridon | 4-(β-Sulfatoethylsulfonyl)-1-(β-aminoethyl)-benzol | gelb |
| 32 | 1-(4'-Sulfophenyl)-3-carboxy--5-pyrazolon | 4-(β-Phosphatoethylsulfonyl)-1-(β-aminoethyl)-benzol | gelb |
| 33 | dito | 4-(β-Sulfatoethylsulfonyl)-2-sulfo-1-(β-aminoethyl)-benzol | gelb |

| | | | |
|---|---|---|---|
| 34 | dito | 4-(β-Methosulfatoethylsulfonyl)-2-sulfo-1-(β-aminoethyl)-benzol | gelb |
| 35 | dito | 4-(β-Phosphatoethylsulfonyl)-2-sulfo-1-(β-aminoethyl)-benzol | gelb |
| 36 | 1-Sulfoethyl-2-hydroxy-4-methyl-6-pyridon | 4-(β-Sulfatoethylsulfonyl)-1-(β-aminoethyl)-benzol | gelb ($\lambda_{max}$ = 415 nm; E = 23070) |

**Beispiele 37 bis 45**

Weitere erfindungsgemäße Farbstoffe entsprechend einer allgemeinen Formel (23)

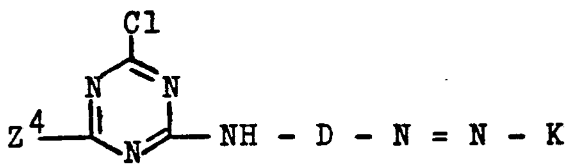

(23)

sind in den nachfolgenden Tabellenbeispielen 37 bis 45 mit Hilfe der dort angegebenen Komponenten beschrieben. Sie lassen sich in erfindungsgemäßer Weise, beispielsweise analog dem Ausführungsbeispiel 24 unter Anwendung des Kondensationsproduktes aus einer Diaminobenzolsulfonsäure entsprechend der Formel $H_2N$-D-$NH_2$, Cyanurchlorid und dem Amin der allgemeinen Formel (18) als angekuppelten Diazokomponente Z-D-$NH_2$ und der Kupplungskomponente H-K herstellen. Diese neuen Verbindungen entsprechend der allgemeinen Formel (1) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Kupplungskomponente H-K | Diaminobenzolsulfonsäure | H-$Z^4$ entspr. Amin (18) | Farbton |
|---|---|---|---|---|
| 37 | 1-(4'-Sulfophenyl)-3-carboxy-5-pyrazolon | 1,4-Diaminobenzol-2,5-disulfonsäure | 4-(β-Sulfatoethylsulfonyl)-1-(β-aminoethyl)-benzol | gelb |
| 38 | 1-Phenyl-3-caboxy-5-pyrazolon | 1,3-Diaminobenzol-4,6-disulfonsäure | dito | gelb |
| 39 | 1,4-Dimethyl-2-hydroxy 3-sulfo-6-pyridon | dito | | grünstichig gelb |
| 40 | 1-Ethyl-4-methyl-3-carbaamoyl-2-hydroxy-6-pyridon | dito | 4-(β-Sulfatoehtylsulfonyl)-2-sulfo-1-(β-aminoethyl)-benzol | grünstichig gelb |
| 41 | dito | dito | 4-(β-Phosphatoethylsulfonyl)-1-(β-aminoethyl)-benzol | grünstichig gelb |
| 42 | dito | dito | 4-(β-Methosulfatoethylsulfonyl)-1-(β-aminoethyl)-benzol | grünstichig gelb |
| 43 | dito | 1,4-Diaminobenzol-6-sulfonsäure | 4-(β-Sulfatoethylsulfonyl)-1-(β-aminoethyl)-benzol | grünstichig gelb |
| 44 | 1-Butyl-4-methyl-3-carbamoyl-6-hydroxy-2-pyridon | dito | dito | grünstichig gelb |
| 45 | 1-Ethyl-4-methyl-3-sulfomethyl-6-hydroxy-2-pyridon-sulfonsäure | 1,3-Diaminobenzol-4- | dito | grünstichig gelb |

**Beispiel 46**

Eine Lösung von 48,3 Teilen 1-(4'-Sulfophenyl)-3-carboxy-4-(4'-amino-2'-sulfo-phenyl-1'-azo)-5-pyrazolon in 750 Teilen Eiswasser wird bei einer Temperatur zwischen 0 und 5°C und einem pH-Wert von 5 mit 19 Teilen Cyanurchlorid umgesetzt. Sobald keine freien Aminogruppen mehr nachweisbar sind, werden 36,7 Teile 4-(β-Sulfatoethylsulfonyl)-1-(β-aminoethyl)-benzol hinzugegeben, und die Kondensationsreaktion wird bel 40°C und einem pH-Wert von 7 durchgeführt. Der erhaltene erfindungsgemäße Farbstoff wird mit Kaliumchlorid ausgefällt und getrocknet. Es wird ein elektrolythaltiges Pulver des Alkalimetallsalzes des Azofarbstoffes der Formel

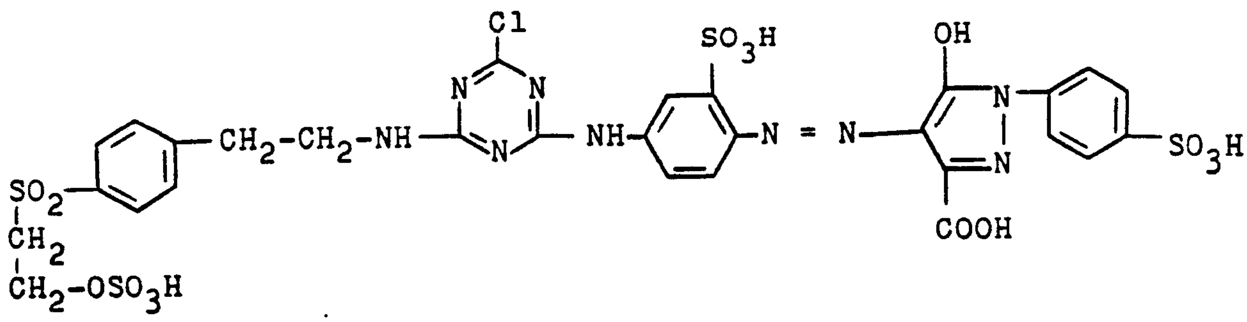

erhalten, der nach üblichen Färbeverfahren für faserreaktive Farbstoffe Baumwolle in echten goldgelben Tönen färbt.

**Beispiel 47**

30,3 Teile 2-Aminonaphthalin-4,6-disulfonsäure werden salzsauer diazotiert und mit 15 Teilen 3-Acetylaminoanilin gekuppelt. Diese Azoverbindung wird mit 19 Teilen fein dispergiertem Cyanurchlorid bei einer Temperatur von 40°C und einem pH-Wert von 7 acyliert, das Monokondensationsprodukt mit 36,7 Teilen 4-(β-Sulfatoethylsulfonyl)-1-(β-aminoethyl)-benzol umgesetzt und der so erhaltene erfindungsgemäße Farbstoff mit Kaliumchlorid ausgefällt. Das Alkalimetallsalz der Verbindung der Formel

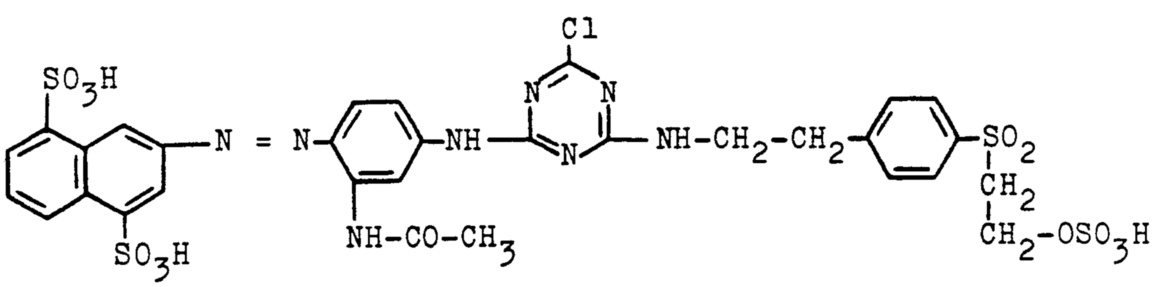

färbt nach üblichen Färbeverfahren für faserreaktive Farbstoffe Baumwolle in echten rotstichig gelben Tönen.

**Beispiele 48 bis 61**

Weitere erfindungsgemäße Farbstoffe entsprechend einer allgemeinen Formel (24)

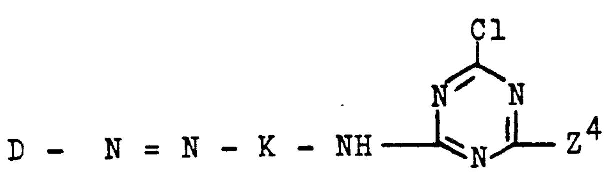

(24)

in welchen
$Z^4$ der Rest des Ausgangsamins (18),
D der Rest der Diazokomponente ohne faserreaktive Gruppe und

K der Rest einer aminogruppenhaltigen Kupplungskomponente entsprechend der Formel H-K-$NHR^1$ ist, sind in den nachfolgenden Tabellenbeispielen 48 bis 61 mit Hilfe der dort angegebenen Komponenten beschrieben. Sie lassen sich in erfindungsgemäßer Weise, beispielsweise analog dem Ausführungsbeispiel 46, unter Anwendung der Diazokomponente D-$NH_2$, der Kupplungskomponente H-K-$NHR^1$, Cyanurchlorid und dem Amin der allgemeinen Formel (18) herstellen. Diese neuen Verbindungen entsprechend der allgemeinen Formel (1) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Diazokomponente D-$NH_2$ | Kupplungskomponente H-K-$NHR^1$ | H-$Z^4$ entspr. Amin (18) | Farbton |
|---|---|---|---|---|
| 48 | 6,6-Disulfo-2-amino-naphthalin | 3-Acetylamino-anilin | 4-(β-Sulfatoethylsulfonyl)-1-(β-aminoethyl)-benzol | goldgelb |
| 49 | dito | 3-Propionylamino-anilin | dito | goldgelb |
| 50 | 3,6,8-Trisulfo-2-amino-naphthalin | 3-Amino-phenylharnstoff | dito | goldgelb |
| 51 | dito | dito | 4-(β-Sulfatoethylsulfonyl)-2-sulfo-1-(aminoethyl)-benzol | goldgelb |
| 52 | dito | dito | 4-(Methosulfatoethyl-sulfon-2-sulfo-1-(β-amino-ethyl)-benzol | goldgelb |
| 53 | dito | dito | 4-(β-Phosphatoethylsulfonyl)-1-(β-aminoethyl)-benzol | goldgelb |
| 54 | dito | N-Phenyl-N'-(3-amino-phenyl)-harnstoff | 4-(β-Sulfatoethylsulfonyl)-1-(β-aminoethyl)-benzol | goldgelb |
| 55 | dito | N-(3-Aminophenyl)-N'-methyl-harnstoff | dito | goldgelb |
| 56 | 4,8-Disulfo-2-amino-naphthalin | N-Cyclohexyl-N'-(3-amino-phenyl)-harnstoff | dito | goldgelb |
| 57 | dito | dito | 4-(Methosulfatoethyl sulfonyl)-2-sulfo-1-(β-aminoethyl)-benzol | goldgelb |
| 58 | dito | 2-Methoxy-5-methyl-anilin | 4-(β-Sulfatoethylsulfonyl)-1-(β-aminoethyl)-benzol | goldgelb ($\lambda_{max}$ = 404 nm, E = 28140) |
| 59 | dito | 3-Methylsulfonylamino-anilin | dito | goldgelb |
| 60 | 1,6-Disulfo-2-amino-naphthalin | 3-Amino-phenylharnstoff | dito | goldgelb |
| 61 | dito | N-(3-Aminophenyl)-N'-methylharnstoff | dito | goldgelb |

**Beispiel 62**

Eine Lösung mit einem pH-Wert von 6,5 von 47 Teilen der bekannten Aminodisazoverbindung der Formel

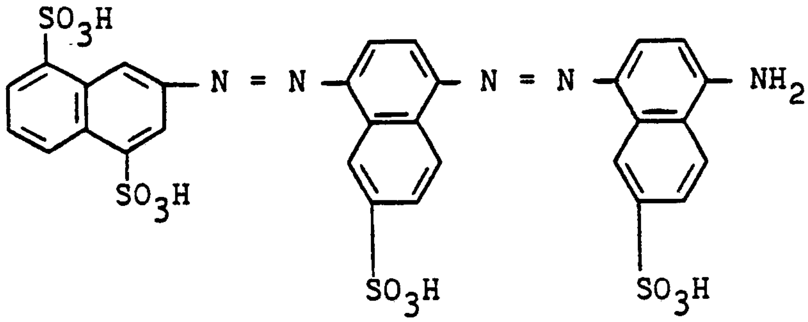

in 300 Teilen Wasser werden bei 0 bis 5°C mit 10 Teilen Cyanurchlorid umgesetzt. Das entstandene Produkt wird anschließend mit 21 Teilen 4-(β-Sulfatoethylsulfonyl)-1-(β-aminoethyl)-benzol bei einer Temperatur zwischen 55 und 65°C und einem pH-Wert zwischen 6 und 6,5 umgesetzt. Der entstandene erfindungsgemäße Farbstoff wird mit Kaliumchlorid ausgefällt. Man erhält das elektrolythaltige Farbstoffpulver des Alkalimetallsalzes der Disazoverbindung

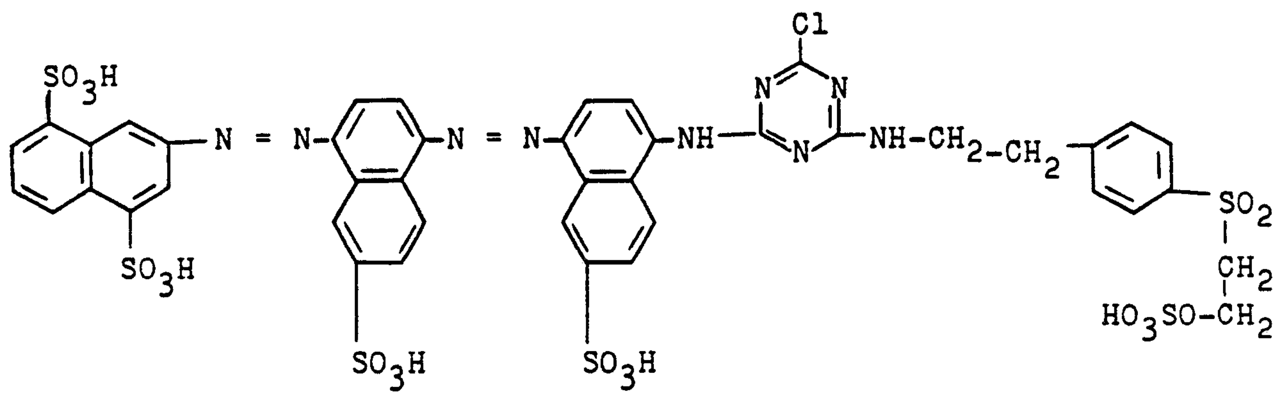

die Baumwolle in echten rötlich-braunen Tönen färbt.

**Beispiele 63 bis 75**

In den nachfolgenden Tabellenbeispielen sind weitere erfindungsgemäße Farbstoffe entsprechend einer allgemeinen Formel $D^5$-$Z^3$ beschrieben, die in erfindungsgemäßer Weise, so analog dem Ausführungsbeispiel 62, durch Umsetzung des in dem jeweiligen Tabellenbeispiel aus dem formelmäßig angegebenen Rest $D^5$ ersichtlichen Ausgangs-Aminodisazo-Farbstoffes entsprechend der allgemeinen Formel $D^5$-$NH_2$ mit Cyanurchlorid und der der allgemeinen Formel $H_2N$-$Z^3$ entsprechenden Aminoverbindung mit $Z^3$ der früher genannten und definierten Formel (3c) hergestellt werden können. Sie besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Rest $D^5$- | R in $Z^3$ | Farbton |
|---|---|---|---|
| 63 | 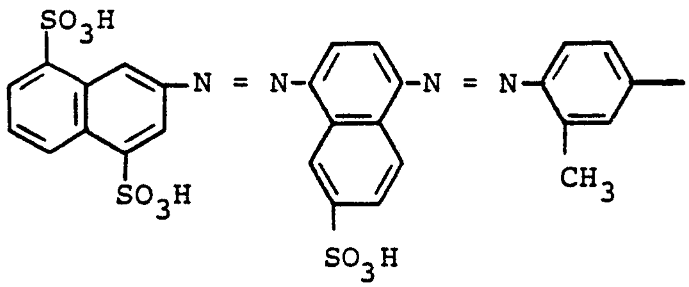 | H | braun ($\lambda_{max}$ = 452 nm; E = 36910) |
| 64 | 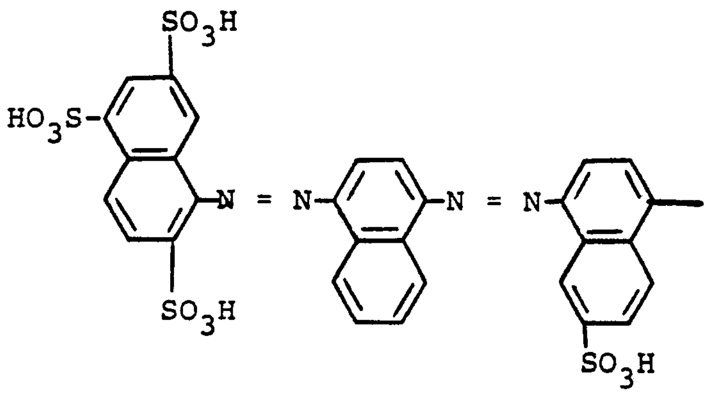 | H | rotbraun |
| 65 | 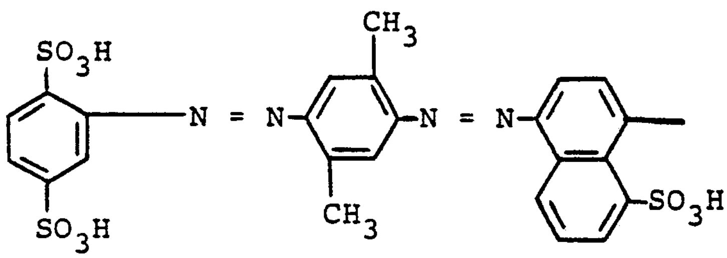 | H | orangebraun ($\lambda_{max}$ = 423 nm; E = 27400) |
| 66 | 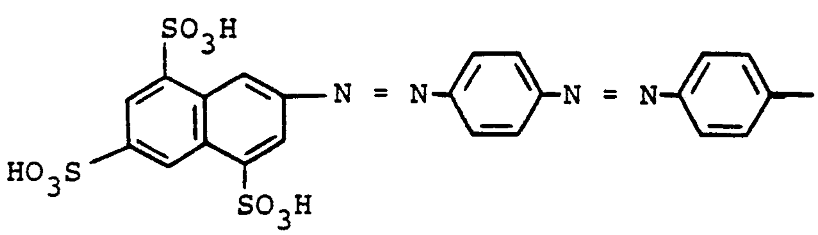 | H | orangebraun |
| 67 | 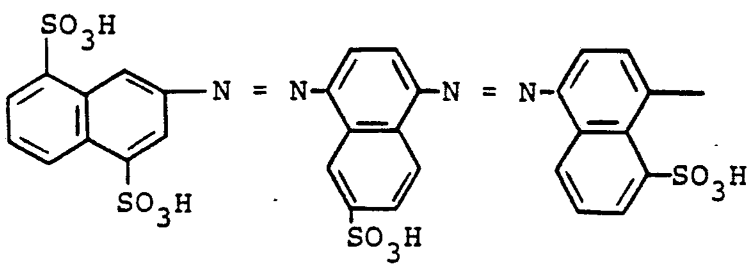 | H | rotbraun ($\lambda_{max}$ = 464 nm, E = 32280) |

| Bsp. | Rest $D^5$- | R in $Z^3$ | Farbton |
|---|---|---|---|
| 68 | 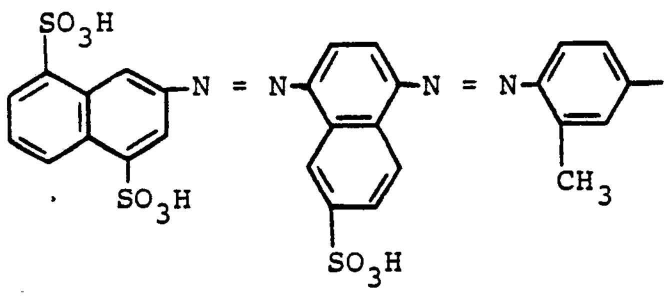 | Sulfo | rotbraun ($\lambda_{max}$ = 443 nm; E = 38960) |
| 69 | 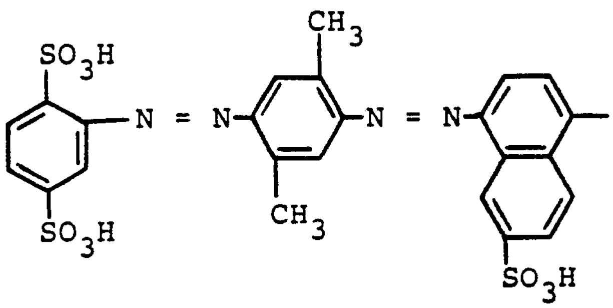 | H | orangebraun ($\lambda_{max}$ = 404 nm; E = 28960) |
| 70 | 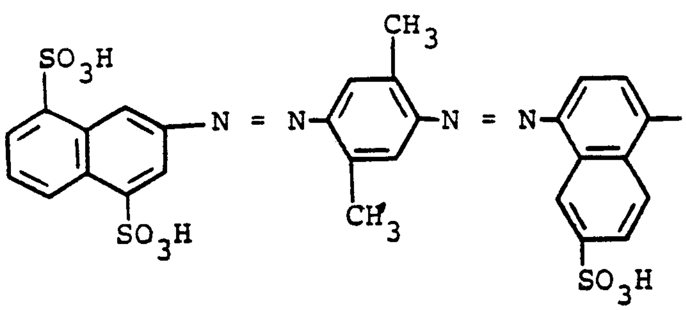 | Sulfo | braun ($\lambda_{max}$ = 421 nm; E = 29180) |
| 71 | dito | H | braun ($\lambda_{max}$ = 421 nm; E = 32740) |
| 72 | 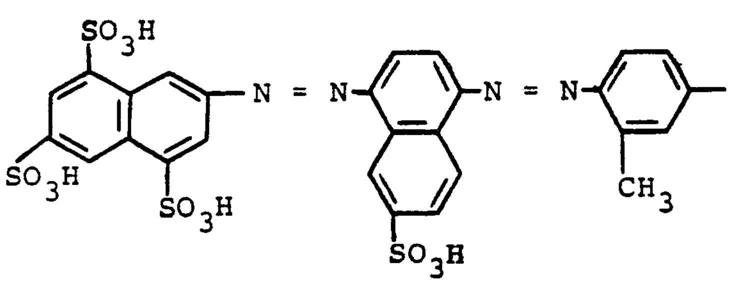 | H | |
| 73 | 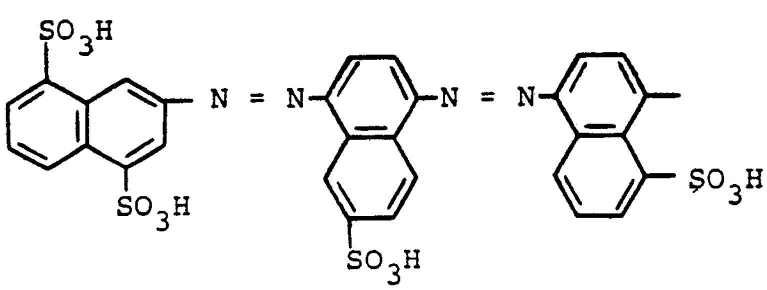 | Sulfo | rotbraun ($\lambda_{max}$ = 471 nm; E = 33500) |

| Bsp. | Rest $D^5$- | R in $Z^3$ | Farbton |
|---|---|---|---|
| 74 | 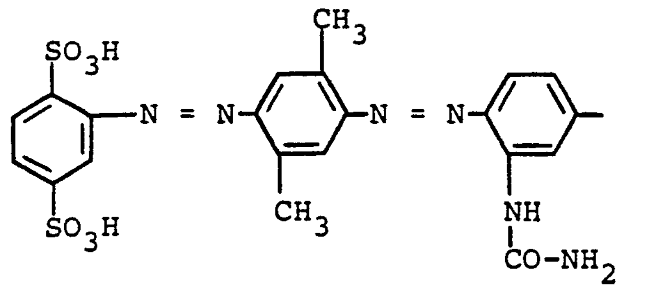 | H | orange ($\lambda_{max}$ = 426 nm; E = 28500) |
| 75 | 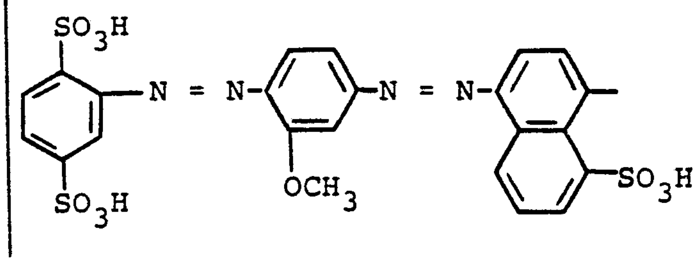 | H | rotbraun ($\lambda_{max}$ = 447 nm; E = 26720) |

**Beispiel 76**

Das Kondensationsprodukt aus 1,3-Diaminobenzol-4-sulfonsäure und Cyanurchlorid wird in bekannter Weise diazotiert, und das Diazoniumsalz wird bei einem pH-Wert zwischen 7 und 7,5 mit 2-(p-Sulfophenylamino)-6-sulfo-8-naphthol gekuppelt. Anschließend wird die so erhaltene Azoverbindung bei einem pH-Wert zwischen 6 und 7 mit 4-(β-Sulfatoethylsulfonyl)-1-(β-aminoethyl)-benzol in üblicher Weise umgesetzt. Der gebildete erfindungsgemäße Farbstoff wird mit Kaliumchlorid ausgefällt. Es wird das Alkalimetallsalz der Verbindung der Formel

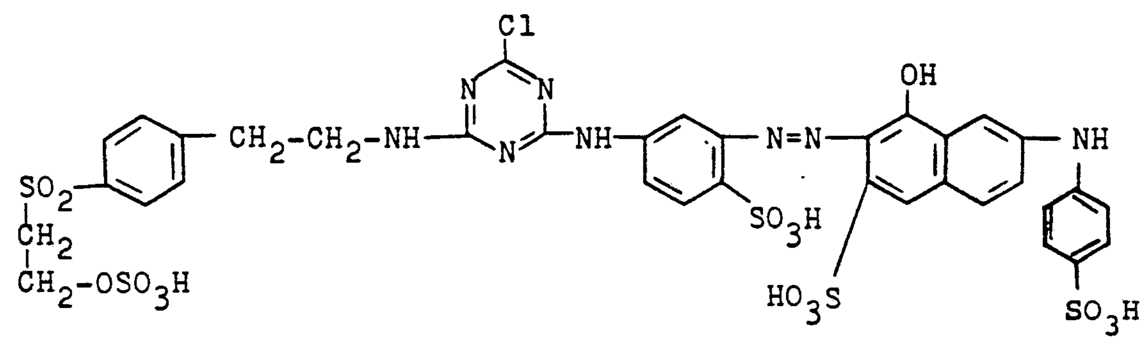

erhalten, das Baumwolle in den für faserreaktive Farbstoffe üblichen Applikations- und Fixierverfahren in echten braunen Tönen färbt.

**Beispiel 77**

95 Teile Cyanurchlorid werden in bekannter Weise mit 1-Amino-3,6-disulfo-8-naphthol in Wasser zum Monokondensationsprodukt umgesetzt, das sodann mit der Lösung des Diazoniumsalzes von 1-Aminobenzol-2-sulfonsäure in entsprechend äquivalenter Menge versetzt wird; die Kupplungsreaktion erfolgt bei einem pH-Wert zwischen 4 und 4,5. Nach beendeter Kupplung werden 157 Teile 4-(β-Sulfatoethylsulfonyl)-1-(β-aminoethyl)-benzol hinzugegeben und die zweite Kondensationsreaktion bei einem pH-Wert zwischen 7 und 7,5 und bei 35°C durchgeführt. Der gebildete erfindungsgemäße Farbstoff wird mit Kaliumchlorid ausgefällt. Es wird das Alkalimetallsalz der Verbindung der Formel

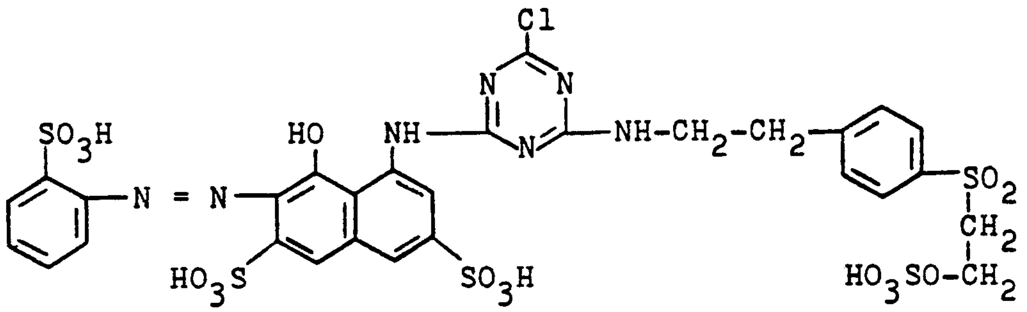

erhalten, das Baumwolle in leuchtend roten, echten Tönen färbt ($\lambda_{max}$ = 552 nm; E = 32500).

**Beispiele 78 bis 110**

Weitere erfindungsgemäße Farbstoffe entsprechend einer allgemeinen Formel (25)

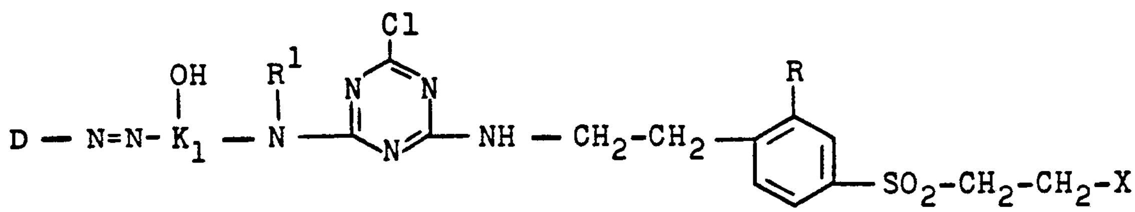

(25)

sind in den nachfolgenden Tabellenbeispielen mit Hilfe der in Formel (25) angegebenen Formelreste beschrieben. Sie lassen sich in erfindungsgemäßer Weise, beispielsweise analog dem Ausführungsbeispiel 77, unter Anwendung der Diazokomponente D-$NH_2$, der Aminonaphthol-sulfonsäure entsprechend einer Formel H(OH)$K_1$-$NHR^1$ als naphtholischer Kupplungskomponente sowie Cyanurchlorid und dem entsprechenden Amin der allgemeinen Formel (18) herstellen. Diese neuen Verbindungen entsprechend der allgemeinen Formel (1) besitzen ebenfalls sehr gute faserreaktive Farbstoffeigenschaften und färben insbesondere Cellulosefasermaterialien in den für das jeweilige Tabellenbeispiel angegebenen kräftigen echten Farbtönen.

| Bsp. | Rest D | Kupplungs-komponente H(OH)$K_1$-$NHR^1$ | Subst. R | Rest X | Farbton |
|---|---|---|---|---|---|
| 78 | Phenyl | 1-Amino-3,6-disulfo-8-naphthol | Wasserstoff | Sulfato | rot |
| 79 | dito | dito | Sulfo | Methosulfato | rot |
| 80 | dito | dito | Wasserstoff | Phosphato | rot |
| 81 | 2-Chlor-phenyl | dito | dito | Sulfato | rot |
| 82 | 3-Methyl-phenyl | dito | dito | dito | rot |
| 83 | 4-Methoxy-2-sulfo-phenyl | dito | dito | dito | blaustichig rot |
| 84 | 4-Phenoxy-2-sulfo-phenyl | dito | dito | dito | dito |
| 85 | 4-Ethoxy-phenyl | dito | dito | dito | dito |
| 86 | 4-Methoxy-phenyl | dito | dito | dito | dito |
| 87 | 4-Methyl-2-sulfo-phenyl | dito | dito | dito | dito |
| 88 | 4-Sulfo-phenyl | dito | dito | dito | rot |
| 89 | 3-Sulfo-phenyl | dito | dito | dito | rot |
| 90 | 1,5-Disulfo-2-naphthyl | dito | dito | dito | rot ($\lambda_{max}$ = 539 nm, E = 41300) |
| 91 | 4,8-Disulfo-2-naphthyl | dito | dito | dito | rot ($\lambda_{max}$ = 547 nm, E = 46460) |

| | | | | | |
|---|---|---|---|---|---|
| 92 | 4-Sulfo-1-naphthyl | 1-Amino-3,6-disulfo-8-naphthol | dito | dito | rot |
| 93 | 6-Sulfo-1-naphthyl | dito | dito | dito | rot |
| 94 | 1-Sulfo-2-naphthyl | dito | dito | dito | rot ($\lambda_{max}$ = 523 nm, E = 24800) |
| 95 | 5-Sulfo-2-naphthyl | dito | Suflo | Methosulfato | rot |
| 96 | 6-Sulfo-2-naphthyl | dito | Wasserstoff | Sulfato | rot |
| 97 | Phenyl | 1-Amino-4,6-disulfo-8-naphthol | dito | dito | scharlach |
| 98 | 2-Sulfo-phenyl | dito | dito | dito | scharlach |
| 99 | dito | 1-Amino-4-sulfo-8-naphthol | dito | dito | scharlach |
| 100 | dito | dito | Sulfo | Methosulfato | scharlach |
| 101 | dito | 2-Amino-6-sulfo-8-naphthol | Wasserstoff | Sulfato | rot |
| 102 | Phenyl | 1-Amino-2,4-disulfo-8-naphthol | dito | dito | rot |
| 103 | 4-Sulfo-phenyl | 2-Amino-7-sulfo-5-naphthol | dito | dito | orange |
| 104 | 1,5-Disulfo-2-naphthyl | 2-Amino-7-sulfo-5-naphthol | dito | dito | orange ($\lambda_{max}$ = 482 nm; E = 39480) |
| 105 | 1,5-Disulfo-2-naphthyl | 2-Methylamino-7-sulfo-5-naphthol | dito | dito | orange |
| 106 | dito | dito | Sulfo | Methosulfato | orange |
| 107 | 2,5-Disulfo-phenyl | 2-Amino-7-sulfo-5-naphthol | Wasserstoff | Sulfato | rot ($\lambda_{max}$ = 498 nm, E = 28320) |
| 108 | 2-Sulfo-4-methyl-phenyl | dito | Wasserstoff | Sulfato | orange ($\lambda_{max}$ = 404 nm; E = 28140) |
| 109 | 2-Sulfo-4-methoxy-phenyl | dito | Wasserstoff | Sulfato | orange |
| 110 | dito | 2-Methylamino-7-sulfo-5-naphthol | Wasserstoff | Sulfato | orange |

**Beispiel 111**

Das Kondensationsprodukt von 1,3-Diaminobenzol-4-sulfonsäure mit Cyanurchlorid wird auf übliche Weise diazotiert und auf 1-Acetylamino-8-naphthol-3,6-disulfonsäure gekuppelt. Die zweite Kondensationsreaktion erfolgt in üblicher Verfahrensweise mit der äquivalenten Menge an 4-(β-Sulfatoethylsulfonyl)-1-(β-aminoethyl)-benzol, beispielsweise gemäß den Angaben von Beispiel 1. Es wird das erfindungsgemäße Alkalimetallsalz der Verbindung der Formel

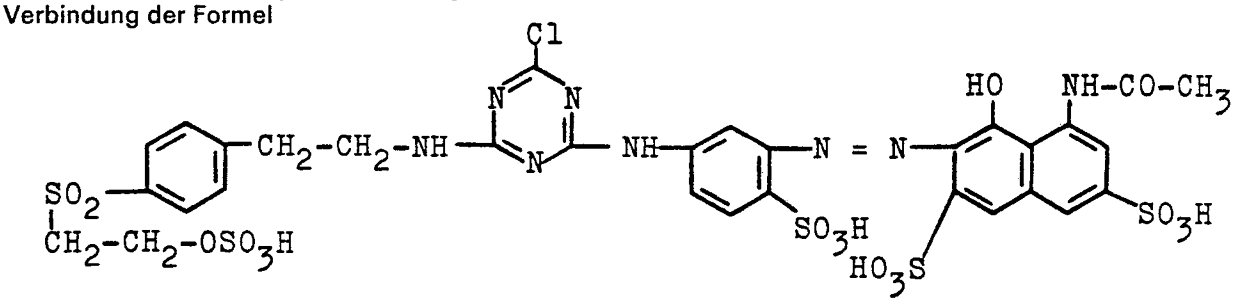

erhalten, die nach üblichen Applikations- und Fixierverfahren für faserreaktive Farbstoffe Baumwolle in brillanten echten roten Tönen färbt ($\lambda_{max}$ = 506 nm, E = 25460).

**Beispiele 112 bis 124**

Weitere erfindungsgemäße Farbstoffe entsprechend der früher angegebenen allgemeinen Formel (23) sind in den nachfolgenden Tabellenbeispielen beschrieben. Sie lassen sich in gleicher Weise wie die

entsprechenden vorhergehenden erfindungsgemäßen Farbstoffe herstellen und besitzen ebenfalls gute faserreaktive Farbstoffeigenschaften.

| Bsp. | Kupplungskomponente H-K | Diaminobenzolsulfonsäure | H-$Z^4$ entspr. Amin (18) | Farbton |
|---|---|---|---|---|
| 112 | 1-Bonzoylamino-3,6-disulfo-naphthol | 1,3-Diaminobenzol-4-sulfonsäure | 4-(β-Sulfatoethylsulfonyl)-1-(β-aminoethyl)-benzol | rot |
| 113 | dito | 1-Benzoylamino-4,6-disulfo-8-naphthol | dito | rot |
| 114 | dito | N-(3,6-Disulfo-8-hydroxy-naphth-1-yl)N'-cyclo-hexyl-harnstoff | dito | rot |
| 115 | dito | 4,8-Disulfo-1-naphthol | 4-(β-Sulfatoethylsulfonyl)-2-sulfo-1-(β-aminoethyl)-benzol | rot |
| 116 | dito | 4-Sulfo-naphthol | 4-(β-Sulfatoethylsulfonyl)-1-β-aminoethyl)-benzol | rot |
| 117 | dito | dito | 4-(β-Methosulfatethylsul-fonyl)-2-sulfo-1-(β-amino-ethyl)-benzol | rot |
| 118 | 1,4-Diaminobenzol-6-disulfonsäure | 1-Acetylamino-3,6-sulfo-8-naphthol | 4-(β-Sulfatoethylsulfonyl)-1-(β-aminoethyl)-benzol | rot |
| 119 | dito | dito | 4-(β-Phospahtoethylsulfo-nyl)-1-(β-aminoethyl)-benzol | rot |
| 120 | dito | dito | 4-(β-Sulfatoethylsulfonyl)-2-sulfo-1-(β-aminoethyl)-benzol | rot |
| 121 | dito | 1-Benzolamino-3,6-disulfo-8-naphthol | dito | rot |
| 122 | dito | 1-Benzoylamino-4,6-disulfo-8-naphthol | 4-(β-Sulfatoethylsulfonyl)-1-(β-aminoethyl)-benzol | rot |
| 123 | 1,3-Diamino-2-methyl-benzol-5-sulfonsäure | dito | dito | rot |
| 124 | dito | dito | 4-(β-Sulfatoethylsulfonyl)-2-sulfo-1-(β-aminoethyl)-benzol | rot |

**Beispiel 125**

19,5 Teile 1-Amino-3,6-disulfo-8-naphthol werden in üblicher Weise mit Cyanurchlorid monokondensiert. Zu der entstandenen Verbindung gibt man eine wäßrige Suspension des Diazoniumsalzes von 4-(4'-Sulfo-phenylazo)-anilin, die auf bekanntem Wege hergestellt wird. Nach Beendigung der Kupplungsreaktion dieses Diazoniumsalzes mit dem Monokondensationsprodukt, die bei einem pH-Wert von 3 bis 4 durchgeführt wird, wird die zweite Kondensationsreaktion mit dieser Azoverbindung gemäß der Verfahrensweise des Beispieles 1 mit der äquivalenten Menge an 4-(β-Sulfatoethylsulfonyl)-1-(β-aminoethyl)-benzol durchgeführt. Der erfindungsgemäße Farbstoff wird mit Kaliumchlorid ausgefällt. Es wird das Alkalisalz der Verbindung der Formel

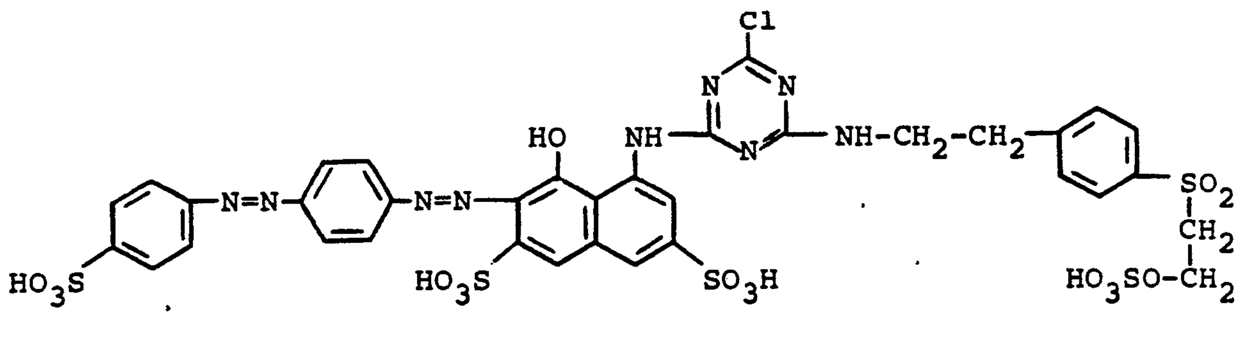

erhalten, die nach üblichen Färbeverfahren Baumwolle in sehr echten rotvioletten Tönen färbt.

**Beispiel 126**

19,5 Teile 1-Amino-3,6-disulfo-8-naphthol werden in üblicher Weise mit Cyanurchlorid monokondensiert. Zu der entstandenen Verbindung gibt man eine wäßrige Lösung des Diazoniumsalzes von 4-(3',6',8'-Trisulfonaphthyl-2'-azo)-2-methoxy-5-methyl-anilin, die auf bekanntem Wege hergestellt wird. Nach Beendigung der Kupplungsreaktion dieses Diazoniumsalzes mit dem Monokondensationsprodukt, die bei einem pH-Wert von 3 bis 4 durchgeführt wird, wird die zweite Kondensationsreaktion mit dieser Disazoverbindung gemäß der Verfahrensweise des Beispieles 1 mit der äquivalenten Menge an 4-(β-Sulfatoethylsulfonyl)-1-(β-aminoethyl)-benzol durchgeführt. Der erfindungsgemäße Farbstoff wird mit Kaliumchlorid ausgefällt. Es wird das Alkalisalz der Verbindung der Formel

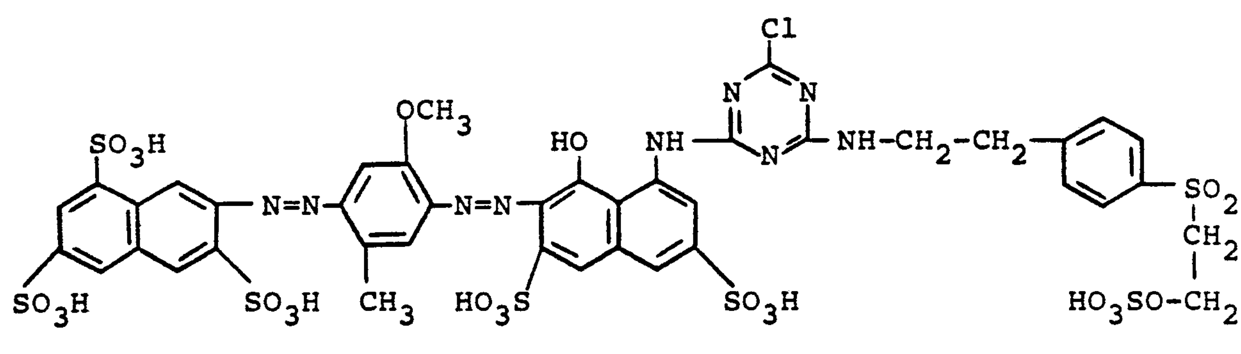

erhalten, die nach üblichen Färbeverfahren Baumwolle in sehr echten marineblauen Tönen färbt ($\lambda_{max}$ = 589 nm; E = 57800).

**Beispiel 127**

19,5 Teile 1-Amino-3,6-disulfo-8-naphthol werden in üblicher Weise mit Cyanurchlorid monokondensiert. Zu der entstandenen Verbindung gibt man eine wäßrige Lösung des Diazoniumsalzes von 4-(3',6',8'-Trisulfonaphthyl-2'-azo)-2-methoxy-5-methylanilin, die auf bekanntem Wege hergestellt wird. Nach Beendigung der Kupplungsreaktion dieses Diazoniumsalzes mit dem Monokondensationsprodukt, die bei einem pH-Wert von 3 bis 4 durchgeführt wird, wird die zweite Kondensationsreaktion mit dieser Disazoverbindung gemäß der Verfahrensweise des Beispieles 1 mit der äquivalenten Menge an 4-(β-Sulfatoethylsulfonyl)-1-(β-aminoethyl)-benzol-2-sulfonsäure durchgeführt. Der erfindungsgemäße Farbstoff wird mit Kaliumchlorid ausgefällt. Es wird das Alkalisalz der Verbindung der Formel

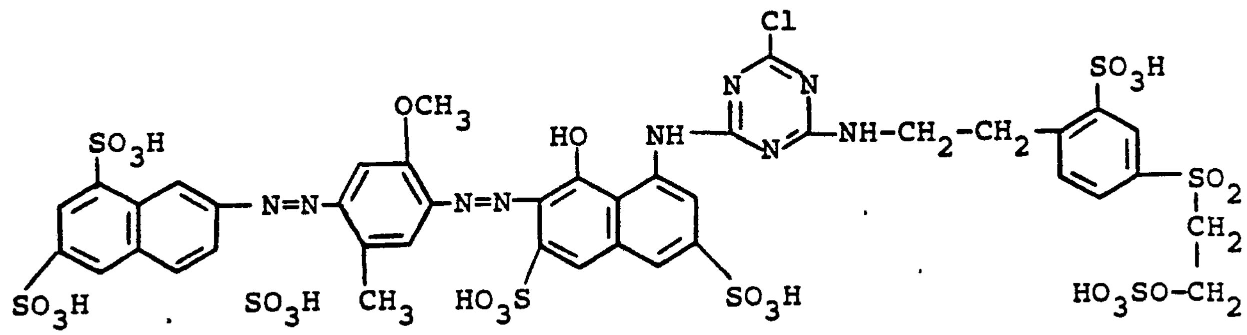

erhalten, die nach üblichen Färbeverfahren Baumwolle in sehr echten marineblauen Tönen färbt ($\lambda_{max}$ = 566 nm; E = 55460).

## Patentansprüche

1. Eine Verbindung, die der allgemeinen Formel (1)

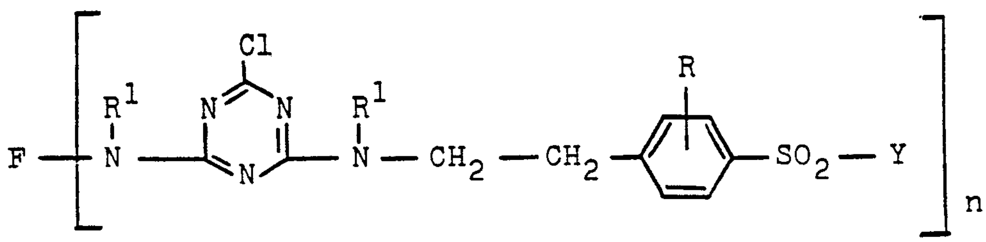
(1)

entspricht, in welcher bedeutet:

F ist ein Rest eines Farbstoffes, bevorzugt eines wasserlöslichen sulfogruppenhaltigen Farbstoffes und bevorzugt aus der Azoreihe;

n ist die Zahl 1 oder 2;

$R^1$ ist ein Wasserstoffatom oder eine Alkylgruppe von 1 bis 4 C-Atomen;

R ist ein Wasserstoffatom oder eine Sulfogruppe;

Y ist die Vinylgruppe oder eine Gruppe der allgemeinen Formel (2)

$$- CH_2 - CH_2 - X \qquad (2)$$

in welcher X für einen Substituenten steht, der als Anion, insbesondere mittels eines Alkalis, eliminierbar ist,

ausgenommen jedoch Verbindungen entsprechend einer allgemeinen Formel (A)

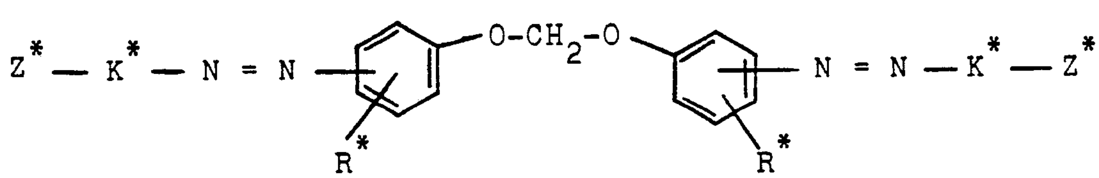
(A)

in welcher R* ein Wasserstoffatom oder eine Nitrogruppe, K* der Rest einer Kupplungskomponente und Z* ein Rest der allgemeinen Formel (B)

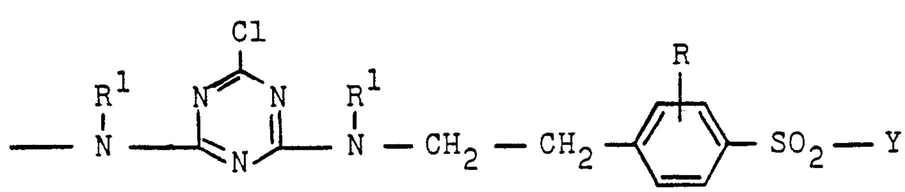
(B)

mit $R^1$, R und Y der obengenannten Bedeutung ist.

2. Verbindung nach Anspruch 1, dadurch gekennzeichnet, daß F der Rest eines sulfogruppenhaltigen Mono- oder Disazofarbstoffes, ausgenommen eines Disazofarbstoffes gemäß Formel (A), ist.

3. Verbindung nach Anspruch 1 oder 2, dadurch gekennzeichnet, daß $R^1$ jedes für Wasserstoff und Y für β-Sulfatoethyl oder β-Phosphatoethyl steht.

4. Verbindung nach Anspruch 1 entsprechend der allgemeinen Formel (4)

$$Z_n \left[ D - N = N \left( E - N = N \right)_v K \right] \quad (4)$$

in welcher

D für den Rest einer Diazokomponente,
E für den bivalenten Rest einer kupplungsfähigen und diazotierbaren Verbindung,
K für den Rest einer Kupplungskomponente und
v für die Zahl Null oder 1 steht,
n die Zahl 1 oder 2 ist sowie
Z einen Rest der allgemeinen Formel (3)

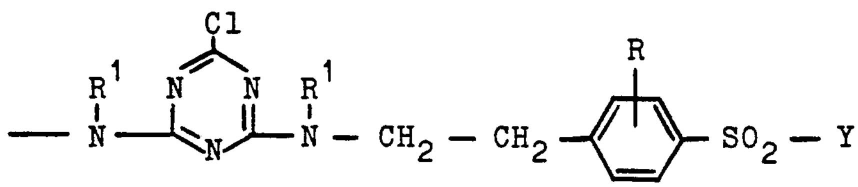

(3)

bedeutet, in welcher $R^1$, R und Y die in Anspruch 1 genannten Bedeutungen haben, wobei der Rest Z an den Rest D oder den Rest K oder im Falle von n = 2 jeweils an D und K gebunden ist.

5. Verbindung nach Anspruch 4, dadurch gekennzeichnet, daß n für die Zahl 1 steht und Z an K gebunden ist und D einen Rest der allgemeinen Formel

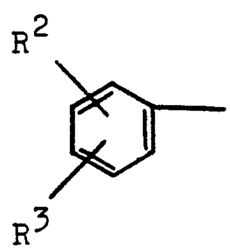

oder

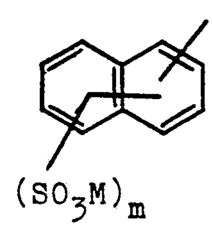

bedeutet, in welchen

- $R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
- $R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
- m die Zahl Null, 1, 2 oder 3,bedeutet und
- M ein Wasserstoffatom oder ein Alkalimetall bedeutet.

6. Verbindung nach Anspruch 4, dadurch gekennzeichnet, daß n für die Zahl 1 steht und Z an D gebunden ist und D einen Phenylenrest der allgemeinen Formel

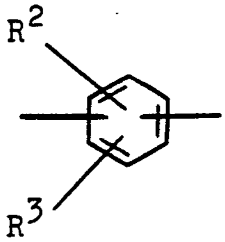

bedeutet, in welchen

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist, und

M ein Wasserstoffatom oder ein Alkalimetall ist.

7. Verbindung nach Anspruch 4, dadurch gekennzeichnet, daß n für die Zahl 1 steht, Z an D gebunden ist und K einen Rest der allgemeinen Formel

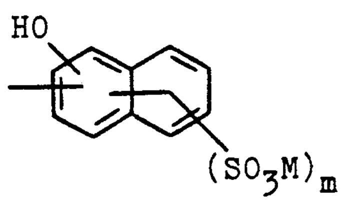

oder

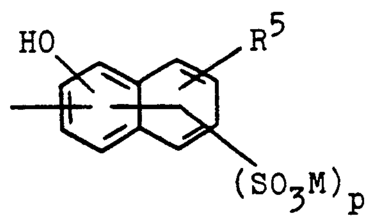

oder

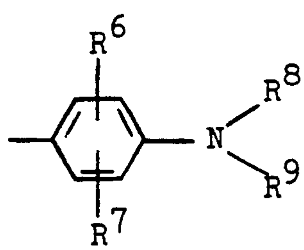

bedeutet, in welchen

$R^5$ Alkylureido mit Alkylgruppen von 1 bis 6 C-Atomen, Phenylureido, im Phenylrest durch Chlor, Methyl, Methoxy, Nitro, Sulfo und/oder Carboxy substituiertes Phenylureido, Alkanoylamino von 2 bis 7 C-Atomen, Cyclohexanoylamino, Benzoylamino oder im Benzolrest durch Chlor, Methyl, Methoxy, Nitro, Sulfo und/oder Carboxy substituiertes Benzoylamino bedeutet,

$R^6$ Wasserstoff, Alkyl von 1 bis 4 C-Atomen, Alkoxy von 1 bis 4 C-Atomen, Brom, Chlor oder Alkanoylamino von 2 bis 7 C-Atomen ist,

$R^7$ Wasserstoff, Alkyl von 1 bis 4 C-Atomen, Alkoxy von 1 bis 4 C-Atomen, Chlor oder Alkanoylamino von 2 bis 7 C-Atomen oder eine Ureido- oder Phenylureidogruppe ist,

$R^8$ Wasserstoff oder Alkyl von 1 bis 4 C-Atomen ist, das durch Hydroxy, Cyan, Carboxy, Sulfo, Sulfato, Methoxycarbonyl, Ethoxycarbonyl oder Acetoxy substituiert sein kann,

$R^9$ für Alkyl von 1 bis 4 C-Atomen, das durch Hydroxy, Cyan, Carboxy, Sulfo, Sulfato, Methoxycarbonyl, Ethoxycarbonyl oder Acetoxy substituiert sein kann, steht oder Benzyl oder Phenyl oder durch Alkyl von 1 bis 4 C-Atomen, Alkoxy von 1 bis 4 C-Atomen, Chlor und/oder Sulfo substituiertes Phenyl ist,

m für die Zahl Null, 1, 2 oder 3 steht,

p die Zahl Null, 1 oder 2 bedeutet und

M ein Wasserstoffatom oder ein Alkalimetall ist.

8. Verbindung nach Anspruch 4, dadurch gekennzeichnet, daß n für die Zahl 1 steht, der Rest Z an K gebunden ist und die Gruppe -K-Z einen Rest der Formel

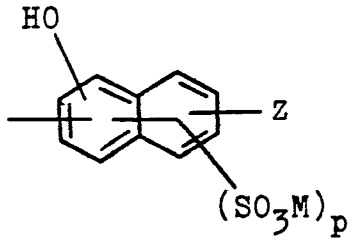

oder

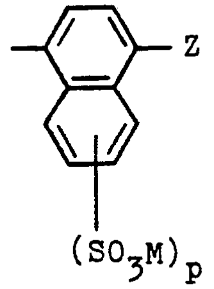

oder

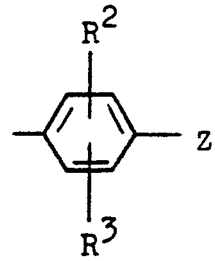

bedeutet, in welchen

$R^2$ gleich Wasserstoff, Methyl, Methoxy, Chlor, Carboxy oder Sulfo,

$R^3$ gleich Wasserstoff, Methyl, Methoxy, Chlor, Carboxy, Sulfo oder Acetylamino,

p die Zahl Null, 1 oder 2 und

M gleich Wasserstoff oder ein Alkalimetall ist sowie Z die in Anspruch 4 genannte Bedeutung besitzt.

9. Verbindung nach Anspruch 4, dadurch gekennzeichnet, daß v für die Zahl 1 steht und E einen Rest der Formel

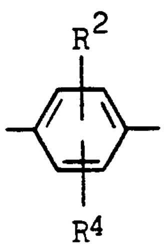

oder

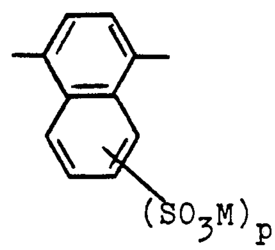

bedeutet, in welcher

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^4$ Wasserstoff, Alkyl von 1 bis 4 C-Atomen, Alkoxy von 1 bis 4 C-Atomen, Chlor, Alkanoylamino von 2 bis 5 C-Atomen, Benzoylamino, Ureido, Phenylureido, Alkylureido mit 1 bis 4 C-Atomen im Alkylrest, Phenylsulfonyl oder Alkylsulfonyl von 1 bis 4 C-Atomen ist,

p für die Zahl Null, 1 oder 2 steht und

M ein Wasserstoffatom oder ein Alkalimetall bedeutet.

10. Verbindung nach Anspruch 1 entsprechend der allgemeinen Formel (15)

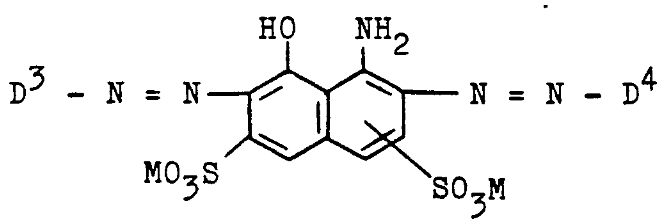

(15)

in welcher

$D^3$ und $D^4$ zueinander gleiche oder voneinander verschiedene Bedeutungen haben und jedes den Rest einer Diazokomponente ist, von denen mindestens eine eine faserreaktive Gruppe der allgemeinen Formel (3) gebunden enthält, in welcher $R^1$ beide für ein Wasserstoffatom stehen und R ein Wasserstoffatom oder eine Sulfogruppe ist,

und in welcher

M ein Wasserstoffatom oder ein Alkalimetall bedeutet.

11. Verbindung nach Anspruch 1 der allgemeinen Formel (16a)

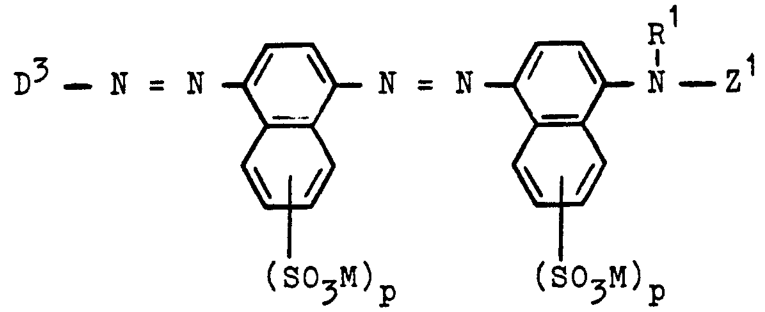

(16a)

in welcher
$D^3$ einen Rest der allgemeinen Formel (10a) oder (10b)

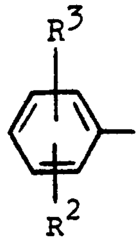

(10a)

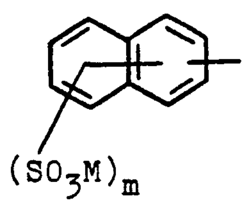

(10b)

ist, in welchen
$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,
$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,
m die Zahl Null, 1, 2 oder 3 bedeutet und
M ein Wasserstoffatom oder ein Alkalimetall ist,
$R^1$ die in Anspruch 1 genannte Bedeutung besitzt,
p für die Zahl Null, 1 oder 2 steht und
$Z^1$ einen Rest der allgemeinen Formel (3a)

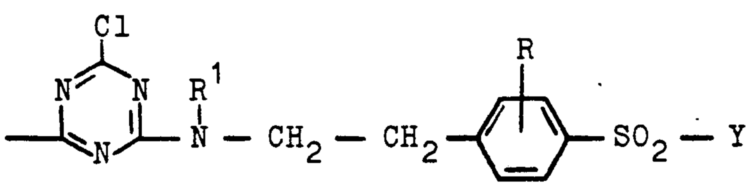

(3a)

mit $R^1$, R und Y der in Anspruch 1 angegebenen Bedeutung darstellt.

12. Verbindung nach Anspruch 1 entsprechend der allgemeinen Formel (16b)

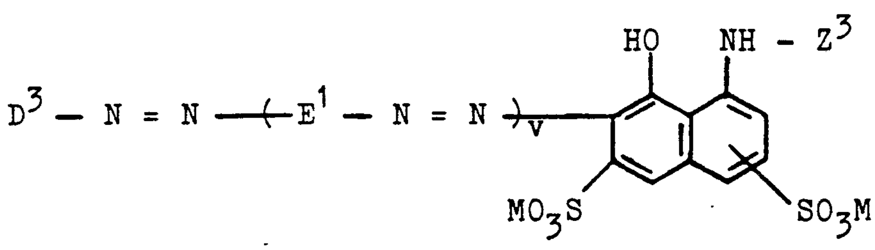

(16b)

in welcher
$D^3$ einen Rest der allgemeinen Formel (10a) oder (10b)

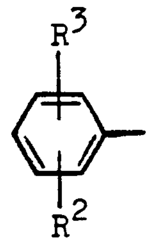 (10a) 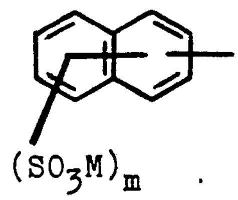 (10b)

ist, in welchen

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^4$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fiuor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

m die Zahl Null, 1, 2 oder 3 bedeutet und

M ein Wasserstoffatom oder ein Alkalimetall ist,

v für die Zahl Null oder 1 steht,

$E^1$ einen Rest der allgemeinen Formel (7A)

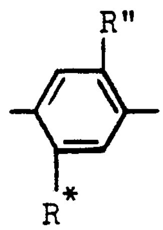 (7A)

ist, in welcher R'' und R*, zueinander gleich oder voneinander verschieden, jedes ein Wasserstoffatom, die Methyl-, Methoxy- oder Ethoxygruppe bedeutet, und

$Z^3$ ein Rest der allgemeinen Formel (3c)

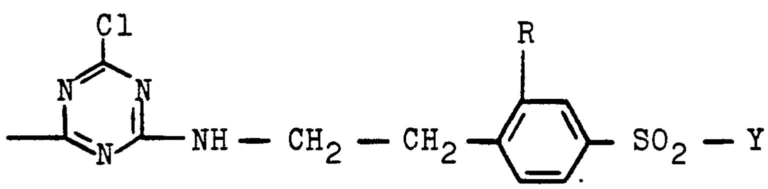 (3c)

mit Y der in Anspruch 1 genannten Bedeutung und R gleich Sulfo oder bevorzugt Wasserstoff darstellt.

13. Verbindung nach Anspruch 1 entsprechend der allgemeinen Formel (16c)

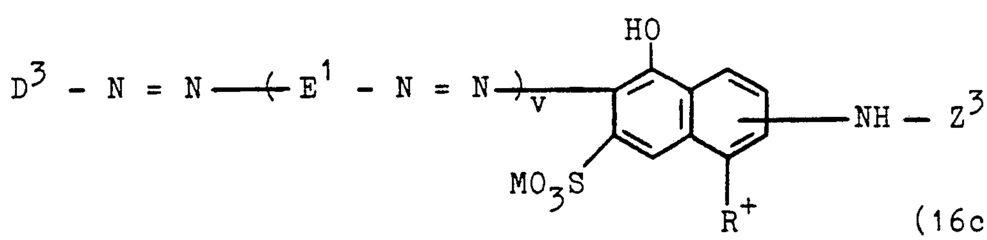
(16c)

in welcher

$D^3$ einen Rest der allgemeinen Formel (10a) oder (10b)

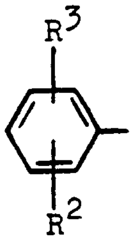

(10a)

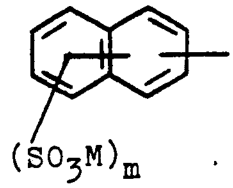

(10b)

ist, in welchen

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

m die Zahl Null, 1, 2 oder 3 bedeutet und

M ein Wasserstoffatom oder ein Alkalimetall ist,

v für die Zahl Null oder 1 steht,

$E^1$ einen Rest der allgemeinen Formel (7A)

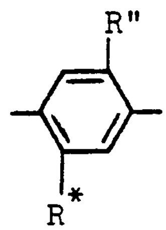

(7A)

ist, in welcher R'' und R*, zueinander gleich oder voneinander verschieden, jedes ein Wasserstoffatom, die Methyl-, Methoxy- oder Ethoxygruppe bedeutet,

$Z^3$ ist ein Rest der allgemeinen Formel (3c)

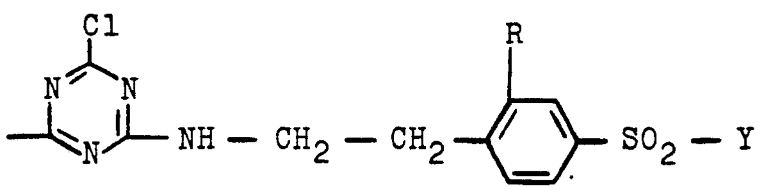

(3c)

mit Y der in Anspruch 1 genannten Bedeutung und R gleich Sulfo oder bevorzugt Wasserstoff darstellt und

$R^+$ ist ein Wasserstoffatom oder eine Sulfogruppe ist.

14. Verbindung nach Anspruch 1 entsprechend der allgemeinen Formel (16d)

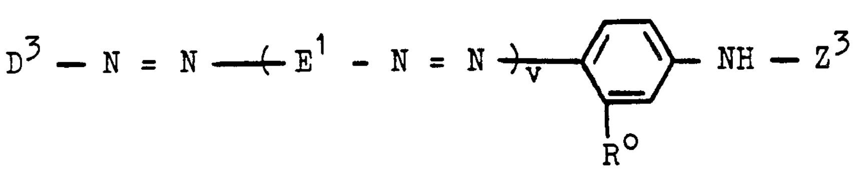

(16d)

in welcher

$D^3$ einen Rest der allgemeinen Formel (10a) oder (10b)

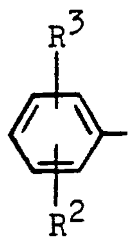

(10a)

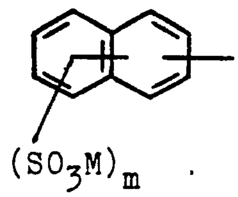

(10b)

ist, in welchen

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Fluor, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

m die Zahl Null, 1, 2 oder 3 bedeutet und

M ein Wasserstoffatom oder ein Alkalimetall ist,

v für die Zahl Null oder 1 steht,

$E^1$ einen Rest der allgemeinen Formel (7A)

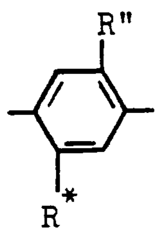

(7A)

ist, in welcher R'' und R*, zueinander gleich oder voneinander verschieden, jedes ein Wasserstoffatom, die Methyl-, Methoxy- oder Ethoxygruppe bedeutet,

$Z^3$

ist ein Rest der allgemeinen Formel (3c)

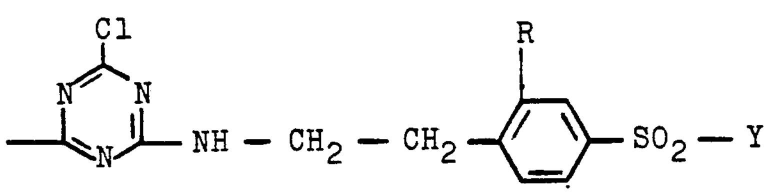

(3c)

mit Y der in Anspruch 1 genannten Bedeutung und R gleich Sulfo oder bevorzugt Wasserstoff darstellt und

$R^o$ die Acetylamino- oder Ureidogruppe ist.

15. Verbindung nach Anspruch 1 entsprechend der allgemeinen Formel (16e)

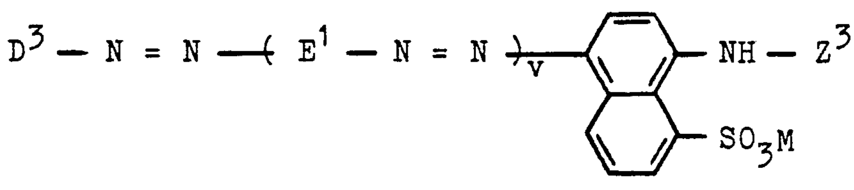

(16e)

in welcher

$D^3$ einen Rest der allgemeinen Formel (10c) oder (10b)

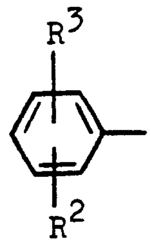 (10a) 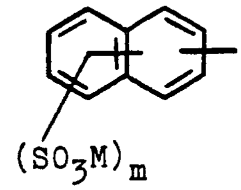 (10b)

ist, in welchen

$R^2$ Wasserstoff, Methyl, Ethyl, Methoxy, Ethoxy, Alkanoyl von 2 bis 5 C-Atomen, Cyan, Carboxy, Sulfo, Alkoxycarbonyl von 2 bis 5 C-Atomen, Carbamoyl, N-($C_1$-$C_4$-Alkyl)-carbamoyl, Flour, Chlor, Brom oder Trifluormethyl ist,

$R^3$ Wasserstoff, Methyl, Ethyl, Methoxy, Ethoxy, Cyan, Carboxy, Sulfo, Alkanoylamino von 2 bis 5 C-Atomen, Alkoxycarbonyl von 2 bis 5 C-Atomen, Carbamoyl, N-($C_1$-$C_4$-Alkyl)-carbamoyl, Fluor, Chlor, Nitro, Sulfamoyl, N-($C_1$-$C_4$-Alkyl)-sulfamoyl, Alkylsulfonyl von 1 bis 4 C-Atomen, Phenylsulfonyl oder Phenoxy ist,

m die Zahl Null, 1, 2 oder 3 bedeutet und

M ein Wasserstoffatom oder ein Alkalimetall ist,

v für die Zahl Null oder 1 steht,

$E^1$ einen Rest der allgemeinen Formel (7A)

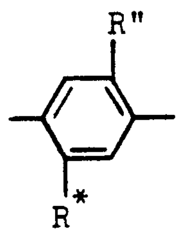 (7A)

ist, in welcher R'' und R*, zueinander gleich oder voneinander verschieden, jedes ein Wasserstoffatom, die Methyl-, Methoxy- oder Ethoxygruppe bedeutet, und

$Z^3$ ist ein Rest der allgemeinen Formel (3c)

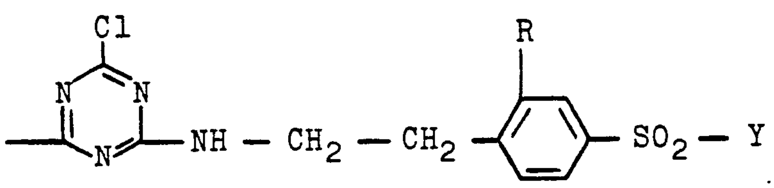 (3c)

mit Y der in Anspruch 1 genannten Bedeutung und R gleich Sulfo oder bevorzugt Wasserstoff darstellt.

16. Verbindung nach einem der Ansprüche 1 bis 15, dadurch gekennzeichnet, daß Y für die β-Sulfatoethyl-Gruppe steht.

17. Verbindung nach einem der Ansprüche 1 bis 9 oder 11, dadurch gekennzeichnet, daß $R^1$ jedes für ein Wasserstoffatom steht.

18. Verbindung nach einem der Ansprüche 1 bis 17, dadurch gekennzeichnet, daß R für ein Wasserstoffatom steht.

19. Verfahren zur Herstellung der in Anspruch 1 genannten und definierten Verbindungen der allgemeinen Formel (1), dadurch gekennzeichnet, daß man die für wasserlösliche Farbstoffe üblichen Vorprodukte, von denen mindestens eines eine Gruppe der allgemeninen Formel (3) enthält, miteinander in üblicher Verfahrensweise zum entsprechenden Farbstoff umsetzt,

oder indem man Cyanurchlorid in beliebiger Folge mit einer Aminoverbindung der allgemeinen Formel (17)

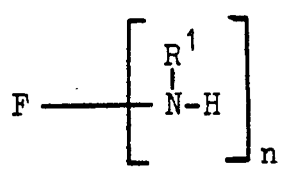 (17)

in welcher F, $R^1$ und n die in Anspruch 1 genannten Bedeutung haben, und einer Aminoverbindung der allgemeinen Formel (18)

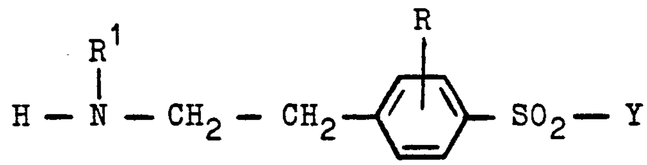

(18)

in welcher $R^1$, R und Y die in Anspruch 1 genannten Bedeutungen haben, analog bekannten Verfahrensweisen solcher Kondensationsreaktionen von Cyanurchlorid mit Aminoverbindungen umsetzt.

20. Verwendung der in Anspruch 1 genannten und definierten Verbindungen der allgemeinen Formel (1) zum Färben und Bedrucken von hydroxy- und/oder carbonamidgruppenhaltigem Material, insbesondere Fasermaterial.

21. Verfahren zum Kolorieren (Färben, einschließlich Bedrucken) von hydroxy- und/oder carbonamidgruppenhaltigem Material, vorzugsweise Fasermaterial, bei welchem man einen Farbstoff auf das Material aufbringt oder in das Material einbringt und den Farbstoff auf oder in dem Material mittels Wärme oder mit Hilfe eines alkalisch wirkenden Mittels oder mittels Wärme und mit Hilfe eines alkalischen Mittels fixiert, dadurch gekennzeichnet, daß man als Farbstoff eine Verbindung der in Anspruch 1 genannten und definierten allgemeinen Formel (1) einsetzt.

## Claims

1. A compound which corresponds the formula (1)

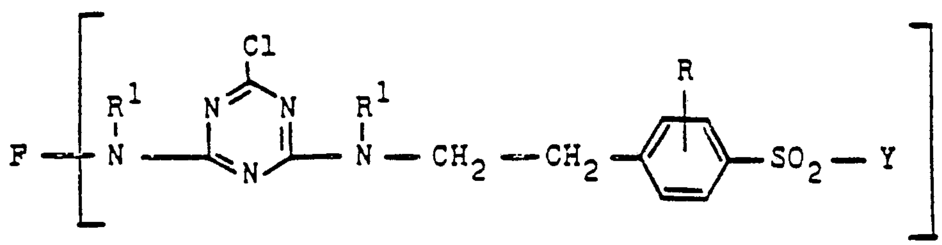

(1)

in which the symbols have the following meanings:

F is a radical of a dyestuff, preferably a water-soluble dyestuff containing sulfo groups and preferably belonging to the azo series;

n is the number 1 or 2;

$R^1$ is a hydrogen atom or an alkyl group having 1 to 4 carbon atoms;

R is a hydrogen atom or a sulfo group;

Y is the vinyl group or a group of the formula (2)

$-CH_2-CH_2-X$ (2)

in which X represents a substituent which can be eliminated in the form of an anion, in particular by means or an alkali,

with the exception, however, of oompounds corresponding to the formula (A)

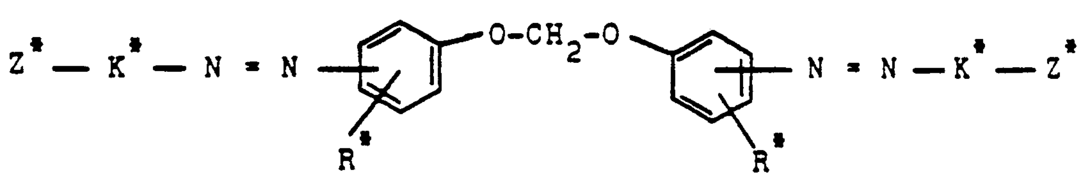

in which $R^*$ is a hydrogen atom or a nitro group, $K^*$ is the radical of a coupling component and $Z^*$ is a radical of the formula (B)

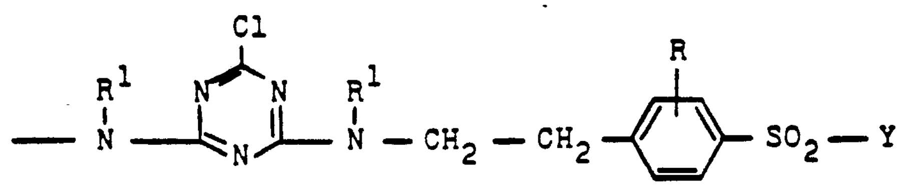

where $R^1$, R and Y have the abovementioned meaning.

2. A compound as claimed in claim 1, wherein F is the radical of a monoazo or disazo dyestuff containing sulfo groups, with the exception of a disazo dyestuff of formula (A).

3. A compound as claimed in claim 1 or 2, wherein each $R^1$ represents hydrogen and Y represents β-sulfatoethyl or β-phosphatoethyl.

4. A compound as claimed in claim 1, corresponding to the formula (4)

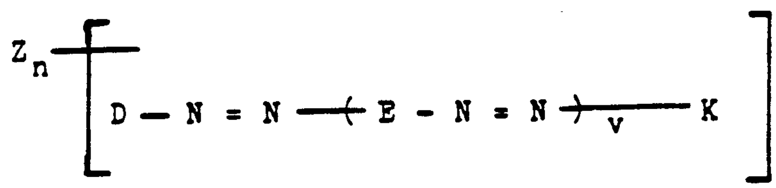 (4)

in which
D represents the radical of a diazo component,
E represents the divalent radical of a compound which can be coupled and diazotized,
K represents the radical of a coupling component and
v represents the number 0 or 1,
n is the number 1 or 2 and
Z denotes a radical of the formula (3)

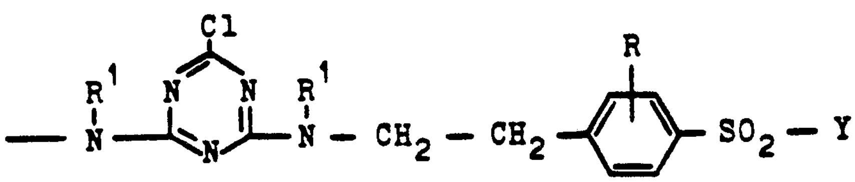 (3)

in which $R^1$, R and Y have the meanings mentioned in claim 1, the radical Z being attached to the radical D or the radical K or, in the event that n = 2, being attached to each of D and K.

5. A compound as claimed in claim 4, wherein n represents the number 1 and Z is attached to K and D denotes a radical of the formula

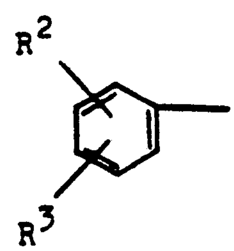

or

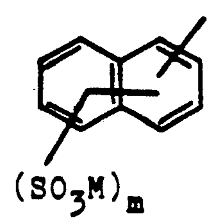

in which
$R^2$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl, fluorine, chlorine, bromine or trifluoromethyl,
$R^3$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl, fluorine, chlorine, nitro, sulfamoyl, N-($C_1$-$C_4$-alkyl)-sulfamoyl, alkylsulfonyl having 1 to 4 carbon atoms, phenylsulfonyl or phenoxy,
m denotes the number 0, 1, 2 or 3 and
M denotes a hydrogen atom or an alkali metal.

6. A compound as claimed in claim 4, wherein n represents the number 1 and Z is attached to D and D denotes a phenylene radical of the formula

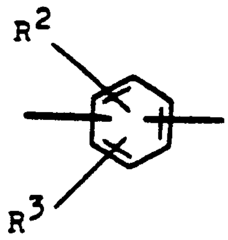

in which

$R^2$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl, fluorine, chlorine, bromine or trifluoromethyl,

$R^3$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl, fluorine, chlorine, nitro, sulfamoyl, N-($C_1$-$C_4$-alkyl)-sulfamoyl, alkylsulfonyl having 1 to 4 carbon atoms, phenylsulfonyl or phenoxy,

M is a hydrogen atom or an alkali metal.

7. A compound as claimed in claim 4, wherein n represents the number 1, Z is attached to D and K denotes a radical of the formula

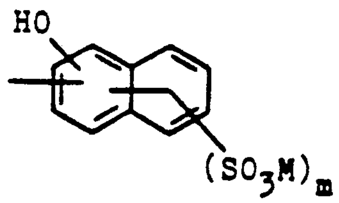

or

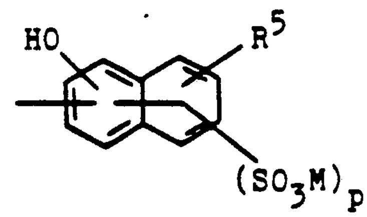

or

or

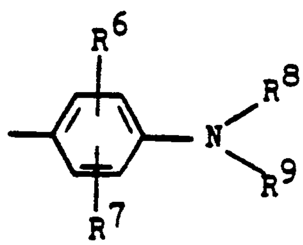

in which

$R^5$ denotes alkylureido containing alkyl groups having 1 to 6 carbon atoms, phenylureido, phenylureido which is substituted in the phenyl radical by chlorine, methyl, methoxy, nitro, sulfo and/or carboxyl, alkanoylamino having 2 to 7 carbon atoms, cyclohexanoylamino, benzoylamino or benzoylamino which is substituted in the benzene radical by chlorine, methyl, methoxy, nitro, sulfo and/or carboxyl,

$R^6$ is hydrogen, alkyl having 1 to 4 carbon atoms, alkoxy having 1 to 4 carbon atoms, bromine, chlorine or alkanoylamino having 2 to 7 carbon atoms,

$R^7$ is hydrogen, alkyl having 1 to 4 carbon atoms, alkoxy having 1 to 4 carbon atoms, chlorine or alkanoylamino having 2 to 7 carbon atoms or a ureido or phenylureido group,

$R^8$ is hydrogen or alkyl which has 1 to 4 carbon atoms and which can be substituted by hydroxyl, cyano, carboxyl, sulfo, sulfato, methoxycarbonyl, ethoxycarbonyl or acetoxy,

$R^9$ represents alkyl which has 1 to 4 carbon atoms and which can be substituted by hydroxyl, cyano, carboxyl, sulfo, sulfato, methoxycarbonyl, ethoxycarbonyl or acetoxy, or is benzyl or phenyl or phenyl which is substituted by alkyl having 1 to 4 carbon atoms, alkoxy having 1 to 4 carbon atoms, chlorine and/or sulfo,

m represents the number 0, 1, 2 or 3,

p denotes the number 0, 1 or 2 and

M is a hydrogen atom or an alkali metal.

8. A compound as claimed in claim 4, wherein n represents the number 1, the radical Z is attached to K and the group -K-Z denotes a radical of the formula

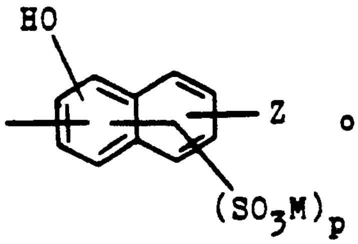

or

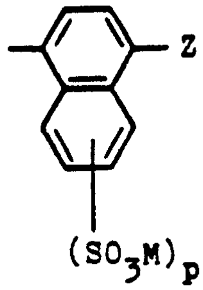

or

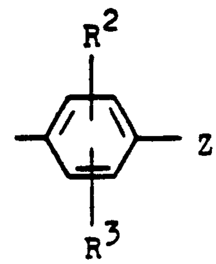

in which

$R^2$ is hydrogen, methyl, methoxy, chlorine, carboxyl or sulfo,

$R^3$ is hydrogen, methyl, methoxy, chlorine, carboxyl, sulfo or acetylamino,

p is the number 0, 1 or 2 and

M is hydrogen or an alkali metal and

Z has the meaning mentioned in claim 4.

9. A compound as claimed in claim 4, wherein v represents the number 1 and E denotes a radical of the formula

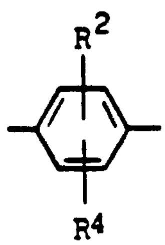

or

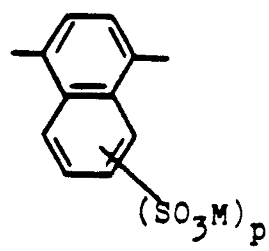

in which

$R^2$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N($C_1$-$C_4$-alkyl)-carbamoyl, fluorine, chlorine, bromine or trifluoromethyl,

$R^4$ is hydrogen, alkyl having 1 to 4 carbon atoms, alkoxy having 1 to 4 carbon atoms, chlorine, alkanoylamino having 2 to 5 carbon atoms, benzoylamino, ureido, phenylureido, alkylureido having 1 to 4 carbon atoms in the alkyl radical, phenylsulfonyl or alkylsulfonyl having 1 to 4 carbon carbon atoms,

p represents the number 0, 1 or 2 and

M denotes a hydrogen atom or an alkali metal.

10. A compound as claimed in claim 1, corresponding to the formula (15)

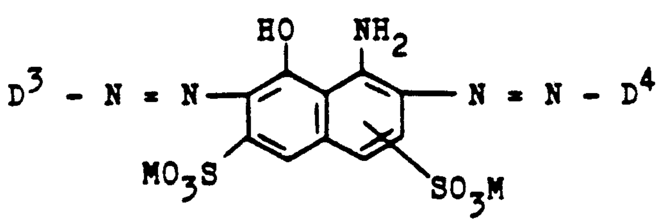

(15)

in which

$D^3$ and $D^4$ have meanings identical with one another or different from one another and each is the radical of a diazo component and at least one of these contains attached to it a fiber-reactive group of the formula (3) in which both of the $R^1$s represent a hydrogen atom and R is a hydrogen atom or a sulfo group and in which

M denotes a hydrogen atom or an alkali metal.

11. A compound as clalmed in claim 1, corresponding to the formula

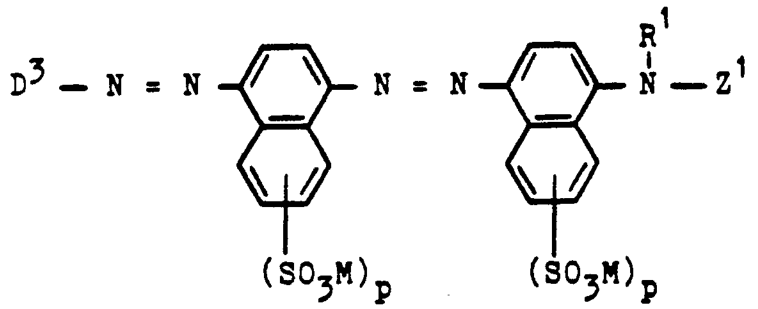
(16a)

in which

D³ is a radical or the formula (10a) or (10b)

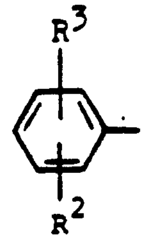
(10a)

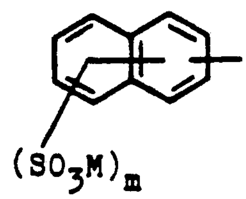
(10b)

in which

$R^2$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl, fluorine, chlorine, bromine or trifluoromethyl,

$R^3$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl, fluorine, chlorine, nitro, sulfamoyl, N-($C_1$-$C_4$-alkyl)-sulfamoyl, alkylsulfonyl having 1 to 4 carbon atoms, phenylsulfonyl or phenoxy,

m denotes the number 0, 1, 2 or 3 and

M is a hydrogen atom or an alkali metal,

$R^1$ has the meaning mentioned in claim 1,

p represents the number 0, 1 or 2 and

$Z^1$ represents a radical of the formula (3a)

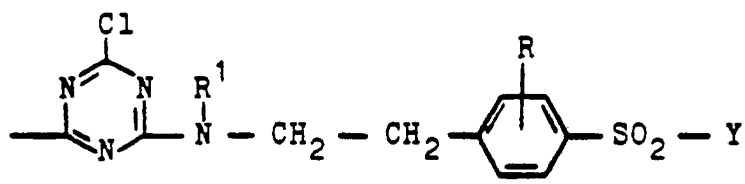
(3a)

in which

$R^1$, R and Y have the meaning indicated in claim 1.

12. A compound as claimed in claim 1, corresponding to the formula (16b)

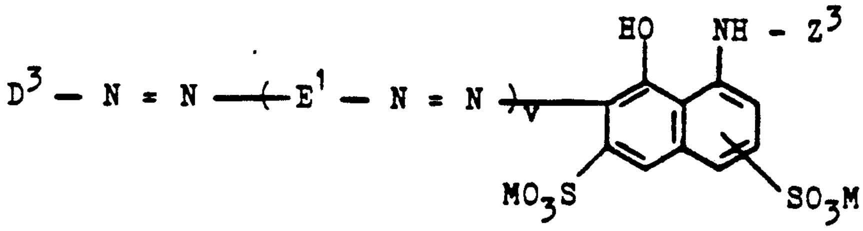
(16b)

in which

$D^3$ is a radical of the formula (10a) or (10b)

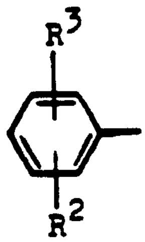 (10a) 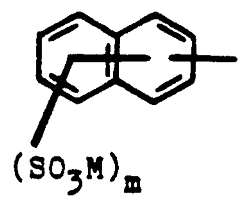 (10b)

in which

R2 is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl, fluorine, chlorine, bromine or trifluoromethyl,

R3 is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl, fluorine, chlorine, nitro, sulfamoyl, N-($C_1$-$C_4$-alkyl)-sulfamoyl, alkylsulfonyl having 1 to 4 carbon atoms, phenylsulfonyl or phenoxy,

m denotes the number 0, 1, 2 or 3 and

M is a hydrogen atom or an alkali metal,

v represents the number 0 or 1,

E1 is a radical of the formula (7A)

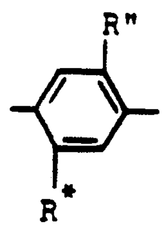 (7A)

in which R" and R*, identical with one another or different from one another, each denote a hydrogen atom or the methyl, methoxy or ethoxy group, and

Z3 represents a radical of the formula (3c)

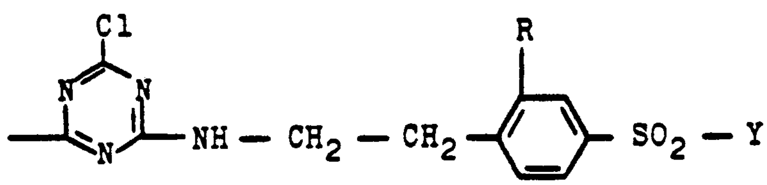 (3c)

in which Y has the meaning mentioned in claim 1 and R is sulfo or, preferably, represents hydrogen.

13. A compound as claimed in claim 1, corresponding to the formula (16c)

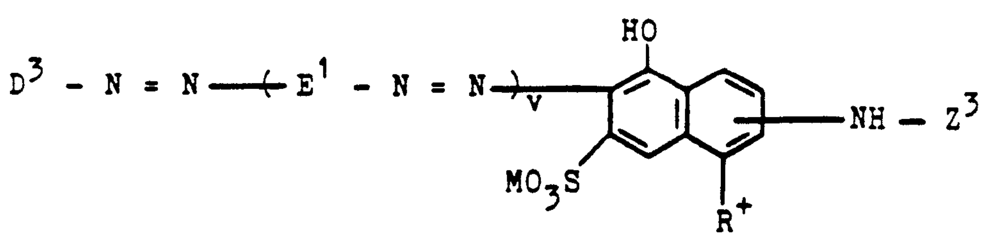 (16c)

in which

D3 is a radical of the formula (10a) or (10b)

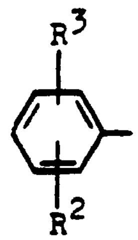 (10a)

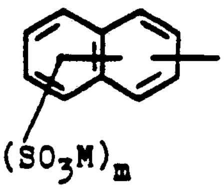 (10b)

in which

$R^2$ is hydrogen, methyl, elhyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl, fluorine, chlorine, bromine or trifluoromethyl,

$R^3$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl, fluorine, chlorine, nitro, sulfamoyl, N-($C_1$-$C_4$-alkyl)-sulfamoyl, alkylsulfonyl having 1 to 4 carbon atoms, phenylsulfonyl or phenoxy

m denotes the number 0, 1, 2 or 3 and

M is a hydrogen atom or an alkali metal,

v represents the number 0 or 1,

$E^1$ is a radical of the formula (7A)

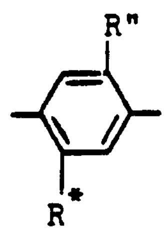 (7A)

in which R″ and R*, identical with one another or different from one another, each denote a hydrogen atom or the methyl, methoxy or ethoxy group,

$Z^3$ is a radical of the formula (3c)

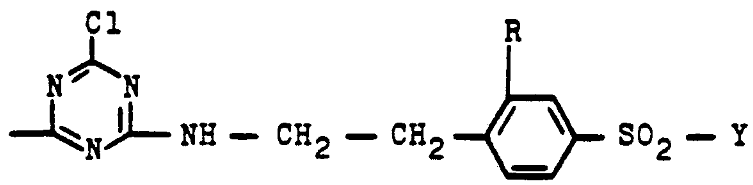 (3c)

in which Y has the meaning mentioned in claim 1 and R is sulfo or, preferably, represents hydrogen, and

R+ is a hydrogen atom or a sulfo group.

14. A compound as claimed in claim 1, corresponding to the formula (16d)

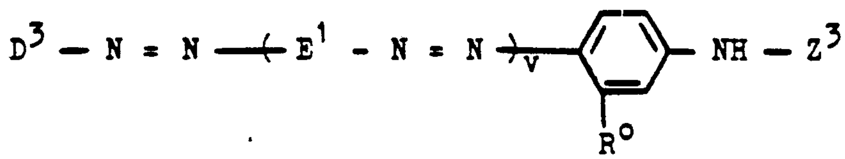 (16d)

in which

$D^3$ is a radical of the formula (10a) or (10b)

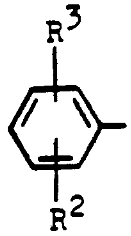 (10a)

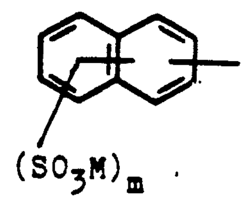 (10b)

in which

$R^2$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl, fluorine, chlorine, bromine or trifluoromethyl,

$R^3$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl, fluorine, chlorine, nitro, sulfamoyl, N-($C_1$-$C_4$-alkyl)-sulfamoyl, alkylsulfonyl having 1 to 4 carbon atoms, phenylsulfonyl or phenoxy,

m denotes the number 0, 1, 2 or 3 and

M is a hydrogen atom or an alkali metal,

v represents the number 0 or 1,

$E^1$ is a radical of the formula (7A)

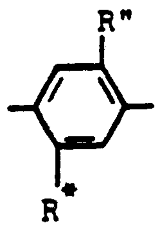 (7A)

in which R″ and R*, identical with one another or different from one another, each denote a hydrogen atom or the methyl, methoxy or ethoxy group,

$Z^3$ is a radical of the formula (3c)

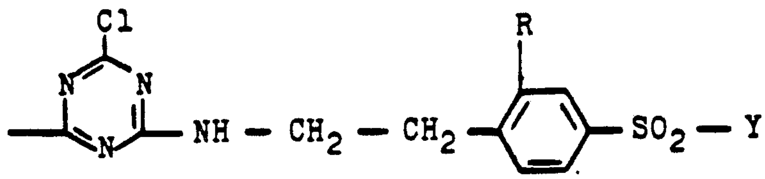 (3c)

in which Y has the meaning mentioned in claim 1 and R is sulfo or, preferably, represents hydrogen, and

$R^o$ is the acetylamino or ureido group.

15. A compound as claimed in claim 1, corresponding to the formula (16e)

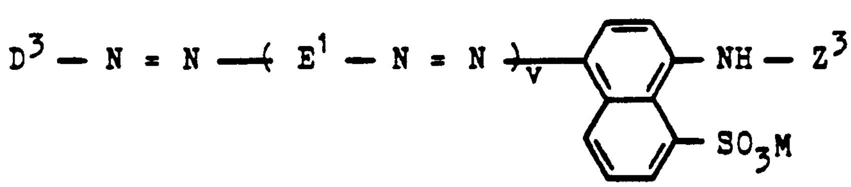 (16e)

in which

$D^3$ is a radical of the formula (10a) or (10b)

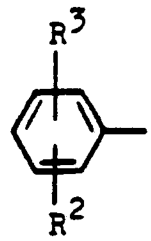 (10a) 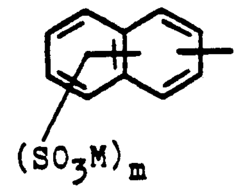 (10b)

in which

$R^2$ is hydrogen, methyl, ethyl, methoxy, ethoxy, alkanoyl having 2 to 5 carbon atoms, cyano, carboxyl, sulfo, alkoxycarbonyl having 2 to 5 carbon atoms, carbamoyl, N-($C_1$-$C_4$-alkyl)-carbamoyl, fluorine, chlorine, bromine or trifluoromethyl,

$R^3$ is hydrogen, methyl, ethyl, methoxy, ethoxy, cyano, carboxyl, sulfo, alkanoylamino having 2 to 5 carbon atoms, alkoxycarbonyl having 2 to 5 carbon atoms, carbamoyl, N-($C_1$-$C_4$-alkyl)-carbamoyl, fluorine chlorine, nitro, sulfamoyl, N-($C_1$-$C_4$-alkyl)-sulfamoyl, alkylsulfonyl having 1 to 4 carbon atoms, phenylsulfonyl or phenoxy,

m denotes the number 0, 1, 2 or 3 and

M is a hydrogen atom or an alkali metal,

v represents the number 0 or 1,

$E^1$ is a radical of the formula (7A)

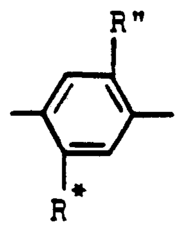 (7A)

in which R'' and R*, identical with one another or different from one another, each denote a hydrogen atom or the methyl, methoxy or ethoxy group and

$Z^3$ is a radical of the formula (3c)

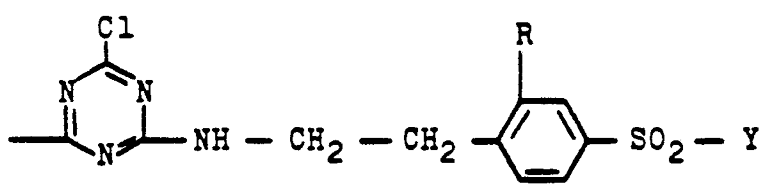 (3c)

in which Y has the meaning mentioned in claim 1 and R is sulfo or, preferably, represents hydrogen.

16. A compound as claimed in any of claims 1 to 15, wherein Y represents the β-sulfatoethyl group.

17. A compound as claimed in any of claims 1 to 9 or 11, wherein each $R^1$ represents a hydrogen atom.

18. A compound as claimed in any of claims 1 to 17, wherein R represents a hydrogen atom.

19. A process for the preparation of the compounds of the formula (1) which are mentioned and defined in claim 1, which comprises reacting the precursors customary for water-soluble dyestuffs, at least one of which contains a group of the formula (3), with one another in a customary procedure to give the corresponding dyestuff, or reacting cyanuric chloride in any desired sequence with an amino compound of the formula (17)

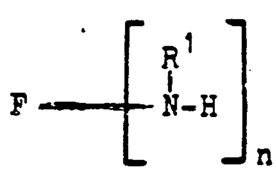 (17)

in which F, $R^1$ and n have the meanings mentioned in claim 1, and with an amino compound of the formula (18)

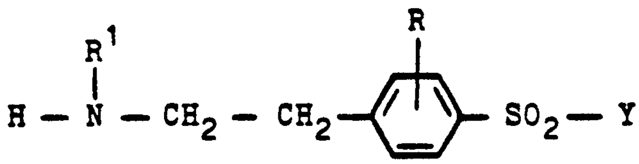 (18)

in which $R^1$, R and Y have the meanings mentioned in claim 1, analogously to known procedures for this type of condensation reactions of cyanuric chloride with amino compounds.

20. The use of the compounds of the formula (1), mentioned and defined in claim 1, for dyeing and printing material containing hydroxyl and/or carboxamide groups, in particular fiber material.

21. A process for coloring (dyeing, including printing) material containing hydroxyl and/or carboxamide groups, preferably fiber material, in which a dyestuff is applied to the material or is introduced into the material, and the dyestuff is fixed on or in the material by means of heat or with the aid of an agent having an alkaline reaction or by means of heat and with the aid of an alkaline agent, which comprises employing a compound of the formula (1) mentioned and defined in claim 1 as the dyestuff.

**Revendications**

1. Composé répondant à la formule générale (1)

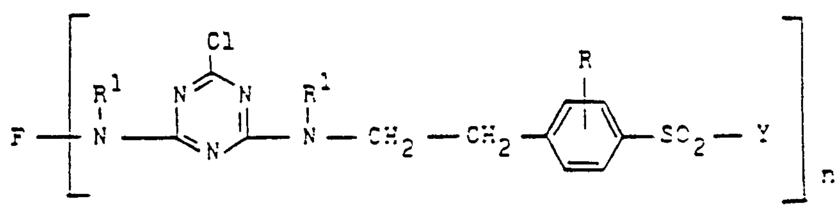 (1)

dans laquelle

F représente un reste d'un colorant, de préférence d'un colorant hydrosoluble contenant un ou des groupes sulfo et de préférence d'un colorant de la série azoïque,

n représente le nombre 1 ou 2;

$R^1$ représente un atome d'hydrogène ou un groupe alkyle ayant 1 à 4 atomes de carbone;

R représente un atome d'hydrogène ou un groupe sulfo;

Y représente le groupe vinyle ou un groupe de formule générale (2)

$$-CH_2-CH_2-X \qquad (2)$$

dans laquelle X représente un substituant qui est éliminable sous forme d un anion, en particulier à l'aide d'une substance alcaline,

mais à l'exclusion des composés répondant à une formule générale (A)

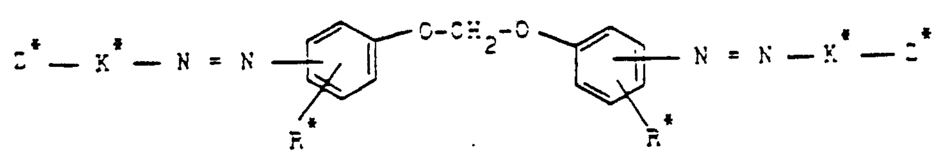 (A)

dans laquelle R* représente un atome d'hydrogène ou un groupe nitro, K* représente le reste d'un copulant et Z* un reste de formule générale (B)

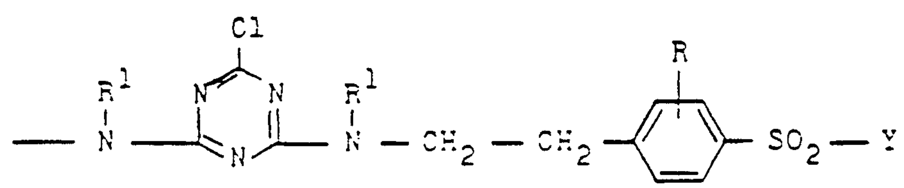 (B)

dans laquelle $R^1$, R et Y ont le sens précité.

2. Composé selon la revendication 1, caractérisé en ce que F représente le reste d'un colorant monoazoïque ou disazoïque contenant 1 ou des groupes sulfo, à l'exclusion d'un colorant disazoïque répondant à la formule

(A).

3. Composé selon la revendication 1 ou 2, caractérisé en ce que chaque symbole $R^1$ représente un atome d'hydrogène et Y représente un groupe sulfato-2 éthyle ou phosphato-2 éthyle.

4. Composé selon la revendication 1, répondant à la formule générale (4)

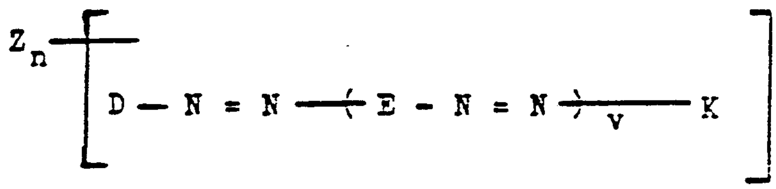

(4)

dans laquelle

D représente le reste d'un composant diazotable,
E représente le reste divalent d'un composé copulable et diazotable,
K représente le reste d'un copulant, et
v est nul ou représente le nombre 1,
n représente le nombre 1 ou 2, et
Z représente un reste de formule générale (3)

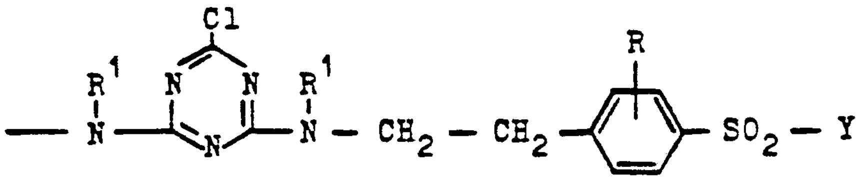

(3)

dans laquelle $R^1$, R et Y ont les sens indiqués à la revendication 1, le reste Z étant fixé au reste D ou au reste K ou bien, si n vaut 2, étant fixé à D et à K.

5. Composé selon la revendication 1, caractérisé en ce que n représente le nombre 1 et Z est fixé sur K, et en ce que D représente un reste de formule générale

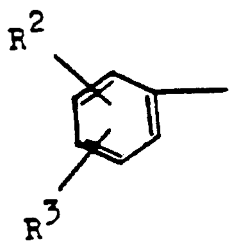

ou

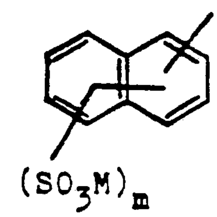

dans lesquelles

$R^2$ représente un atome d'hydrogène, un groupe méthyle, éthyle, méthoxy, éthoxy, alcanoyle ayant 2 à 5 atomes de carbone, cyano, carboxy, sulfo, alcoxycarbonyle ayant 2 à 5 atomes de carbone, carbamoyle, N-alkyl-carbamoyle (dont le groupe alkyle comporte 1 à 4 atomes de carbone), un atome de fluor, de chlore ou de brome ou un groupe trifluorométhyle,

$R^3$ représente un atome d'hydrogène, un groupe méthyle, éthyle, méthoxy, éthoxy, cyano, carboxy, sulfo, alcanoylamino ayant 2 à 5 atomes de carbone, alcoxy carbonyle ayant 2 à 5 atomes de carbone, carbamoyle, N-alkyl-carbamoyle dont le groupe alkyle comporte de 1 à 4 atomes de carbone, un atome de fluor, ou de chlore, un groupe nitro, sulfamoyle, N-alkyl-sulfamoyle dont le groupe alkyle comporte 1 à 4 atomes de carbone, alkylsulfonyle ayant 1 à 4 atomes de carbone, phénylsulfonyle ou phénoxy,

m est nul ou représente le nombre 1, 2 ou 3, et

M représente un atome d'hydrogène ou un métal alcalin.

6. Composé selon la revendication 4, caractérisé en ce que n représente le nombre 1, Z est fixé à D, et D représente un reste phényle de formule générale

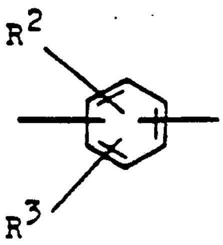

dans laquelle

$R^2$ représente un atome d'hydrogène, un groupe méthyle, éthyle, méthoxy, éthoxy, alcanoyle ayant 2 à 5 atomes de carbone, cyano, carboxy, sulfo, alcoxycarbonyle ayant 2 à 5 atomes de carbone, carbamoyle, N-alkyl-carbamoyle dont le groupe carbamoyle comporte 1 à 4 atomes de carbone, un atome de fluor, de chlore ou de brome ou un groupe trifluorométhyle,

$R^3$ représente un atome d'hydrogène, un groupe méthyle, éthyle, méthoxy, éthoxy, cyano, carboxy, sulfo, alcanoylamino ayant 2 à 5 atomes de carbone, alcoxycarbonyle ayant 2 à 5 atomes de carbone, carbamoyle, N-alkyl-carbamoyle dont le groupe carbamoyle comporte 1 à 4 atomes de carbone, un atome de fluor ou de chlore, un groupe nitro, sulfamoyle, N-alkyl-sulfamoyle dont le groupe alkyle comporte 1 à 4 atomes de carbone, alkylsulfonyle ayant 1 à 4 atomes de carbone, phénylsulfonyle ou phénoxy, et

M représente un atome d'hydrogène ou un métal alcalin.

7. Composé selon la revendication 4, caractérisé en ce que n représente le nombre 1, Z est fixé sur D, et K représente un reste de formule générale:

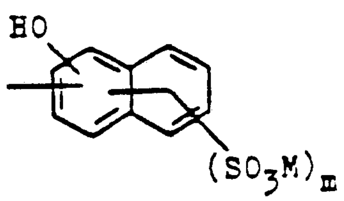

ou

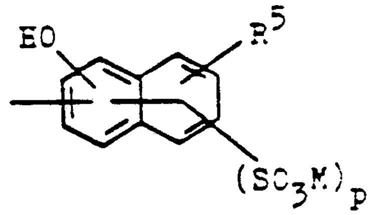

ou

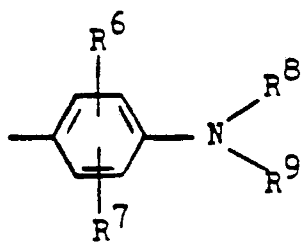

dans lesquelles

$R^5$ représente un groupe alkyluréido comportant des groupes alkyles ayant 1 à 6 atomes de carbone, un groupe phényluréido, un groupe phényluréido (substitué sur le reste phényle par du chlore, par un groupe méthyle, méthoxy, nitro, sulfo et/ou carboxy), un groupe alcanoylamino ayant 2 à 7 atomes de carbone, cyclohexanoylamino, benzoylamino ou benzoylamino (substitué dans le reste benzoyle par du chlore et/ou par un groupe méthyle, méthoxy, nitro, sulfo et/ou carboxy),

$R^6$ représente un atome d'hydrogène, un groupe alkyle ayant 1 à 4 atomes de carbone, alcoxy ayant 1 à 4 atomes de carbone, un atome de brome ou de chlore ou un groupe alcanoylamino ayant 2 à 7 atomes de carbone,

$R^7$ représente un atome d'hydrogène, un groupe alkyle ayant 1 à 4 atomes de carbone, alcoxy ayant 1 à 4 atomes de carbone, un atome de chlore ou un groupe alcanoylamino ayant 2 à 7 atomes de carbone, ou un groupe uréido ou phényluréido,

$R^8$ représente un atome d'hydrogène ou un groupe alkyle ayant 1 à 4 atomes de carbone, qui peut être substitué par un groupe hydroxyle, cyano, carboxy, sulfo, sulfato, méthoxycarbonyle, éthoxy carbonyle ou acétoxy,

$R^9$ représente un groupe alkyle ayant 1 à 4 atomes de carbone (pouvant être substitué par un groupe hydroxyle, cyano, carboxy, sulfo, sulfato, méthoxycarbonyle, éthoxycarbonyle ou acétoxy), ou bien $R^9$ représente un groupe benzyle ou phényle ou un groupe phényle substitué par un groupe alkyle ayant 1 à 4 atomes de carbone, alcoxy ayant 1 à 4 atomes de carbone, par du chlore et/ou par un groupe sulfo,

m est nul ou représente le nombre 1, 2 ou 3,

p est nul ou représente le nombre 1 ou 2, et

M est un atome d'hydrogène ou un métal alcalin.

8. Composé selon la revendication 4, caractérisé en ce que n représente le nombre 1, le reste Z est fixé sur K et le groupe -KZ représente un reste de formule

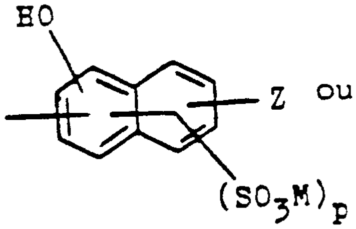 ou 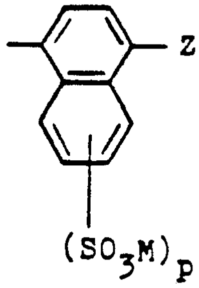 ou 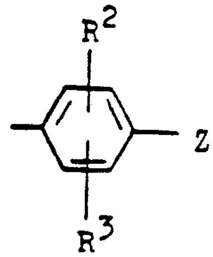

formules dans lesquelles

$R^2$ représente un atome d'hydrogène, un groupe méthyle, méthoxy, un atome de chlore, un groupe carboxy ou sulfo;

$R^3$ représente un atome d'hydrogène ou un groupe méthyle, méthoxy, un atome de chlore, un groupe carboxy, sulfo ou acétylamino;

p est nul ou représente le nombre 1 ou 2 ; et

M représente un atome d'hydrogène ou un métal alcalin; et

Z a le sens indiqué à la revendication 4.

9. Composé selon la revendication 4, caractérisé en ce que v représente le nombre 1 et E représente un reste de formule

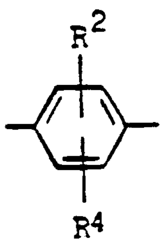 ou 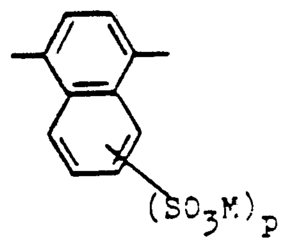

dans laquelle

$R^2$ représente un atome d'hydrogène, un groupe méthyle, éthyle, méthoxy, éthoxy, alcanoyle ayant 2 à 5 atomes de carbone, cyano, carboxy, sulfo, alcoxycarbonyle ayant 2 à 5 atomes de carbone, carbamoyle, N-alkyl-carbamoyle dont le groupe alkyle comporte 1 à 4 atomes de carbone, un atome de fluor, de chlore ou de brome ou un groupe trifluorométhyle,

$R^4$ représente un atome d'hydrogène, un groupe alkyle ayant 1 à 4 atomes de carbone, alcoxy ayant 1 à 4 atomes de carbone, un atome de chlore, un groupe alcanoylamino ayant 2 à 5 atomes de carbone, un groupe benzoylamino, uréido, phényluréido, alkyluréido ayant 1 à 4 atomes de carbone dans le reste alkyle, un groupe phénylsulfonyle ou alkylsulfonyle ayant 1 à 4 atomes de carbone,

p est nul ou représente le nombre 1 ou 2, et

M est un atome d'hydrogène ou un métal alcalin.

10. Composé selon la revendication 1, répondant à la formule générale (15)

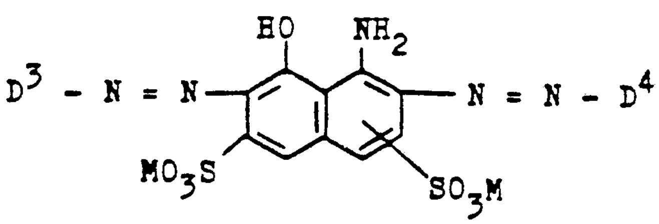 (15)

dans laquelle

$D^3$ et $D^4$ sont identiques ou différents et représentent chacun le reste d'un composant diazotable dont l'un au moins contient, fixé, un groupe, capable de réagir avec les fibres et répondant à la formule générale (3), dans lequelle les deux symboles $R^1$ représentent chacun un atome d'hydrogène et R représente un atome d'hydrogène ou un groupe sulfo,

et

M représente un atome d'hydrogène ou un métal alcalin.

11. Composé selon la revendication 1, de formule générale (16a)

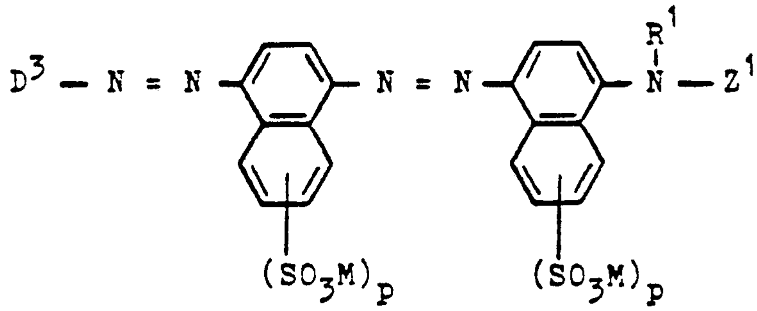

(16a)

dans laquelle

$D^3$ représente un reste de formule générale (10a) ou (10b)

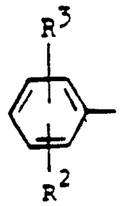

(10a)

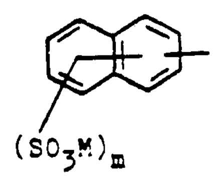

(10b)

dans lesquelles

$R^2$ représente un atome d'hydrogène, un groupe méthyle, éthyle, méthoxy, éthoxy, alcanoyle ayant 2 à 5 atomes de carbone, cyano, carboxy, sulfo, alcoxycarbonyle ayant 2 à 5 atomes de carbone, carbamoyle, N-alkyl-carbamoyle dont le groupe alkyle comporte 1 à 4 atomes de carbone, un atome de fluor, de chlore, ou de brome ou un groupe trifluorométhyle,

$R^3$ représente un atome d'hydrogène, un groupe méthyle, éthyle, méthoxy, éthoxy, cyano, carboxy, sulfo, alcanoylamino ayant 2 à 5 atomes de carbone, alcoxycarbonyle ayant 2 à 5 atomes de carbone, carbamoyle, N-alkyl-carbamoyle dont le groupe alkyle comporte 1 à 4 atomes de carbone, un atome de fluor ou de chlore, un groupe nitro, sulfamoyle, N-alkyl-sulfamoyle dont le groupe alkyle comporte 1 à 4 atomes de carbone, alkylsulfonyle ayant 1 à 4 atomes de carbone, phénylsulfonyle ou phénoxy,

m est nul ou représente le nombre 1, 2 ou 3, et

M représente un atome d'hydrogène ou un metal alcalin,

$R^1$ a le sens indiqué à la revendication 1,

p est nul ou représente le nombre 1 ou 2, et

$Z^1$ représente un reste de formule générale (3a)

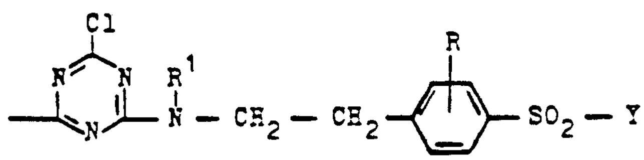

(3a)

dans laquelle $R^1$, R et Y ont le sens indiqué à la revendication 1.

12. Composé selon la revendication 1, répondant à la formule générale (16b)

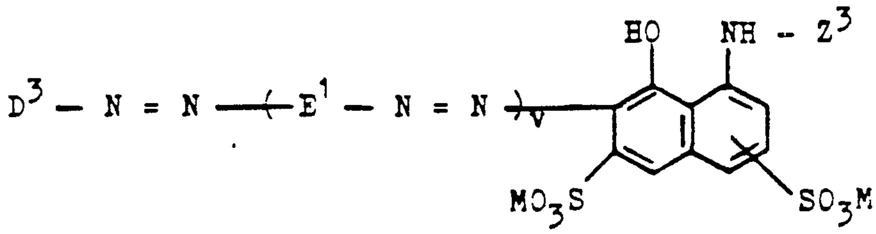

(16b)

dans laquelle

$D^3$ représente un reste de formule générale (10a) ou (10b)

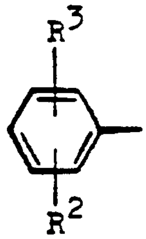

(10a)

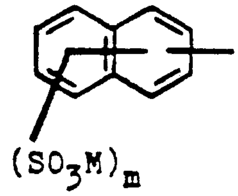

(10b)

dans lesquelles

$R^2$ représente un atome d'hydrogène, un groupe méthyle, éthyle, méthoxy, éthoxy, alcanoyle ayant 2 à 5 atomes de carbone, cyano, carboxy, sulfo, alcoxycarbonyle ayant 2 à 5 atomes de carbone, carbamaoyle, N-alkyl-carbamaoyle ayant 1 à 4 atomes de carbone, un atome de fluor, de chlore ou de brome ou un groupe trifluorométhyle,

$R^3$ représente un atome d'hydrogène, un groupe méthyle, éthyle, méthoxy, éthoxy, cyano, carboxy, sulfo, alcanoylamino ayant 2 à 5 atomes de carbone, alcoxycarbonyle ayant 2 à 5 atomes de carbone, carbamoyle, N-alkyl-carbamoyle ayant 1 à 4 atomes de carbone dans le groupe alkyle, un atome de fluor ou de chlore, un groupe nitro, sulfamoyle, N-alkyl-sulfamoyle ayant 1 à 4 atomes de carbone dans le groupe alkyle, un groupe alkylsulfonyle ayant 1 à 4 atomes de carbone, phénylsulfonyle ou phénoxy,

m est nul ou représente le nombre 1, 2 ou 3, et

M représente un atome d'hydrogène ou un métal alcalin,

v est nul ou représente le nombre 1,

$E^1$ représente un reste de formule générale (7A)

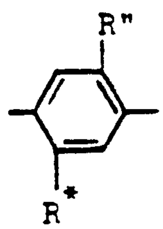

(7A)

dans laquelle R'' et R*, identiques ou différents, représentent chacun un atome d'hydrogène ou le groupe méthyle, méthoxy ou éthoxy, et

$Z^3$ représente un reste de formule générale (3c)

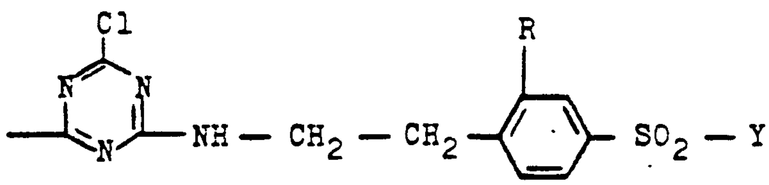

(3c)

dans laquelle Y a le sens indiqué à la revendication 1, et R représente un groupe sulfo ou de préférence un atome d'hydrogène.

13. Composé selon la revendication 1, répondant à la formule générale (16c),

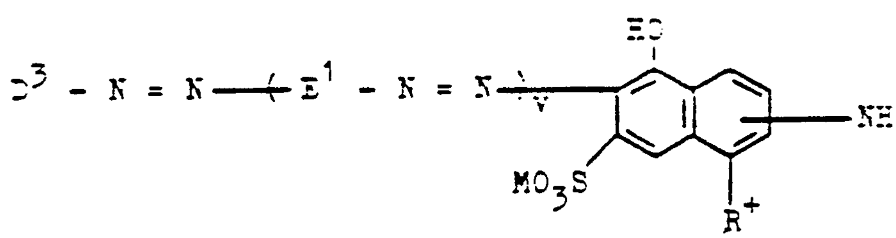

(16c)

dans laquelle

$D^3$ représente un reste de formule générale (10a) ou (10b)

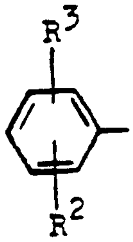 (10a)

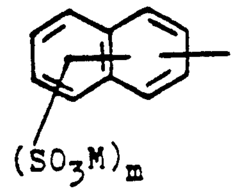 (10b)

dans lesquelles

$R^2$ représente un atome d'hydrogène, un groupe méthyle, éthyle, méthoxy, éthoxy, alcanoyle ayant 2 à 5 atomes de carbone, cyano, carboxy, sulfo, alcoxycarbonyle ayant 2 à 5 atomes de carbone, carbamoyle, N-alkyl-carbamoyle ayant 1 à 4 atomes de carbone dans le groupe alkyle, un atome de fluor, de chlore ou de brome ou un groupe trifluorométhyle,

$R^3$ représente un atome d'hydrogène, un groupe méthyle, éthyle, méthoxy, éthoxy, cyano, carboxy, sulfo, alcanoylamino ayant 2 à 5 atomes de carbone, alcoxycarbonyle ayant 2 à 5 atomes de carbone, carbamoyle, N-alkyl-carbamoyle ayant 1 à 4 atomes de carbone, un atome de fluor ou de chlore, un groupe nitro, sulfamoyle, N-alkyl-sulfamoyle ayant 1 à 4 atomes de carbone dans le groupe alkyle, un groupe alkylsulfonyle ayant 1 à 4 atomes de carbone, phénylsulfonyle ou phénoxy,

m est nul ou représente un nombre 1, 2 ou 3, et

M est un atome d'hydrogène ou un métal alcalin,

v est nul ou représente le nombre 1,

$E^1$ est un reste de formule générale (7A)

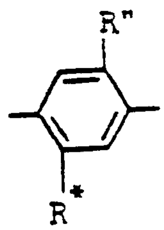 (7A)

dans laquelle R'' et R* sont identiques ou différents et représentent chacun un atome d'hydrogène, ou le groupe méthyle, méthoxy ou éthoxy,

$Z^3$ est un reste de formule générale (3c)

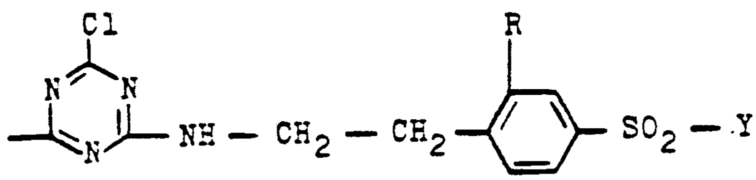 (3c)

dans laquelle Y a le sens indiqué à la revendication 1 et R représente un groupe sulfo ou de préférence un atome d'hydrogène, et

R+ est un atome d'hydrogène ou un groupe sulfo.

14. Composé selon la revendication 1, répondant à la formule générale (16d)

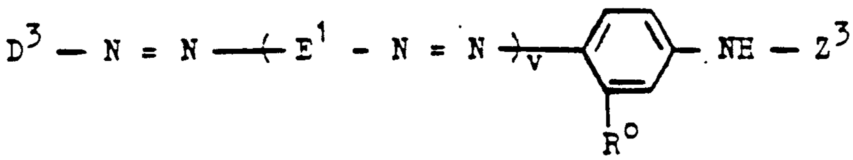 (16d)

dans laquelle

$D^3$ est un reste de formule générale (10a) ou (10b)

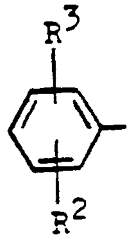 (10a) 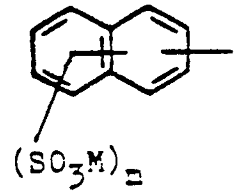 (10b)

dans lesquelles

$R^2$ représente un atome d'hydrogène, un groupe méthyle, éthyle, méthoxy, éthoxy, alcanoyle ayant 2 à 5 atomes de carbone, cyano, carboxy, sulfo, alcoxycarbonyle ayant 2 à 5 atomes de carbone, carbamoyle, N-alkyl-carbamoyle ayant 1 à 4 atomes de carbone dans le groupe alkyle, un atome de fluor, de chlore ou de brome ou un groupe trifluorométhyle,

$R^3$ représente un atome d'hydrogène, un groupe méthyle, éthyle, méthoxy, éthoxy, cyano, carboxy, sulfo, alcanoylamino ayant 2 à 5 atomes de carbone, alcoxycarbonyle ayant 2 à 5 atomes de carbone, carbamoyle, N-alkyl-carbamoyle ayant 1 à 4 atomes de carbone dans le reste alkyle, un atome de fluor ou de chlore ou un groupe nitro, sulfamoyle, N-alkyl-sulfamoyle ayant 1 à 4 atomes de carbone dans le reste alkyle, un groupe alkylsulfonyle ayant 1 à 4 atomes de carbone, phénylsulfonyle ou phénoxy,

m est nul ou représente le nombre 1, 2 ou 3, et

M est un atome d'hydrogène ou un métal alcalin,

v est nul ou représente le nombre 1,

$E^1$ représente un reste de formule générale (7A)

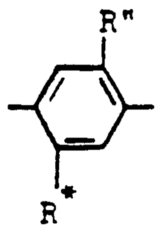 (7A)

dans laquelle R'' et R*, identiques ou différents, représentent chacun un atome d'hydrogène ou le groupe méthyle, méthoxy ou éthoxy,

$Z^3$ représente un reste de formule générale (3c)

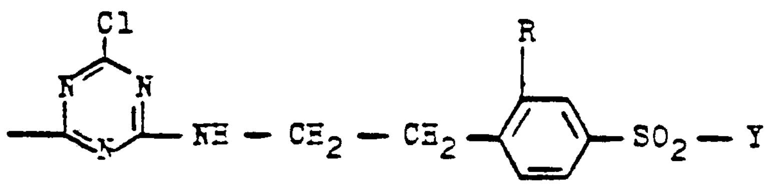 (3c)

dans laquelle Y a le sens indiqué à la revendication 1, et R représente un groupe sulfo ou, de préférence, un atome d'hydrogène, et

$R^o$ représente le groupe acétylamino ou uréido.

15. Composé selon la revendication 1, répondant à la formule générale (16e)

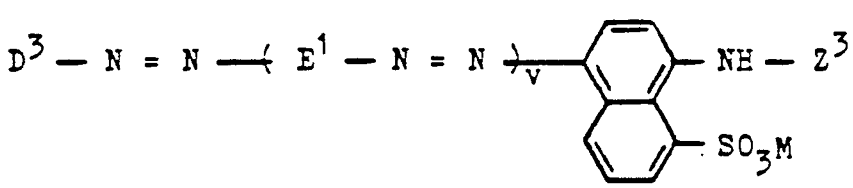 (16e)

dans laquelle

$D^3$ représente un reste de formule générale (10a) ou (10b)

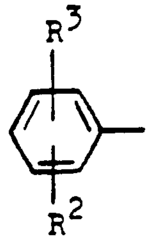

(10a)

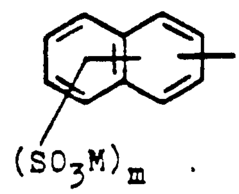

(10b)

dans lesquelles

$R^2$ représente un atome d'hydrogène, un groupe méthyle, éthyle, méthoxy, éthoxy, alcanoyle ayant 2 à 5 atomes de carbone, cyano, carboxy, sulfo, alcoxycarbonyle ayant 2 à 5 atomes de carbone, carbamoyle, N-alkyl-carbamoyle ayant 1 à 4 atomes de carbone dans le groupe alkyle, un atome de fluor, de chlore ou de brome ou un groupe trifluorométhyle, et

$R^3$ représente un atome d'hydrogène, un groupe méthyle, éthyle, méthoxy, éthoxy, cyano, carboxy, sulfo, alcanoylamino ayant 2 à 5 atomes de carbone, alcoxycarbonyle ayant 2 à 5 atomes de carbone, carbamoyle, N-alkyl-carbamoyle ayant 1 à 4 atomes de carbone dans le groupe alkyle, un atome de fluor ou de chlore, un gruope nitro, sulfamoyle, N-alkyl-sulfamoyle ayant 1 à 4 atomes de carbone dans le groupe alkyle, un groupe alkylsulfonyle ayant 1 à 4 atomes de carbone, phénylsulfonyle ou phénoxy,

m est nul ou représente le nombre 1, 2 ou 3, et

M représente un atome d'hydrogène ou un métal alcalin,

v est nul ou représente le nombre 1,

$E^1$ représente un reste de formule générale (7A)

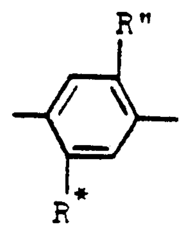

(7A)

dans laquelle R″ et R*, identiques ou différents, représentent chacun un atome d'hydrogène, ou le groupe méthyle, méthoxy ou éthoxy, et

$Z^3$ représente un reste de formule générale (3c)

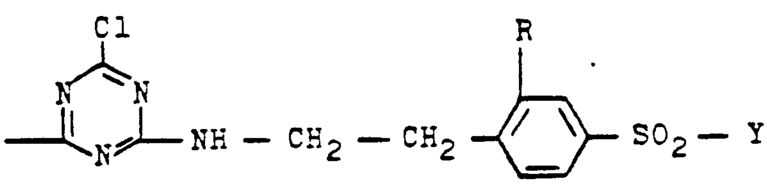

(3c)

dans laquelle Y a le sens indiqué à la revendication 1 et R représente un groupe sulfo ou de préférence un atome d'hydrogène.

16. Composé selon l'une des revendications 1 à 15, caractérisé en ce que Y représente le groupe sulfato-2 éthyle.

17. Composé selon l'une des revendications 1 à 9 ou 11, caractérisé en ce que chaque $R^1$ représente un atome d'hydrogène.

18. Composé selon l'une des revendications 1 à 17, caractérisé en ce que R représente un atome d'hydrogène.

19. Procédé pour préparer les composés de formule générale (1), cités et définis à la revendicaticn 1, ce procédé étant caractérisé en ce qu'on fait réagir les précurseurs usuels de colorants hydrosolubles, dont l'un au moins contient un groupe de formule générale (3), l'un avec l'autre selon une façon usuelle d'opérer, pour obtenir le colorant correspondant,

ou bien caractérisé en ce qu'on fait réagir le chlorure de cyanuryle, dans un ordre quelconque, avec une amine de formule générale (17)

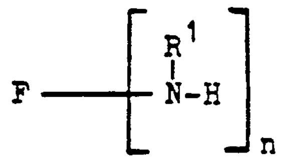

(17)

dans laquelle F, $R^1$ et n ont les sens indiqués dans la revendication 1 et une amine de formule générale (18)

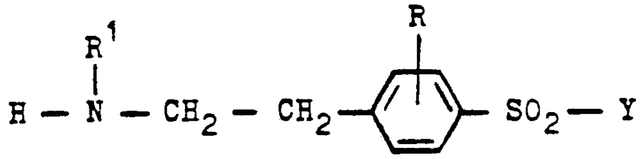

(18)

dans laquelle $R^1$, R et Y ont les sens indiqués dans la revendication 1, par des modes opératoires connus analogues pour de telles réactions de condensation du chlorure de cyanuryle avec des amines.

20. Utilisation des composés de formule générale (1), cités et définis à la revendication 1, pour teindre et imprimer de la matière contenant des groupes hydroxyles et/ou carboxamido, en particulier de la matière fibreuse.

21. Procédé pour colorer (teindre, ce qui comprend l'impression) une matière contenant des groupes hydroxyles et/ou carboxamido, de préférence une matière fibreuse, procédé dans lequel on applique un colorant sur la matière ou bien l'on introduit le colorant dans la matière et l'on fixe le colorant sur ou dans la matière, à l'aide de la chaleur ou à l'aide d'un produit à action alcaline ou à l'aide de la chaleur et à l'aide d'un produit alcalin, procédé caractérisé en ce qu'on utilise comme colorant un composé répondant à la formule générale (1), citée et définie à la revendication 1.